# EUROPEAN PATENT SPECIFICATION

(11) **EP 0 192 245 B1**
(45) Date of publication and mention of the grant of the patent: **07.12.1994**
(21) Application number: 86102109.5
(22) Date of filing: 19.02.1986
(51) Int. Cl.: G05B 11/42

(54) **Process controller having an adjustment system with two degrees of freedom**
Prozessregler mit einem System zur Einstellung mit zwei Freiheitsgraden
Appareil de commande de processus avec un système d'ajustement à deux degrés de liberté

(30) Priority: 19.02.1985 JP 29442/85; 27.02.1985 JP 38338/85; 06.07.1985 JP 148510/85; 19.06.1985 JP 131925/85; 29.07.1985 JP 165729/85; 06.07.1985 JP 148511/85; 08.07.1985 JP 148354/85; 19.02.1985 JP 29441/85
(43) Date of publication of application: 27.08.1986
(73) Proprietor: KABUSHIKI KAISHA TOSHIBA, Kawasaki-shi, Kanagawa-ken 210 (JP)
(72) Inventor: Hiroi, Kazuo, Hachiooji-shi Tokyo (JP)
(74) Representative: Lehn, Werner, Dipl.-Ing.

(56) References cited:
- US-A- 3 758 762
- PATENT ABSTRACTS OF JAPAN, vol. 7, no. 168 (P-212)[1313], 23rd July 1983;& JP-A-58 75 207 (TOKYO SHIBAURA DENKI K.K.) 06-05-1983
- PATENT ABSTRACTS OF JAPAN, vol. 8, no. 89 (P-270)[1526], 24th April 1984;& JP-A-59 3503 (YOKOGAWA DENKI SEISAKUSHO K.K.) 10-01-1984
- PATENT ABSTRACTS OF JAPAN, vol. 8, no. 286 (P-324)[1723], 27th December 1984;& JP-A-59 149 505 (TOSHIBA K.K.) 27-08-1984
- J.Borer,Instrumentation and Control for the Process Industries, ELSEVIER London and New York,1985,pp.253-259.
- E.O.Doebelin, Control system principles and design, John Wiley&Sons,1985,pp.337-345.

## Description

The present invention relates to a controller which is used for process control, in particular, to a controller which excels in both of the set point value following characteristics and the external disturbance suppression characteristics.

Due to elevation in the process operating needs such as (1) resources saving and energy saving, (2) reduction in personnel and saving power, (3) uniformization and high quality of products, (4) safety, and (5) flexibility, the process control is being demanded to possess an increasingly high controllability, and various means are being devised attempting to attain the limit.

In operating a plant, in particular, a continuous process or the like, there will be spread the influence in the chain-reacting manner toward the downstream, if the control of the system is disturbed even by a small amount, because of the varying factors such as the changes in the yield in the upstream, various external disturbances, changes in the set point value due to optimization and cascading controll, and so forth. Accordingly, the fundamental principle for control is to improve the controllability of the individual control system to an extremity. Most recently, there are found frequently cases in which there are generated large distrubances such as changes in load during operation, along with the flexibility of plant operation and energy conservation, or there are frequent and large changes in the set point value due to optimization, cascading control, set point value control, and so forth.

In such a circumference there occur two problems to implement the above requirement, (1) attaining a desired system response against changes in a set point value, and (2) achieving sufficient feedback to handle disturburances. Prior art controllers however, have, not been configured to cope simultaneously and sufficiently with the two problems. In particular it is desired to accomplish a satisfactory adjustment of integral time at which is likely to occur inconsistency between the characteristics for following the change in the set point value and the characteristics for suppressing the influence due to disturbances acting on the object.

US-A-3758762 describes a control system combining feedforward and feedback control of a manipulated variable of a process which is arranged to provide a modification of the error signal to which the feedback control responds so as to effect a decoupling of the feedforward and feedback control actions. The error signal is diminished by a signal of magnitude sufficient to minimize or reduce by a predetermined amount the response by the feedback control to action by the feedforward control as reflected in changes in the controlled variable. Provision is also made to avoid unnecessary feedback control in response to set point changes when feedforward action is provided from the set point changes.

With reference to the drawings prior art as well as the invention will be described in more detail. In the drawings:

Fig. 1 is a functional block diagram of a general process controller of the prior art.

Fig. 2 shows the control constants due to CHR method.

Fig. 3 is a functional diagram of another prior art process controller.

Fig. 4 is a block diagram showing a separation type process controller.

Fig. 5 shows the optimum parameters for external disturbances and the optimum parameters for set point value of the PID parameters.

Fig. 6 shows the responses to a step external disturbance in the cases of the use of respective optimum parameters.

Fig. 7 shows the responses to a unit step change in the set point value.

Fig. 8 is a functional block diagram for illustrating the structure of a first embodiment of the present invention.

Fig. 9 shows equivalent change of integration time by varying the adjusting parameter for the change in the set point value.

Fig.10 is an explanatory graph showing how the characteristic of the system is adjusted by varying the parameter according to the invention.

Fig.11 is an explanatory graph showing how the characteristic of the system is adjusted by varying the parameter according to the invention.

Fig.12 is a functional block diagram for illustrating the structure of a second embodiment of the present invention.

Fig.13 shows the transfer functions of second to fourth embodments of the present invention.

Fig.14 (A) shows the output of the lead/lag operation.

Fig.14 (B) shows the changes in the processed value PV.

FIG.15 is a functional block diagram for illustrating the structure of a fourth embodiment of the present invention.

Fig.16 is an explanatory graph showing how the characteristic of the system is adjusted by varying the parameter according to the invention.

Fig.17 is a block diagram showing another configuration of the compensatory operation unit.

Figs. 18 (A) and 18 (B) show the response to the control value PV.

Fig.19 (A) is an explanatory graph showing how the characteristic of the system is adjusted by varying the parameter according to the invention.

Fig.19 (B) is an explanatory graph showing how the characteristic of the system is adjusted by varying the parameter according to the invention.

Figs. 20, 21 and 22 are block diagrams showing another configuration of the compensation operation units of the fifth embodiment.

Fig.23 is a functional block diagram for illustrating the structure of a sixth embodiment of the present invention.

Fig.24 shows the response characteristics of the output for a unit step input of the transfer function.

Fig.25 shows the response for a unit step in the case when the process is contructed by an element, first order lag + dead time.

Fig.26 is a functional block diagram for illustrating the structure of a seventh embodiment of the present invention.

Fig.27 is a block diagram showing an equivalent integral action part of the seventh embodiment.

Fig.28 is a functional block diagram for illustrating the structure of a eighth embodiment of the present invention.

Figs. 29 and 30 are explanatory graphs showing the characteristics of the seventh embodiment.

Fig.31 is a functional block diagram for illustrating the structure of a eighth embodiment of the present invention.

Fig.32 is a functional block diagram for illustrating the structure of a ninth embodiment of the present invention.

Fig.33 is a functional block diagram for illustrating the structure of a tenth embodiment of the present invention.

Fig.34 is a functional block diagram for illustrating the structure of a eleventh embodiment of the present invention.

Fig.35 is a functional block diagram for illustrating the structure of a twelfth embodiment of the present invention.

Fig.36 is a functional block diagram for illustrating the structure of a thirteenth embodiment of the present invention.

Fig.37 is a functional block diagram for illustrating the structure of a fourteenth embodiment of the present invention.

Fig.38 is a functional block diagram for illustrating the structure of a fifteenth embodiment of the present invention.

Fig.39 is a functional block diagram for illustrating the structure of a sixteenth embodiment of the present invention.

Fig.40 shows another configuration emboding the integration operation of the sixteenth embodiment.

Figs.41 and 42 are functional block diagrams for illustrating the structure of a seventeenth embodiment of the present invention.

Fig.43 shows the response characteristics for following set point value of the seventeenth embodiment.

Fig.44 is a functional block diagram for illustrating the structure of an eithteenth embodiment of the present invention.

Fig.45 is a functional block diagram for illustrating the structure of a nineteenth embodiment of the present invention.

Figs.46 and 47 are functional block diagrams for illustrating the structure of a twentieth embodiment of the present invention.

Fig.48 displays various control forms according to the twentieth embodiment.

Fig.49 shows the response characteristics for following point value of the twentieth embodiment.

Fig.50 shows the response characteristics for following set point valuein an imperfect two degrees of freedom controller.

Figs.51 and 52 are functional block diagrams for illustrating the structure of a twenty-first embodiment of the present invention.

Fig.53 is functional block diagram for illustrating the structure of a twenty-second embodiment of the present invention.

Fig.54 shows the result of a simulation for the response of control value PV for the case of a transfer function of for the control object according to the invention.

Fig.55 displays various control forms according to the twenty-second embodiment.

Fig.56 shows a modified configuration of the twenty-second embodiment.

Fig.57 is a functional block diagram for illustrating the structure of an twenty-third embodiment of the present invention.

Fig.58 is a functional block diagram for illustrating the structure of a twenty-fifth embodiment of the present invention.

Figs.59 (A), 59 (B) and 60 show examples of response of the twenty-fifth embodiemnt.

### SUMMARY OF THE INVENTION

In accordance with the present invention, a process controller is prepared to be capable of adjustment of operational parameters with two degrees of freedom which may be much more easily and accurately accomplished to cope with disturbances and changes in set-point value. Briefly described, a primary object of the invention is to provide an improved process controller with two degrees of freedom. Especially, the present invention has been conceived to make it possible to sufficiently adjust integral time.

The object of the invention is solved by a process controller system comprising first and second controllers both for controlling a response of a process output value against a disturbance applied to a process and for following a process ouput value to a setpoint value change,
said first controller having a first adjustable parameter set including at least parameters for proportional and integral operations, which supplies a control signal to the process on the basis of the process output value for optimally controlling the response of the process ouput value by adjusting the first parameter set where the disturbance is applied, and
said second controller having a second adjustable parameter set including at least one integrating parameter for integral operation which is adjustable independently of the first parameter set, for controlling the response of the process output value by adjusting the second parameter set where the setpoint value change is applied, characterized in that said first controller includes an integration unit having a transfer function$\text{Kp.} \frac{\text{1}}{\text{Ti.S}}$
and said second controller includes a lead/lag operation unit having a transfer function$\text{Kp.} \frac{\text{1}}{\text{Ti.S}} \text{-} \frac{\text{β}}{\text{(1+Ti.S)}}$
and said second controller optimally controls the response of the process output value by adjusting the integrating parameter β which is positive; where Kp and Ti are the proportional gain and the integrating time constant of the transfer functions and s is the complex variable.

The object of the invention is also solved by a method for adjusting parameters of a process controller system comprising first and second controllers both for controlling a response of a process output value against a disturbance applied to a process and for following a process ouput value to a setpoint value change, comprising
a) a first step of adjusting a first adjustable parameter set of said first controller including at least parameters for proportional and integral operations, which supplies a control signal to the process on the basis of the process output balue for optimally controlling the response of the process ouput value by adjusting the first parameter set when the disturbance is applied, and
b) a second step of adjusting a second adjustable parameter set of said second controller including at least one parameter for integral operation which is adjustable independently of the first parameter set, for controlling the response of the process output value by adjusting the second parameter set when the setpoint value change is applied, characterized in that said first controller includes an integration unit (17) having a transfer function$\text{Kp.} \frac{\text{1}}{{\text{T}}_{\text{I}} \text{.S}}$ and said second controller includes a lead/lag operation unit having a transfer function$\text{Kp.} \frac{\text{1}}{{\text{T}}_{\text{I}} \text{.S}} \text{-} \frac{\text{β}}{{\text{(1+T}}_{\text{I}} \text{.S)}}$ and said second controller opitmally controls the response of the process output value by adjusting the integrating parameter β which is positive; where Kp and Ti are the proportional gain and the integrating time constant of the transfer functions and s is the complex variable.

To facilitate the understanding of difficulties which prior art encounters, brief reference will be made for the conventional control systems.

### [Conventional Configurations of Control Systems]

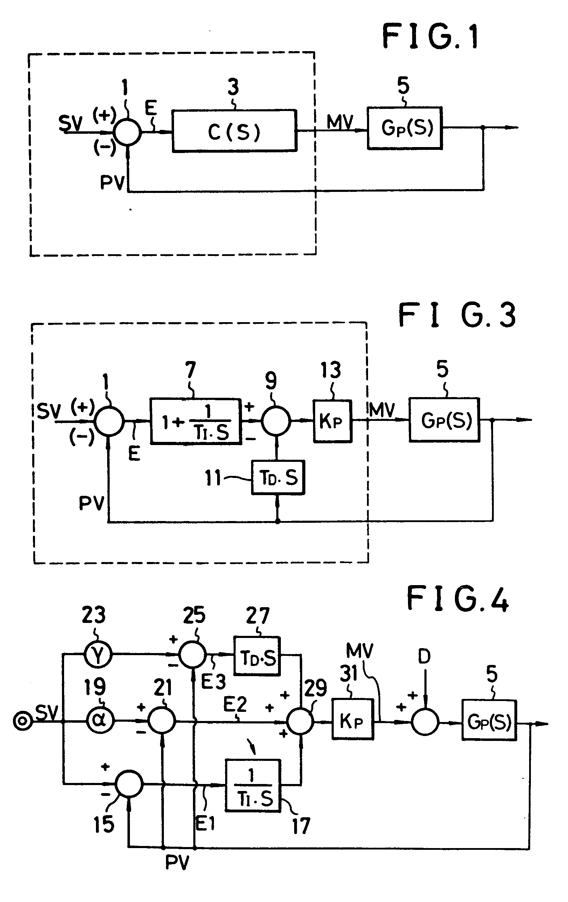

In Fig. 1 is shown a functional block diagram of a general process controller of the prior art. In the figure, 1 is a deviation operation unit, 3 is a control operation unit, and 5 is a controlled object. The deviation operation unit 1 computes the deviation E (= SV-PV) between the control value PV that is fed back from the controlled object 5 and the set point value SV. The control operation unit 3 carries out each of the proportional, integral, and differential operations for the deviation E based on the transfer function C(s) given by Eq. (1), determines an adjusted operational output MV to bring the control value PV and the set point value to a coincidence, and outputs it to the controlled object 3. In the controlled object 3, there is carried out a control operation using the adjusted operational output MV as the manipulated value, and when there is generated a disturbance in the control due to impression of an disturbance D, it is detected as a variation in the control value PV.${\text{C(s) = K}}_{\text{P}} \text{(1 +} \frac{\text{1}}{{\text{T}}_{\text{I}} \text{.s}} \text{+} \frac{{\text{T}}_{\text{D.}} \text{s}}{{\text{1+ η .T}}_{\text{D}} \text{.s}}$

In the above equation, K_{P}, T_{I}, and T_{D} are the control constants of the transfer function C(S), each representing the proportional gain, integral time, and derivative time.
Further, S is the complex variable.

The response characteristics of the controller is determined, as may be seen from the transfer function shown by Eq. (1), by the adjusting condition of the control constants K_{P}, T_{I}, and T_{D}. In the ordinary control, the control constants Kₚ, T_{I}, and T_{D} are adjusted to a state which can quickly suppress the influence of the disturbance when there is applied an disturbance to the process, that is, the optional condition of characteristics for suppressing disturbance.

However, if the set point value SV is changed when the control constants are set to the optimum condition of characteristics for suppressing disturbance, the control proceeds too far, the control value PV is unable to follow the change in the set point value, and generates an overshoot. Further, if the control constants are set to a state in which the control value PV follows the change in the set point value optimally, that is, to an optimum condition of characteristics for following set point value, then the suppression characteristics for the disturbance is insufficient so that the responsiveness takes a long time.

As in the above, the values of the control constants for the optimum condition of characteristics for suppressing disturbance and those for the optimum condition of characteristics for following set point value differ markedly. This can be understood by examining the adjusting formulae for the control constants due to CHR (Chien, Hrones, and Reswick) method shown in Fig. 2.

Now, for the transfer function of the control operation unit 3, only one kind of control constant for each of K_{P}, T_{I}, and T_{D} can be set. For this reason, in the prior device, either one of the two sets of the control constants is selected in consideration of the system characteristics (for instance, responsive force for an disturbance) of the controlled object 3 or the kind of control (for instance, the form of change in the set point value), sacrificing the other set, or make a compromise at a response which is tolerable for both of the conditions.

Another prior art process controller is shown in Fig. 3. This is a PID controller with differentiation for PV. Namely, the PI operation is applied at a PI operation means 7 to the deviation E between the set point value SV and the process value PV. From the output of the PI operation means 7 is subtracted, at a subtractor 9, the output of the differential operation on the process value PV at the differential operation means 11. The result is inputted to the proportional gain means 13 to be multiplied by the proportional gain Kp. The resulting signal is impressed on a controlled object 5 as a manipulated signal MV, and a control is carried out to bring the process value PV and the set point value SV to a coincidence.

This controller, however, is not able to cope with both disturbances and changes in the set point value as the forth discribed controller.

To solve the above problem some configuration with two degrees of freedom has been conceived. Fig. 4 is a block diagram showing a separation type process controller to which two degree of freedom conception is applied.

As shown by Fig. 4, in the prior process controller, the deviation El (= SV-PV) between the set point value SV and the control value PV is determined in a subtractor 15, and the deviation E1 undergoes an integral operation in the integral operation unit 17.

On the other hand, after the set point value SV is multiplied by a coefficient α in a coefficient unit 19, the deviation E2 (= α SV-PV) from the control value PV is found in a subtractor 21 (proportional operation).

Further, the set point value SV is multiplied by a coefficient γ in a coefficient unit 23, the deviation E3 (= γ SV-PV) is found by subtracting the control value PV from the above result in a subtractor 25, and the deviation E3 undergoes a differential operation in a differential operation unit 27.

Then, the integrated output, the deviation E2, and the differentiated output are additively synthesized in an adder 29, and after it is multiplied by a proportional gain Kₚ in a proportional gain unit 31, the result is supplied to a controlled object 5 as a manipulated signal MV.

In the above prior controller, the control constants, namely, the proportional gain K_{P}, the integral time T_{I}, and the derivative time T_{D} are adjusted, when an disturbance D is applied to the controlled object 5, to a state in which its effects are quickly suppressed, namely in optimum condition of characteristics for suppressing disturbance. For a change in the set point value SV, it is attempted to follows the change in the set point value by adjusting the coefficient α for adjusting the proportional gain and the coefficient γ for adjusting the derivative time.

Since, however, in the prior device no compensation is given to the integral time T_{I} which plays the control role in the integration operation, though compensation is given for the proportional gain K_{P} and the derivative time T_{D} by adjusting the coefficients α and γ, there remained the problems that follow.

Namely, the integral time of a control system is determined, as an optimum value for suppressing disturbance, by the magnitude of the dead time (L) of the controlled object, and is determined, as an optimum value for following the set point value, by the magnitude of the time constant To. Between the dead time L and the integration constant To there is a big difference, and moreover, the larger the time difference between them, the worse is the characteristics for following set point value, when the characteristics for suppressing disturbance is optimized. Therefore, the prior controller is incomplete as a two degrees of freedom PID controller, and it is totally impractical for a plan and others where a large number of PID controller have to be employed.

Here, the following model will be adopted as a model G_{P}(s) for the astatic process.${\text{G}}_{\text{p}} {\text{(s) = e}}^{\text{-5s}} \text{/ { S (1+S) } .}$

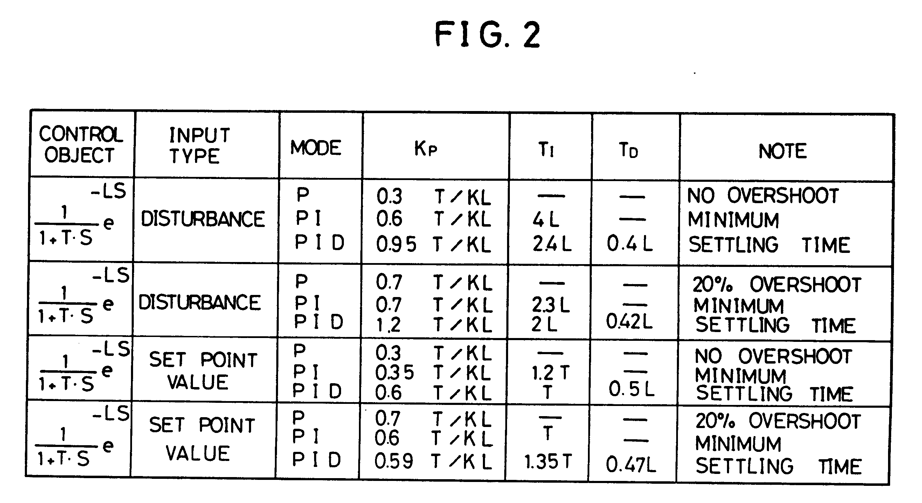

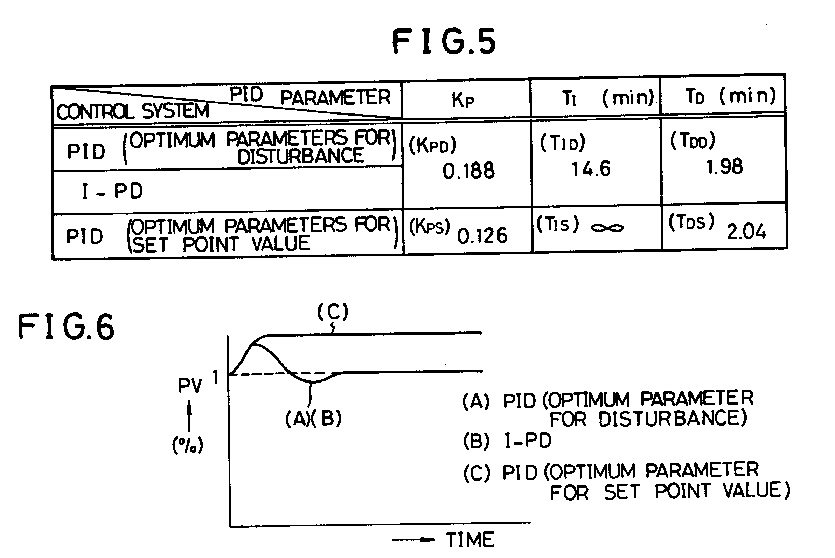

In Fig. 5 are shown the optimum parameters for disturbances (at which the controller optimally suppresses the influences due to disturbances) K_{P}, T_{I}, and T_{D} and the optimum parameters for set point value (at which the controller introduces the plant into the new condition. swiftly) K_{P}*, T_{I}*, and T_{D}* of the PID parameters, namely, the proportional gain Kₚ the integral time T_{I}, and the derivative time T_{D}. In addition, the responses to a step disturbance in the cases of the use of respective optimum parameters are shown in Fig. 6, and the responses to a unit step change in the set point value are shown in Fig. 5.

As shown in Fig. 6, for the case of a stepped disturbance, there will be obtained satisfactory response when the optimum parameters for disturbances K_{P}, T_{I}, and T_{D} are set, as shown by the curve (A). However, when they are set to the optimum parameters for set point value K_{P}*, T_{I}*, and T_{D}*, there is generated a steady deviation, as shown by the curve (C).

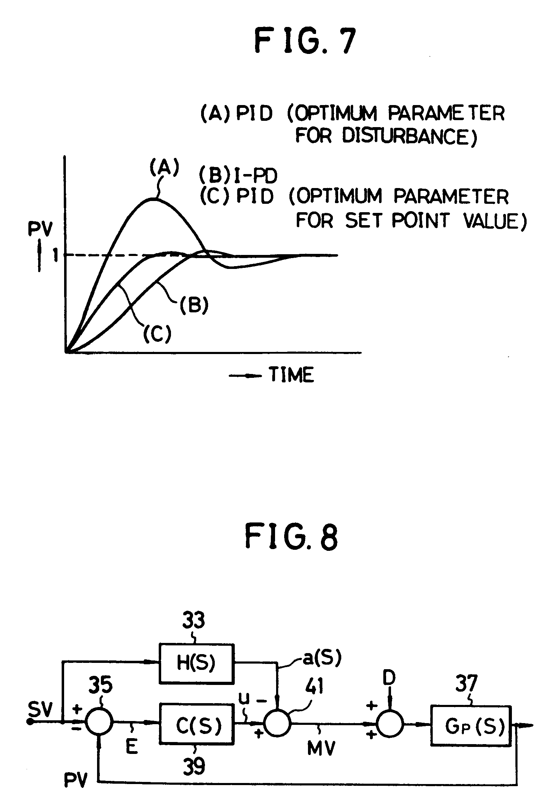

In contrast, for a step change in the set point value SV, when the parameters are set to the optimum parameters for set point value. K_{P}*, T_{I}*, and T_{D}*, the response is satisfactory, as shown by the curve (C). However, when they are set to the optimum parameters for disturbances K_{P}, T_{I}, and T_{D}, an overshooting is generated and becomes oscillatory as shown by the curve (A) in Fig. 7.

In what follows process controllers of several types to which the present invention is applied.

### [Feedforward Compensation Type]

In the description the term "feedforward" is used for configuration in which the set point value is operated and the result is fed to the controlled object, bypassing a deviation operation unit.

Figure 8 is a functional block diagram for illustrating the structure of a first embodiment of the present invention.

In the figure, reference numeral 33 is a compensating operation unit. The set point value SV is introduced to the compensating operation means 33 and a deviation operation unit 35, and the deviation operation unit 35 determines the deviation E between the set point value SV and the control value PV from a controlled object 37, and outputs the result to a control operation unit 39. The control operation unit 39 applies to the deviation E each operation of proportional, integral, and differentiation based on the transfer function C(s) defined by Eq. (1) to compute the adjusted output MV.${\text{C(s) = K}}_{\text{P}} \text{(1 +} \frac{\text{1}}{{\text{T}}_{\text{I}} \text{.s}} \text{+} \frac{{\text{T}}_{\text{D.}} \text{s}}{{\text{1+ η .T}}_{\text{D}} \text{.s}} \text{)}$
Here, it will be assumed that the control constants K_{P}, T_{I}, and T_{D} for the transfer function are adjusted to the optimum condition for suppressing disturbances by means of CHR method shown in Fig. 2 or other, so that the variations in the control value PV due to disturbances D are suppressed by the adjusted output u to a condition with no overshoot and minimum settleing time.

However, for the control constants determined by the above adjustment, when the set point value varies the gain becomes large so that control is excessive and the control value PV overshoots the set point value to a large extent. Therefore, the compensation operation unit 33 carries out compensating operation for the set point value SV based on the transfer function H(s) given by Eq. (2) to compute the compensating quantity a(s), in order to correct the control constants K_{P}, T_{I}, and T_{D} that are adjusted to the optimum characteristics condition for suppressing disturbances to be equivalent to the parameters K_{P}*, T_{I}*, and T_{D}* for optimum characteristics condition for following the set point value, with respect to the deviation E that is generated by the variations in the set point value. The compensating quantity a(s) is output to an operation unit 41 where it is subtracted from the adjusted output u that comes from the control operation unit, the result of the subtraction is supplied to the controlled object 37 as the manipulated value MV. By virtue of this compensation, the transfer function given by Eq. (1) which is adjusted to the condition which has optimum characteristics for suppressing disturbances will be modified, for the deviation E due to variations in the set point value, to a transfer function C*(s) for the condition which has optimum characteristics for following the set point value as shown virtually by Eq. (3).${\text{H(s) = K}}_{\text{p}} \text{{ (1- α ) +} \frac{\text{β}}{{\text{1+T}}_{\text{I}} \text{.s}} \text{+} \frac{{\text{(1- γ ).T}}_{\text{D}} \text{.s}}{{\text{1 + η . γ .T}}_{\text{D}} \text{.s}} \text{} ,}$ 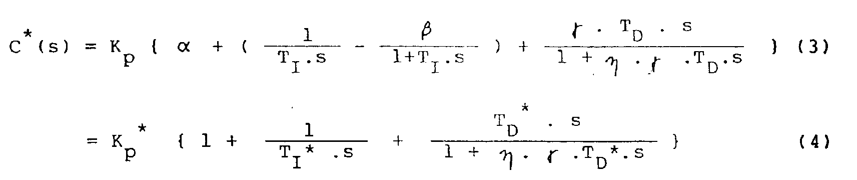
where α, β, and γ are adjusting parameters α adjust the proportional gain K_{P}, β modifies the integral time T_{I} equivalently, and γ modifies the derivative time T_{D}.

By constructing the controller as above, regardless of whether it is due to variations in the control value PV or to the change in the set point value, for the deviation E from the deviation operation unit 1, computation is carried out by the transfer function given by Eq. (2) to the condition of optimum characteristics for suppressing the disturbances. Of the result of the computation, that part which is based on the deviation due to the change in the set point value, is corrected by Eq.(2) by the compensating quantity a₍ₛ₎ that is computed based only on the set point value, and is modified as if it is computed to give a condition which has optimum characteristics for following the set point value by means of the virtual transfer function defined by Eq. (3). By so doing, it becomes possible to set the control constants K_{P}*, T_{I}*, and T_{D}* for the optimum characteristics condition for following the set point value by correcting the parameters α, β, and γ that can be independently adjusted for optimization for the change in the set point value, without changing the control constants K_{P}, T_{I}, and T_{D} that are adjusted to the optimum characteristics condition for suppressing disturbances.

Next, the principle of the present embodiment will be described.

The control response for the process shown in Fig. 8 can be represented by the following equation.$\text{PV =} \frac{{\text{{ C(S)-H(s) } . G}}_{\text{p}} \text{(s)}}{{\text{1 + C(s) . G}}_{\text{p}} \text{(s)}} \text{x SV +} \frac{{\text{G}}_{\text{p}} \text{(s)}}{{\text{1 + C(s) . G}}_{\text{p}} \text{(s)}} \text{x D.}$

According to Eq. (5), in order to manipulate solely the response to the set point value SV without changing the response to the disturbance D, when the set point value SV is changed, one needs only to change the factor { C(s) - H(s) }. If we call { C(s) - H(s) } the transfer function C*(s) for the optimum characteristics condition for following the set point value, it becomes necessary to arrange for the transfer function C*(s) that it is possible to change independently the values for the control constants K_{P}, T_{I}, and T_{D} of the transfer function, in order to optimize the characteristics for following the response due to the change in the set point value, based solely on the change in the set point value SV, without changing the values of the control constants that are adjusted to the optimum condition for suppressing the disturbances.

Moreover, in order for the control response to the set point value SV to be settled, it is necessary according to the find value theorem that when the set point value SV is changed stepwise by a fixed value a, with fixed value of the disturbance D, the deviation Eₛᵥ = a has to vanish in a steady state.

As a function that satisfies the above two conditions there is devised a transfer function C*(s) that is given by Eq. (3).

Namely, with respect to the former condition, the adjusting parameters α, β, and γ are involved in the expression in such a way as to change the values of each of the control constants K_{P}, T_{I}, and T_{D} only for the set point value SV without being affected by the control value PV. In order to realize such a function C*(s), the present embodiment is given a construction in which the compensation operation unit 33 supplies a compensating quantity a(s) to the output of the control operation unit 39, and its transfer function H(s) is constructed as given by Eq.(2).

The transfer function H(s) is defined by the equation that follows, and the compensating quantity a(s) is determined for the set point value SV by the compensation operation for each of the proportional, integral, and differential operations based on the set values of the adjusting parameters α, β, and γ.$\text{H(s) = C(s) - C*(s)}$

The set point values for the adjusting parameters α, β, and γ of the function are determined as follows by substituting the transfer function C*(s) given by Eq.(3) as shown by Eq.(4) by the use of the control constants K_{P}*, T_{I}*, and T_{D}* for the optimum characteristics condition for following the set point value. Here, K_{P}*, T_{I}*, and T_{D}* have values that can be determined by CHR method shown in Fig. 2 or the like.

First, α can be determined by${\text{K}}_{\text{P}} {\text{* = α . K}}_{\text{p}} \text{. ∴ α =} \frac{{\text{K}}_{\text{P}}^{\text{*}}}{{\text{K}}_{\text{P}}} \text{.}$

As to the parameter β, in relation to the final value theorem that will be described shortly, it can be determined by setting$\text{(} \frac{\text{1}}{{\text{T}}_{\text{I}} \text{.s}} \text{-} \frac{\text{β}}{{\text{1+T}}_{\text{I}} \text{.s}} \text{) ≒} \frac{\text{β}}{{\text{T}}_{\text{I}} \text{.s}} \text{.}$
Then, can be determined from

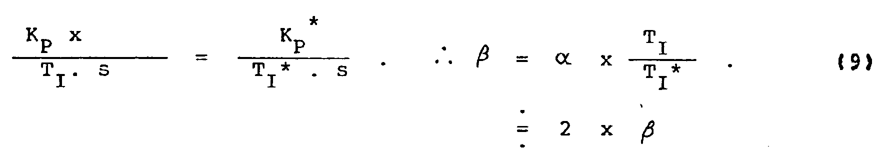

Further, γ can be determined as follows.${\text{T}}_{\text{D}} {\text{* = γ . T}}_{\text{D}} \text{∴ γ =} \frac{{\text{T}}_{\text{D}} \text{*}}{{\text{T}}_{\text{D}}}$

Next, the second condition, namely, that the final value theorem can be satisfied will be explained.

In order for the steady deviation E_{SV} = a to vanish, it is necessary to have the following equation.

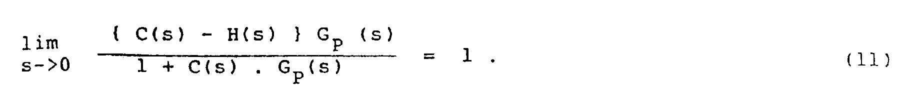

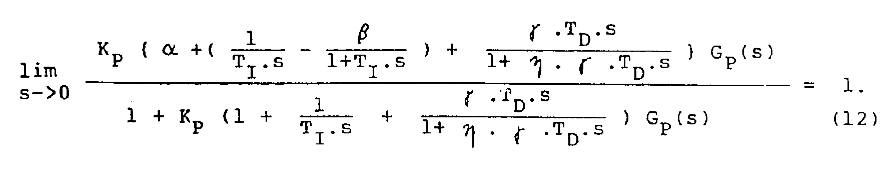

In order to satisfy Eq. (11) the integration term becomes of importance. This is because, for s->0 it follows 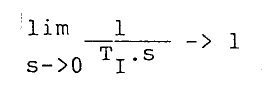
so that Eq. (11) will not be valid unless the denominator and the numerator of Eq. (11) have equal value. Because of this, the integral time T_{I} cannot be changed by simply multiplying it by parameter α or γ so that a construction is provided to vary it equivalently by using a first order lag whose operation is the nearest to that of integration, as shown by Eq. (9).

With such a construction, these are provided idential integration terms in the denominator and the numerator and the integral time in the numerator is adjusted by meas of a first order lag, so that it becomes possible to satisfy the final value theorem.

Next, description will be made whether it is possible to change equivalently, by the use of a first order lag, the integral time which used to be difficult to compensate for the past.

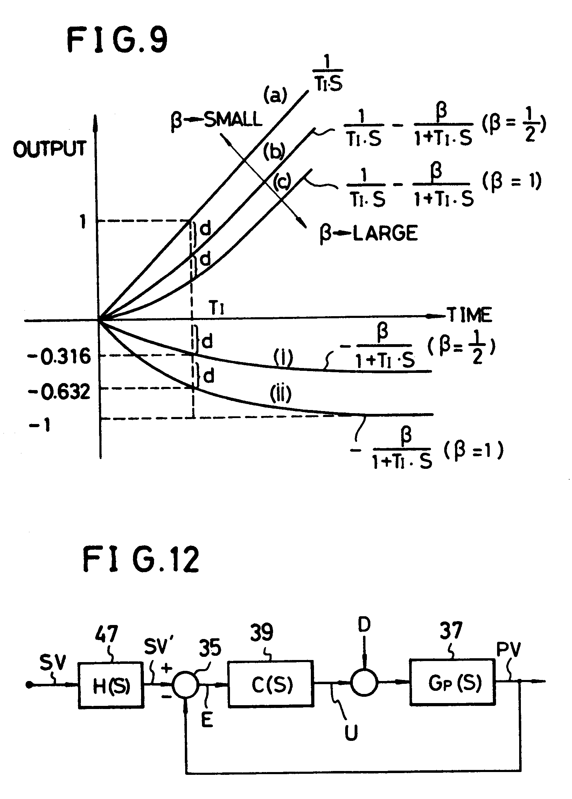

According to Eqs. (1) and (3), the integration term for the disturbances is$\frac{\text{1}}{{\text{T}}_{\text{I}} \text{.s}}$ , and the integration term for the change in the set point value is$\text{(} \frac{\text{1}}{{\text{T}}_{\text{I}} \text{.s}} \text{-} \frac{\text{β}}{{\text{1+T}}_{\text{I}} \text{.s}} \text{).}$ By comparing the two integration terms, it is possible by varying the adjusting parameter to change equivalently only the integral time for the change in the set point value as shown in Fig. 9, with the integration term for disturbances fixed.

In Fig. 9, the curve (a) is for the integration term$\frac{\text{1}}{{\text{T}}_{\text{I}} \text{.s}} \text{,}$ (b) is the curve in which a first order lag$\frac{\text{β}}{{\text{1+T}}_{\text{I}} \text{.s}} \text{( β =} \frac{\text{1}}{\text{2}} \text{)}$ 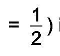 is subtracted from the curve (a), (c) is the curve in which a first order lag$\frac{\text{β}}{{\text{1+T}}_{\text{I}} \text{.s}} \text{( β = 1)}$ is subtracted from curve (a). From these curves, (b) and (c) are the results of equivalent modification by the first order lag of the integral time for curve (a), so that it can be approximated by$\frac{\text{β}}{{\text{T}}_{\text{I}} \text{.s}}$ as in Eq. (8), and the optimum value for β is formed to be 2 x β by actual simulation. Since the output of the first order lag is determined by the value of β, the integral time increases in the order of (a), (b), and (c) as the value of β increases. Moreover, the period during which the integral time need be changed in the actual control is on the order of the time for the process to respond (the integral time T_{I} for the integration operation), for which the integration may be approximated nearly linear. On the same figure the subtraction component due to the first order lag of each response is shown for reference with curves (i), (ii). As seen in the above, with the curve (a) as the reference, the integral time T_{I} can be increased by increasing β in positive direction and the integral time can be decreased by increasing β in the negative direction.

As easily understood, according to the embodiment of the invention an integration operation with relatively long integral time is carried out a certain period after a change of the set point value while thereafter the set point value undergoes an integration operation of short integral time.

Next, the operation of the present embodiment, and the method for adjusting each of the control constants and the adjusting parameters.

As the adjusting method there are (1) a method, in which the process characteristics (time constant T, dead time L, and gain K of the process) are determined first and adjustment is made then based on these values by CHR method or other and (2) a method by which the control constants are adjusted to have the step response to the set point value equals the desired response, under the conditions of incompletely known process characteristics.

According to method (1), the control constants K_{P}, T_{I}, T_{D}, K_{P}*, T_{I}*, and T_{D}* for both of the optimum characteristics condition for suppressing the disturbances and the optimum characteristics condition for following the set point value can be camputed, so that the adjusting parameters α, β, and γ can be computed by substituting them into Eqs. (7), (9), and (10).

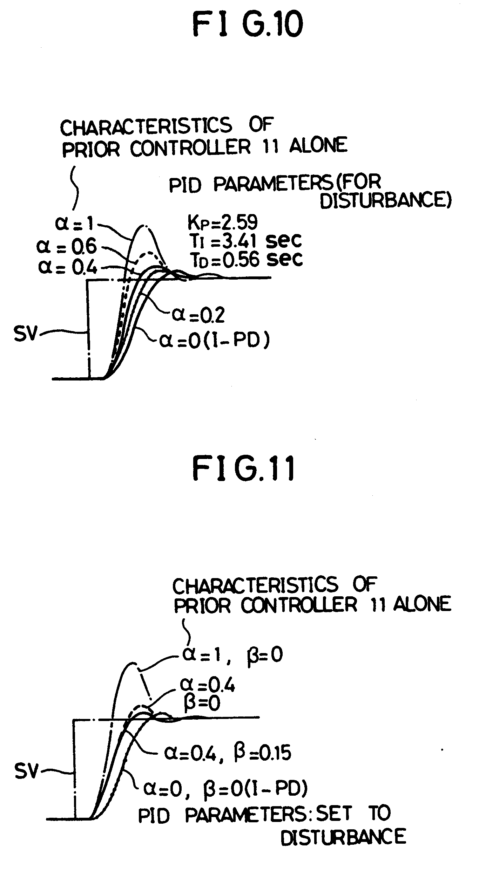

Further, in method (2) which is used in many cases, first the control constants K_{P}, T_{I}, and T_{D} for the control operation unit 39 are adjusted to have the response to the control value PV to be equal to the optimum characteristics condition for suppressing the disturbances, by changing the set point value SV stepwise. Then, the adjusting parameters are corrected to lead to a response which corresponds to the desired optimum characteristics condition for following the set point value. For example, if simulation is made with γ = 0 (the case for proportional and integral compensation operation) for the transfer function$\text{GP(s) =} \frac{\text{1}}{\text{1+5s}} {\text{e}}^{\text{-2L}}$ for the controlled object 37, the response changes as shown by Figs. 10 and 11 depending upon the values of the parameters α and β.

Moreover, the present embodiment has a construction by which the response can be adjusted by the parameters so that various forms of control can be obtained by varying the value of the parameter α. Thus, in Fig. 10 if one sets α = 0, it becomes the I-PD control, and if it is set α = 1, then it leads to the control only for the characteristics condition for suppressing the disturbances which is similar to the prior controller. Here, the parameter α adjusts the proportional gain K_{P} of the control constants, and the characteristics in rise and the overshoot condition of the response can be selected by varying its value under the condition 0 ≦ α ≦ 1. In addition, β is for changing the integral time T_{I}, and it can improve the overshooting of the response without affecting the rising of the response curve, as shown in Fig. 11. An actual simulation revealed that the optimum characteristics are obtained for α = 0.4 and β = 0.15. Further, γ is for changing the derivative time T_{D} by which it is possible to change the rising characteristics of the response curve.

Once the control constants K_{P}, _{TI}, and T_{D} and the adjusting parameters α, β, and γ are set as in the above, when an disturbance D is impressed on the controlled object 3, the variation in the control value PV due to it is supplied to the control operation unit 39 as the deviation from the set point value SV. Then, the adjusting output u is computed based on the control constants for the optimum characteristics condition for suppressing the disturbance, and the result is output to the operation unit 41. At the operation unit 41, the compensating quantity a(s) from the compensation operation unit 33 does not change since ther is no change in the set point value SV, and the variation due to the disturbance D is quickly suppressed by outputting the manipulated value MV to the controlled object 37.

When the set point value SV is further changed, the control operation unit 39 carries out an operation under the condition of suppressing the disturbance, even for the deviation E that corresponds to the additional change. However, for the portion of change in the set point value SV, the compensating quantity a(s) which is computed at the compensation operation unit 33 based on the adjusting parameters is subtracted at the operation unit 41 and the result is output to the controlled object 37, giving rise to a compensation that responds optimally also to the set point value SV.

As in the above, according to the present invention it is possible to (1) correct virtually the control constants that are adjusted to the condition to suppress the disturbance, to a condition that follows the set point value, so that it is possible to realize both characteristics of disturbance suppression and set point value following. Further, it is possible to (2) to adjust independently the constants for the condition of disturbance suppression and for the condition of set point value following, so that it is possible to select the optimum condition freely for both. Moreover, (3) since the adjusting parameters can be selected after adjusting the control constants to optimize the response of the control value PV to the set point value SV, adjustment on the spot becomes possible to that extent, which leads to the reliability, ease, and fastness of the adjustment. Still further, (4) it has a construction which may be realized by just adding the function of the compensation operation unit 33 to the control operation unit 39 so that it is easily applicable to an existing controller. Finally, (5) since it can compensate for the integral time T_{I}, though equivalently, which has so far been thought impossible, it is possible to improve the controllability for, expecially, the integration process (astatic process), too, significantly. This is because, in contrast to the finiteness of the integral time for the optimum characteristics condition for suppressing the disturbance, the integral time for the optimum characteristics conditions for following the set point value has to be made infinity, so that it is necessary to give a construction which makes it possible to change the integral time in order to obtain the optimum controllability for both conditions. Further, CHR method shown in Fig. 2, too, the integral time alone is determined by different parameters, namely, by the dead time L of the controlled object for suppression of the disturbance, and by the time constant T of the controlled object for the set point value, so that his compensation is absolutely necessary for improving the controllability.

In the foregoing, description for an embodiment of the invention, explanation has been made by assuming that the control operation unit 39 carries out each operation of proportional, integral, and differential, and the compensation operation unit 33 carries out also the corresponding operations of proportional, integral, and differential. However, in the present invention, the control operation unit 11 need only to have a construction which carries out at least an integral operation that forms the nuclears for improving the controllability. In other words the spirit of the invention exists in adjustment of the integral times for both the set point value following characteristics and the disturbance suppression characteristics. The compensation operation unit 10, too, need to have a construction, centering around the equivalent integral compensation operation due to a lag element, which is integration alone or a selective combination of integration and proportional or differentiation, depending upon the desired following response to the set point value. For instance, if control of the overshooting alone is what is needed, compensation can be integration alone, and need only to combine it with proportional or differential, or both of proportional and differential, depending upon the degree of improvement of the rising characteristics of the response.

Moreover, in the above description of the embodiment use was made of imperfect differentiation which is in frequent use in general as the differential operation for the control operation unit 39. However, needless to say, similar effects can be obtained by the use of the perfect differentiation. In other words, differentiation is meant to include both of the perfect and imperfect differentiations.

### [Set Point Value Compensation]

The present invention can be also applied to process control system in which the set point value is operated, in the pre-stage of a deviation operation unit, by a compensation unit which brings no influence to the characteristics for suppressing the disturbances acting on the system.

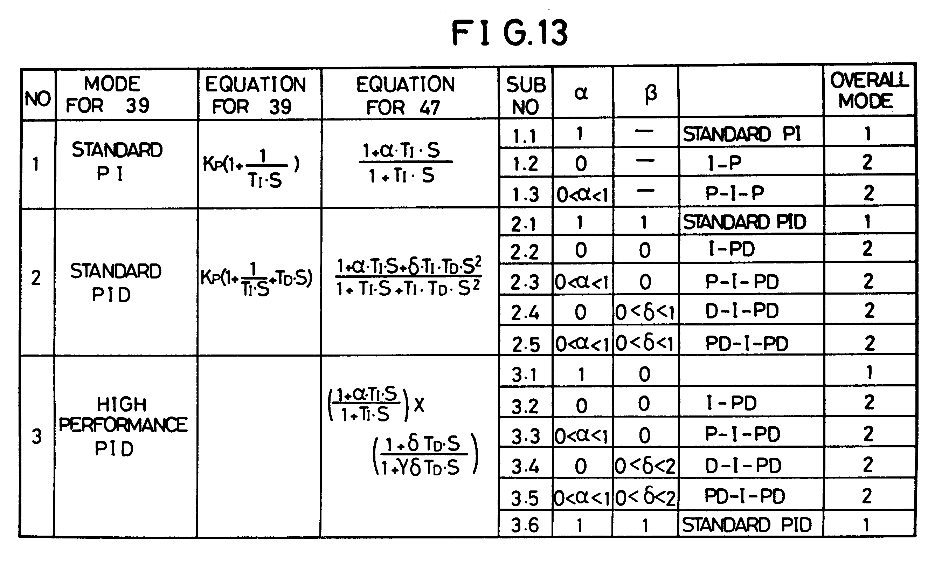

Referring to Figs. 12 through 22, second to sixth embodiments of the present invention will be described. Here, components identical to those in the first embodiment are given identical symbols to omit further explanation.

The present embodiment has a compensation operation unit 47 in the pre-stage of the deviation operation unit 35 for the set point value SV. In the first embodiment, in order to virtually compensate at the control operation unit 39; for a change in the set point value, the control constants K_{P}, T_{I}, and T_{D} that are adjusted to the optimum condition for suppressing the disturbance, to those for the optimum condition for following the set point value, the compensating quantity a(s) from the compensation operation unit 33 is computed once at the control operation unit 33 under the condition for suppressing the disturbance, including the deviation due to the change in the set point value. The result of the computation is compensated for by adding it to the adjusted output. In contrast, in the present embodiment, the compensation operation unit 47 applies a compensation operation, for a change in the set point value SV, that changes the predetermined control constants for suppressing the disturbance of the control operation unit, to the compensating quantity that corrects virtually to the control constants for the condition for following the set point value. The result of the compensation operation is supplied to the deviation operation unit 39.

Namely, the control response of the present embodiment shown in Fig. 12 is represented by the following equation.$\text{PV =} \frac{{\text{H(s) . C(s) . G}}_{\text{P}} \text{(s)}}{{\text{1 + C(s) . G}}_{\text{P}} \text{(s)}} \text{x SV +} \frac{{\text{G}}_{\text{P}} \text{(s)}}{{\text{1 + C(s) . G}}_{\text{P}} \text{(s)}} \text{x D.}$

From Eq. (28) it will be seen that in order to manipulate the response to the set point value SV without changing the response to the disturbance, it is only necessary to change the transfer function H(s)·C(s).

Fig. 13 shows the transfer functions of second to fourth embodiments of the present invention in which are utilized lead/lag operation means as the compensation operation unit 47, In this figure also are shown the overall adjusting modes corresponding to each embodiment.

In this connection the Expression for overall adjusting mode with which the description is made will be explained. There are four distinct symbols of which the expression is composed, namely P, I, D and hyphen. Expressions without hyphen corresponds to systems of one degree of freedom type. For example, PI mode expresses a system which can be controlled only in terms of a proportion rate and an integral time for both the set point value following characteristics and the suppression of disturbances acting on the system. With one hyphen adjusting modes having different control modes for the two characteristics can be expressed. Symbols preceding a hyphen refers to the adjusting mode of the both characteristics while symbols following the hyphen expresses only the characteristics for suppressing the disturbance. For example, I-P represents a adjusting mode in which an integlation time can be adjusted for both the characteristics while only the disturbance suppression characteristics undergoes a proportion operation. If preceding and following symbols have the same symbol, the expression denotes a two degrees of freedom type system. In case three sets of symbols are connected to each other by two hyphens, the preceding mode represents that for the set point value following characteristics, the last mode represents that for the disturbance suppression characteristics and the middle mode there between represents the both. For example, P-I-P expresses an adjusting mode in which the proportion rate adjustment is of two degrees of freedom and the integration operation with one degree of freedom is carried out for the both characteristics.

### (1.1) No.1.1 Standard PI Control

When α = 1 ..... This leads to H(s) = 1, which is the prior standard PI control.

### (1.2) No.1.2 P-I Control

When α = 0 ..... There is obtained$\text{H(s) =} \frac{\text{1}}{{\text{1 + T}}_{\text{I}} \text{.s}} \text{,}$
which is the PID control with filter for set point value. In this case, the PI parameters for PI control are set to the optimum PI parameters for disturbanced suppression, and the time constant for the lead/lag operation means 31 is set to the integral time T_{I}. By so arranging, it becomes optimum for both of variations in disturbances and the changes in set point value, obtaining a two degree of freedom control system.

For changes in the process value PV, there is obtained${\text{K}}_{\text{P}} \text{(1 +} \frac{\text{1}}{{\text{T}}_{\text{I}} \text{.s}} \text{),}$
which represents a PI operation.

For changes in the set point vaslue (SV), there is obtained 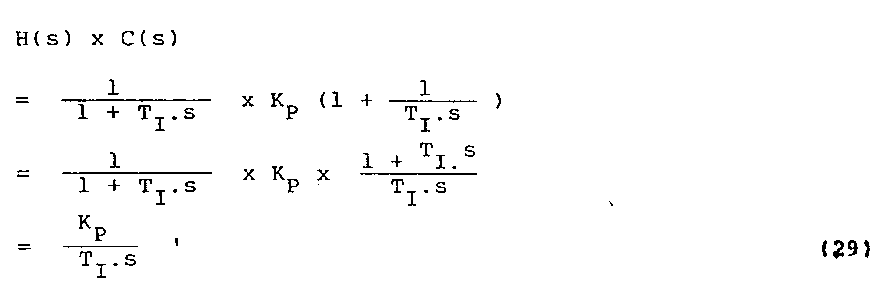
Which may be said to represents the so-called I-P control system.

### (1.3) Setting No.1.3 P-I-P Control

When 0 < α < 1 ..... In this case, there is obtained$\text{H(s) =} \frac{{\text{1 + α . T}}_{\text{I}} \text{.s}}{{\text{1 + T}}_{\text{I}} \text{.s}}$
which represents from overall viewpoint a P-I-P control as the following proof indicates. This means that I (integration) operates simultaneously on the set point value and the process value, and P (proportional) means that the values for the changes in the set point value and the values for the changes in the process value can be set independently.

For changes in the process value PV it gives${\text{K}}_{\text{P}} \text{(1 +} \frac{\text{1}}{{\text{T}}_{\text{I}} \text{.s}} \text{)}$
which represents a PI operation.

For changes in the set point value (SV) it leads to 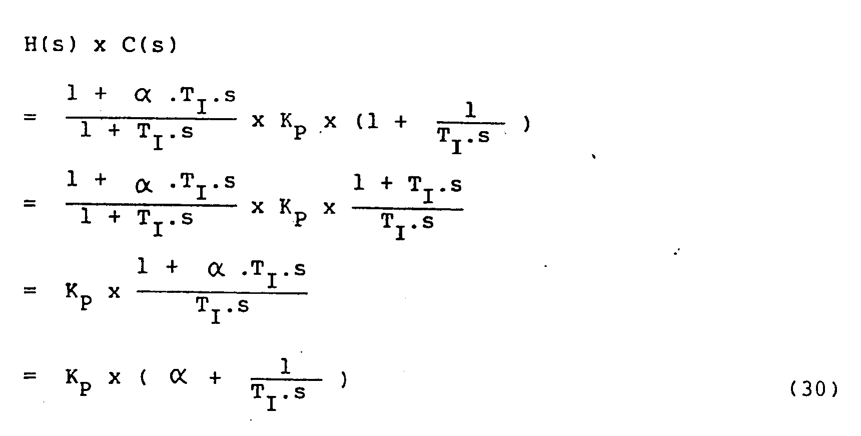
Compared with Eq. (29), the above expression means an addition of a proportional term of K_{P} x α for the changes in the set point value SV, so that it shows that the characteristics for following the changes in the set point value can be improved by varying the value of α, without changing the chracteristics for the exernal disturbances.

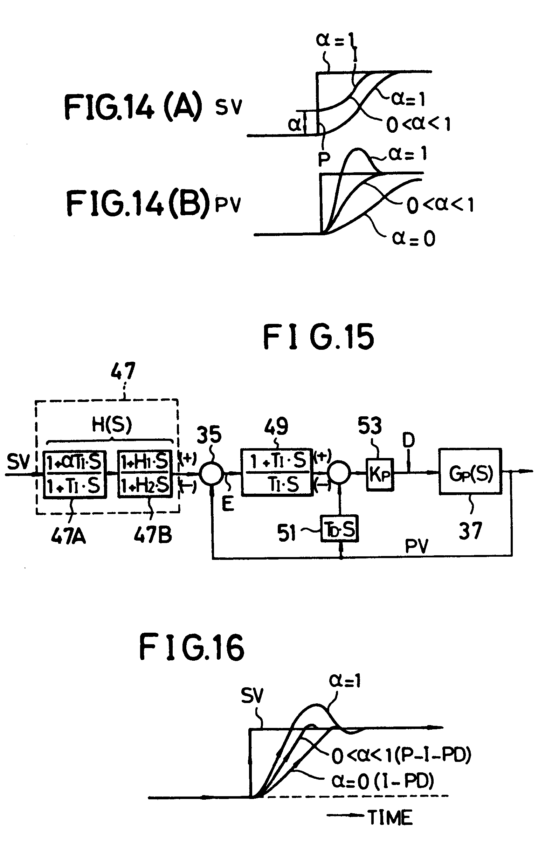

Fig. 14(A) shows the output of the lead/lag operation means 31 for different values of α, namely, for α =0, α =1, and 0< α <1, when there is a step-like change in the set point value SV. On the other hand, Fig. 14(B) shows the changes in the process value PV corresponding to the above cases.

### (2.1) Setting No.2.1 Standard PID Control

When α =1 and δ =1, it leads to H(s)=1, which corresponds to the standard PID control of the prior art.

### (2.2) Setting No.2.2 I-PD Control

When α =0 and δ =0, there is obtained$\text{H(s) =} \frac{\text{1}}{{\text{1 + T}}_{\text{I}} {\text{.s + T}}_{\text{I}} {\text{.T}}_{\text{D}} \text{.s²}} \text{,}$
which corresponds to the PID control with filter for set point value. In this case, the PID parameters for the PID control are set to the optimum parameters for suppressing disturbance, and the parameters for the lead/lag operation means 31 are set also to the same PID parameters. By so arranging, it becomes optimum for the variations in the distrubances and also for the change in the set point value, realizing a two degree of freedom PID control system.

For variations in the process value (PV), it gives${\text{K}}_{\text{P}} \text{(1 +} \frac{\text{1}}{{\text{T}}_{\text{I}} \text{.s}} {\text{+ T}}_{\text{D}} \text{.s)}$
which corresponds to the PID operation.

For changes in the set point value (SV), it leads to 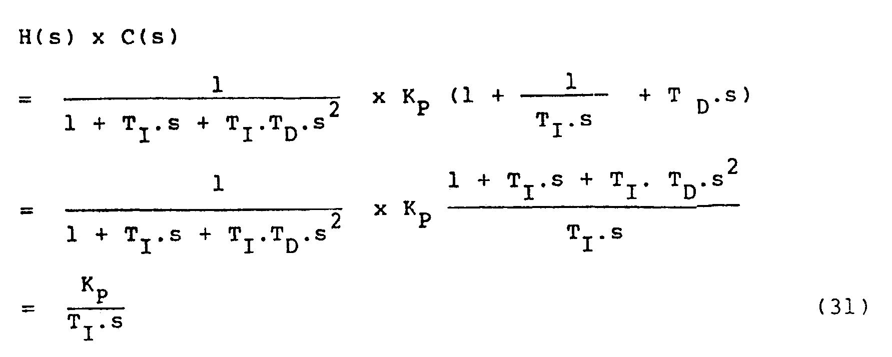
This may be said to correspond to the so-called I-PD control system.

### (2.3)P Setting No.2.3 P-PI-PD Control

When 0< α <1 and δ =0, there is obtained$\text{H(s) =} \frac{{\text{1 + α .T}}_{\text{I}} \text{.s}}{{\text{1 + T}}_{\text{I}} {\text{.s + T}}_{\text{I}} {\text{.T}}_{\text{D}} \text{.s²}}$
This corresponds overall to the P-I-PD control as the following proof indicates. This means that I (integration) operates commonly to the set point value and the process value, P (proportional) sets the values for the variations in the set point value independently of the values for the variations in the process value, and D (differentiation) operates on the process value only.

For changes in the process value, it gives rise to${\text{K}}_{\text{P}} \text{(1 +} \frac{\text{1}}{{\text{T}}_{\text{I}} \text{.s}} {\text{+ T}}_{\text{D}} \text{.s)}$
which corresponds to the PID operation.

For changes in the set point value it leads to 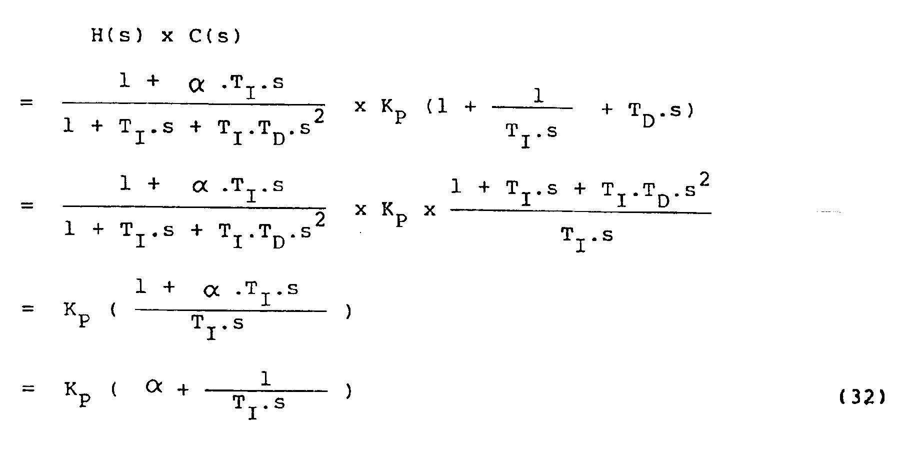
Compared with Eq.(31), these is added a proportional term Kp x for variations in the set point value so that it is possible to improve the characteristics for following the variations in the set point value by varying the value of α, without changing the characteristics for suppressing the disturbances. In other words, it corresponds to the P-I-PD control system.

### (2.4) Setting No.2.4 D-I-PD Control

When α =0 and 0< δ <1, there is obtained$\text{H(s) =} \frac{{\text{1 + δ .T}}_{\text{I}} {\text{.T}}_{\text{D}} \text{.s²}}{{\text{1 + T}}_{\text{I}} {\text{.s + T}}_{\text{I}} {\text{.T}}_{\text{D}} \text{.s²}} \text{,}$
It can be show that this corresponds overall to the D-I-PD control system as the following proof indicates. In other words, for changes in the process value, it gives${\text{K}}_{\text{P}} \text{(1 +} \frac{\text{1}}{{\text{T}}_{\text{I}} \text{.s}} {\text{+ T}}_{\text{D}} \text{.s)}$
which corresponds to the PID operation.

For the set point value it leads to 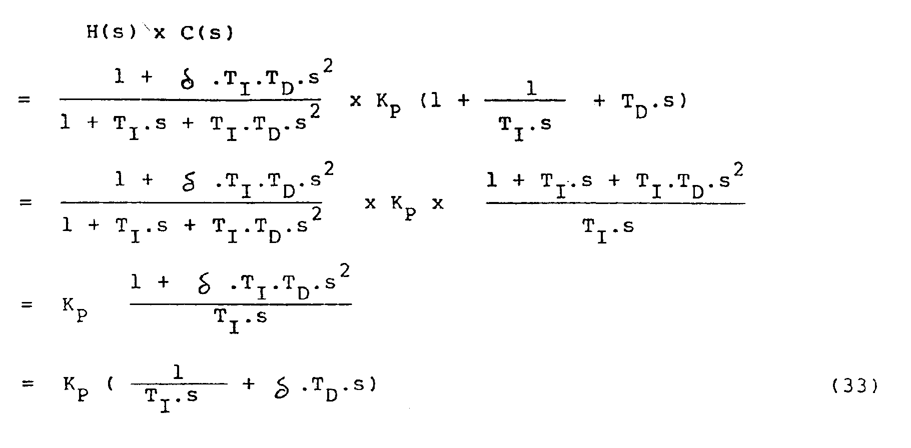
This corresponds to the ID operation for changes in the set point value.

Therefore, summarizing the above results, it corresponds overall to the D-I-PD control system.

### (2.5) Setting No.2.5 PD-I-PD Control

When 0< α <1 and 0< δ <1, there is obtained$\text{H(s) =} \frac{{\text{1 + α .T}}_{\text{I}} {\text{.s + δ .T}}_{\text{I}} {\text{.T}}_{\text{D}} \text{.s²}}{{\text{1 + T}}_{\text{I}} {\text{.s + T}}_{\text{I}} {\text{.T}}_{\text{D}} \text{.s²}} \text{,}$
which corresponds overall to the PD-I-PD control system as the following proof shows.

In other words, for changes in the process value it leads to${\text{K}}_{\text{P}} \text{(1 +} \frac{\text{1}}{{\text{T}}_{\text{I}} \text{.s}} {\text{+ T}}_{\text{D}} \text{.s)}$
which corresponds to the PID operation.

For changes in the set point value, it gives 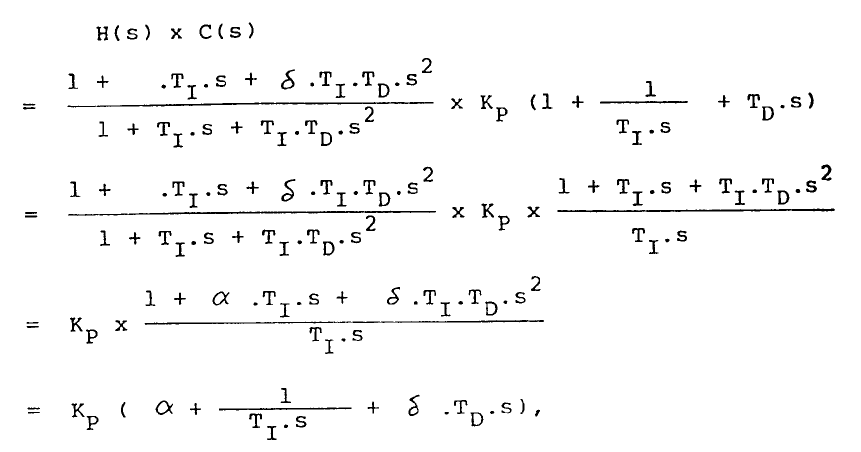
which means that it corresponds to the PID operation for changes in the set point value.

Therefore, summarizing above it corresponds to the PD-I-PD control system.

### (3.1) Setting No. 3.1 PID control with differentiation for PV

In Fig. 15 is shown fourth embodiment of the present invention. In the embodiment, the lead/lag operation means 47 comprises two elements 47 and 47b that are connected in succession.

In this case, the transfer function for the lead/lag operation means and others are shown in Fig. 2. In the table it is set${\text{H₁ = δ .T}}_{\text{D}}$${\text{H₂ = γ . δ .T}}_{\text{D}} \text{= γ .H₁, ( γ = 0.1 - 0.3)}$
Here, γ = 0.1 in the case of analog adjustors, but γ = 0.3 or so is appropriate in the case of digital operation.
(Case of setting to α = 1 and δ = 0)

When α = 1 and δ = 0, the transfer function for the lead/lag element becomes H(s) = 1, which corresponds to the PID control with differentiation for PV of the prior art.

### (3.2) Setting No. 3.2 I - PD control

(Case of setting to α = δ = 0)

When α = δ = 0, the transfer function for the lead 1 lag element becomes$\text{H(s) =} \frac{\text{1}}{{\text{1 + T}}_{\text{I}} \text{.s}}$
This shows that the filter for the set point value becomes the PID control with differentiation for PV, but it can be shown by the following proof that it corresponds to the I-PD control.

For changes in the process value (PV), it gives${\text{K}}_{\text{P}} \text{( 1 +} \frac{\text{1}}{{\text{T}}_{\text{I}} \text{.s}} {\text{+ T}}_{\text{D}} \text{.s )}$
which correspondents to the PID operation.

For changes in the set point value (SV), it leads to 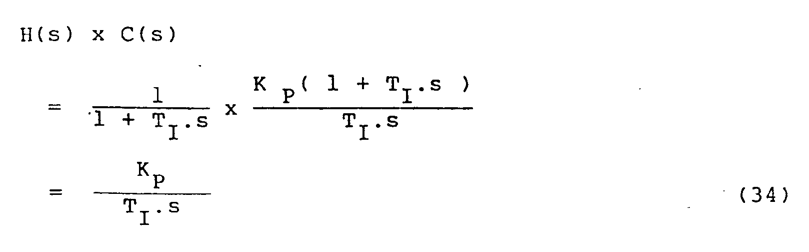
which corresponds to the I operation.

Therefore, it corresponds overall to the so-called I-PD control.

### (3.3) Setting No. 3.3 P-I-PD control

(Case of setting to 0< α <1 and δ = 0)

When 0< α <1 and δ = 0, the transfer function for the lead/lag element is given by$\text{H(s) =} \frac{{\text{1 + α .T}}_{\text{I}} \text{.s}}{{\text{1 + T}}_{\text{I}} \text{.s}}$
which corresponds overall to the P-I PD control as the following proof shows.

For changes in the process value (PV), it gives${\text{K}}_{\text{P}} \text{( 1 +} \frac{\text{1}}{{\text{T}}_{\text{I}} \text{.s}} {\text{+ T}}_{\text{D}} \text{.s )}$
which corresponds to the PID operation.

For changes in the set point value (SV), it leads to 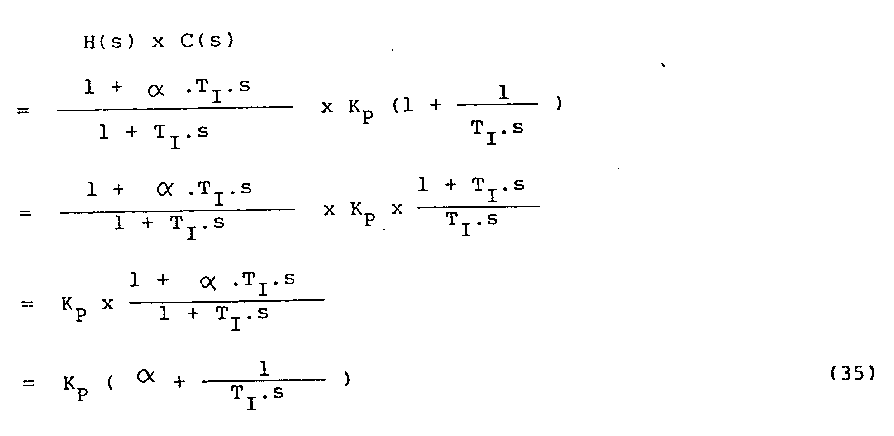
which corresponds to the PI operation.

Therefore, overall it corresponds to the P-I-PD control.

### (3.4) Setting No. 3.4 D-I-PD control

(Case of setting to α 0 and 0< δ <2)

When α = 0 and 0< δ <2, the transfer function for the lead/lag element is given by$\text{H(s) =} \frac{\text{1}}{{\text{1 + T}}_{\text{I}} \text{.s}} \text{x} \frac{\text{1 + H₁.s}}{\text{1 + H₂.s}}$
which may be found to correspond to the D-I-PD control as the following proof shows.

For changes in the process value (PV), it gives${\text{K}}_{\text{P}} \text{( 1 +} \frac{\text{1}}{{\text{T}}_{\text{I}} \text{.s}} {\text{+ T}}_{\text{D}} \text{.s )}$
which corresponds to the PID operation.

For changes in the set point value (SV), it leads to 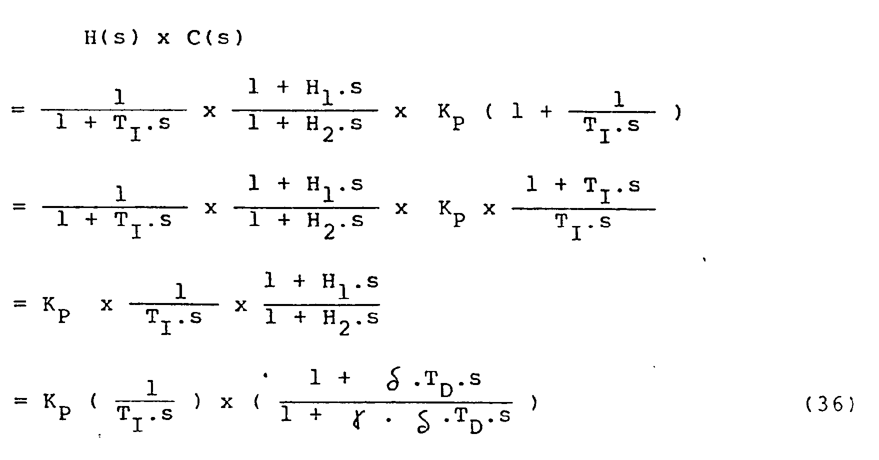
which corresponds to the ID operation.

Therefore, overall it corresponds to the D-I-PD control.

### (3.5) No. 3.5 PD-I-PD control

(Case of setting to 0< α < 1 and 0< δ <2)

When 0< α <1 and 0< δ <1, the transfer function for the lead/lag element becomes$\text{H(s) =} \frac{{\text{1 + α .T}}_{\text{I}} \text{.s}}{{\text{1 + T}}_{\text{I}} \text{.s}} \text{x} \frac{\text{1 + H₁.s}}{\text{1 + H₂.s}}$
which corresponds to the PD-I-PD control by the following proof.

For changes in the process value (PV), it gives${\text{K}}_{\text{P}} \text{( 1 +} \frac{\text{1}}{{\text{T}}_{\text{I}} \text{.s}} {\text{+ T}}_{\text{D}} \text{.s )}$
which corresponds to the PID operation.

For changes in the set point value (SV), it leads to 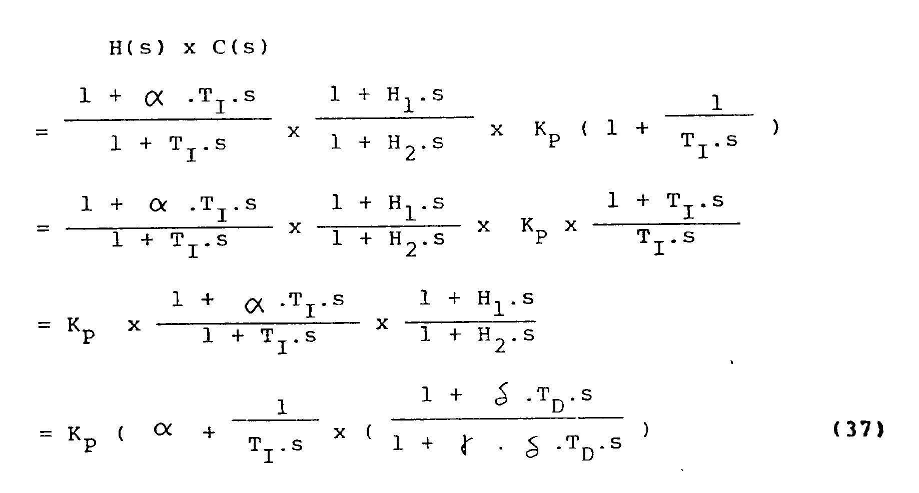
which corresponds to the interference-type PID operation.

Therefore, it corresponds overall to the PD-I-PD control.

### (3.6) Setting No. 3.6 Standard PID

(Case of setting to α = 1 and δ = 1)

When α = 1 and δ = 1, the transfer function for the lead/lag element becomes$\text{H(s) =} \frac{\text{1 + H₁.s}}{\text{1 + H₂.s}}$
which may be seen to corresponds to the standard PID control as the following proof shows.

For changes in the process value (PV), it gives${\text{K}}_{\text{P}} \text{( 1 +} \frac{\text{1}}{{\text{T}}_{\text{I}} \text{.s}} {\text{+ T}}_{\text{D}} \text{.s )}$
which corresponds to the PID operation.

For changes in the set point value (SV), it leads to 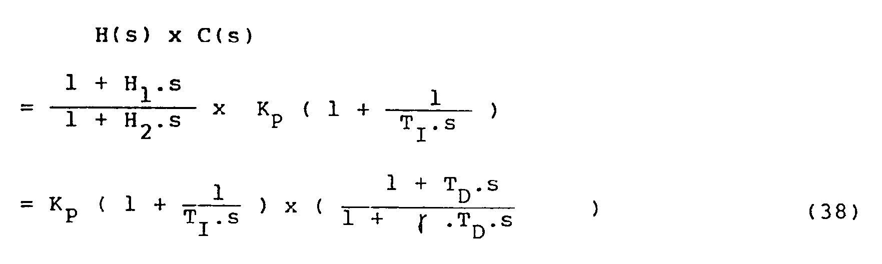
which corresponds to the interference-type PID operation.

Therefore, overall it corresponds to the standard PID control.

### (4) PID-PI control

It is possible to determine transfer functions of the system in Fig. 12 in order to establish a standard PID control system for system transfer function as established in the first embodiment.

In the fifth embodiment, description will be made by using a transfer function for the control operation unit 39 which can carry out both operations of proportional and integration as shown by Eq. (39), for the reason of simplifying the explanation. As in the foregoing embodiment, it is of course true that the operation may be combined with proportional or differential operation in any way one pleased if it includes at least an integral operation.

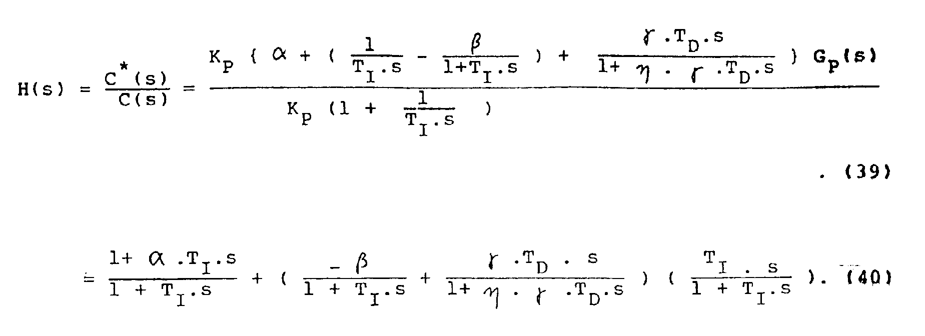

In Eq. (40),$\frac{{\text{1+ α .T}}_{\text{I}} \text{.s}}{{\text{1 + T}}_{\text{I}} \text{.s}}$ is the proportional gain compensation component for lead/lag element,$\text{(} \frac{\text{- β}}{{\text{1+T}}_{\text{I}} \text{.s}} \text{) (} \frac{{\text{T}}_{\text{I}} \text{.s}}{{\text{1+T}}_{\text{I}} \text{.s}} \text{)}$ 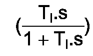 is the compensation component for the equivalent integral time due to first order lag element, and$\text{(} \frac{{\text{γ .T}}_{\text{D}} \text{.s}}{{\text{1+ η . γ .T}}_{\text{D}} \text{.s}} \text{) (} \frac{{\text{T}}_{\text{I}} \text{.s}}{{\text{1+T}}_{\text{I}} \text{.s}} \text{)}$ is the compensation component for the integral time. A functional block diagram for these elements is as shown by Fig. 12.

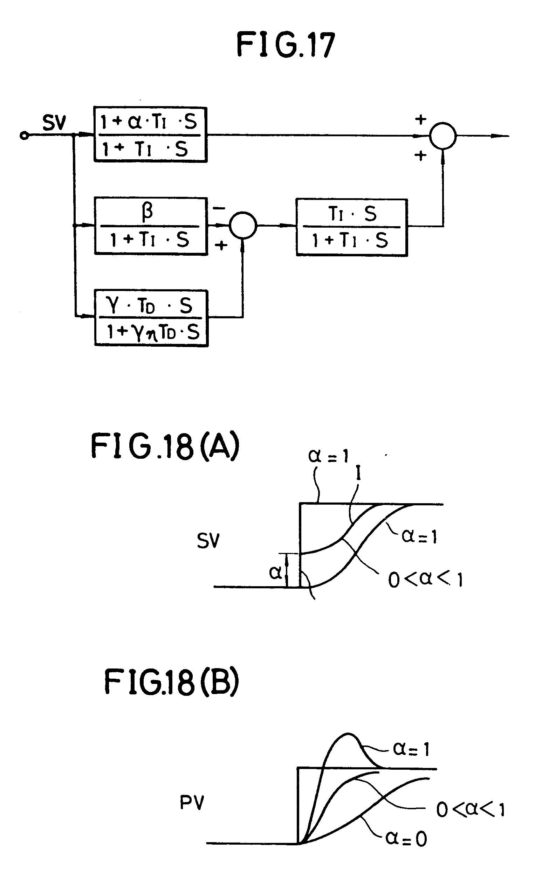

The proportional gain compensation component as shown by Fig. 18(A) can compensate a step-like change in the set point value SV as a combination of a gain corrresponding to the value of due to lead element and a first order lag function due to lag element. The response to the control value PV is as shown by Fig. 18(B).

According to the response given by Fig. 18(B), when α = 0, namely, when the change in the set point value SV consists only of a first order function, there is generated no overshoot but there is a lag in rising. When α ≧ 1 the control value PV is overshot markedly because the change in the set point value is output to the control operation unit 11 as is or multiplied by α. Under such a circumstance, the response to the control value PV is adjusted to the optimum condition by varying the value of α, so that α can be determined similarly to the case of Eq. (7). Further, the lead/lag operation for the proportional gain compensation can adopt various kinds of construction, for instance, the form of second order transfer function or the like.

Further, with respect to the compensational component for the integral time, as explained in conjunction with Fig. 2, it is constructed in the present embodiment, too, so as to change the integral time equivalently by a lag element, in order to satisfy the final value theorem. The adjusting parameter β is determined similarly to that of the first embodiment.

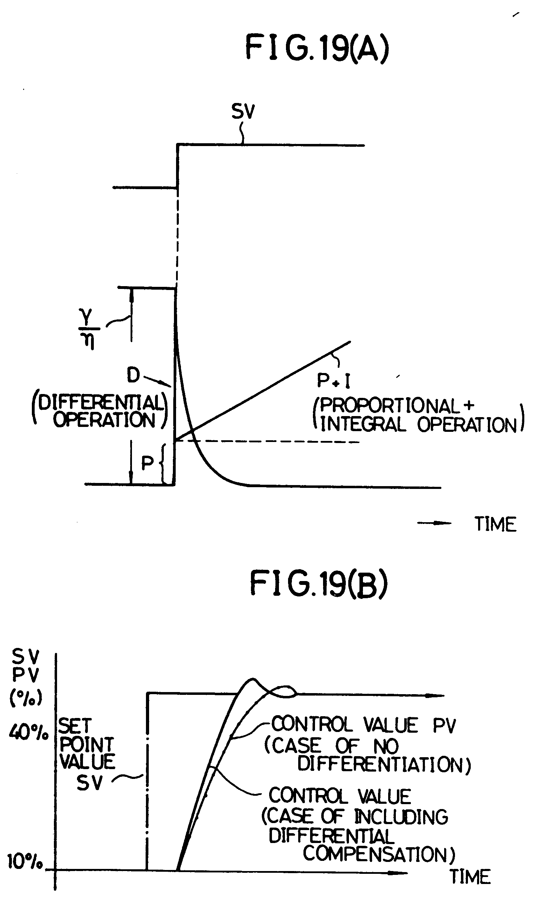

Moreover, the compensational component for the derivative time changes the amount of imperfect differentiation corresponding to the change in the set point value SV, by means of the adjusting parameter γ as shown by Fig. 19(A). By this, the response to the control value PV can be improved as to the rising characteristics with almost no influence on the overshoot.

Next, the operation of the sixth embodiment will be described. Since the adjusting method for the control constants and the adjusting parameters is similar to that in the foregoing embodiment so that further explanation will be omitted.

First, when an disturbance D is impressed on the controlled object 37, the control operation unit 39 carries out each of the proportional, integral, and differential operations based on the control constants K_{P}, T_{I}, and T_{D}, that are set to the characteristics condition, in order to suppress quickly the change in the control value PV. The adjusted output is supplied to the controlled object 37 as the manupulated value MV. When there is a change in the set point value SV in this state, the change is corrected, by the proportional, integral, and differential compensation operations, on the changed value SV′ which virtually corrects the control constants K_{P}, T_{I}, and T_{D} in the control operation unit 39 to the optimum characteristics condition for following the set point value K_{P}*, T_{I}*, and T_{D}*. The changed value SV′ is compared with the control value PV at the deviation operation unit 35, and the deviation E is supplied to the control operation unit 39. At the control operation unit 39, operation is applied to the deviaiton E to give an optimum characteristics condition for suppressing the disturbance. Since, however, compensation is given boforehand to the changed amount in the set point value, it is output to the controlled object 37 as a manipulated value MV in the optimum characteristics condition for following the set point value. In this way, the controlled object 37 responds optimally to both of the disturbance D and the set point value SV.

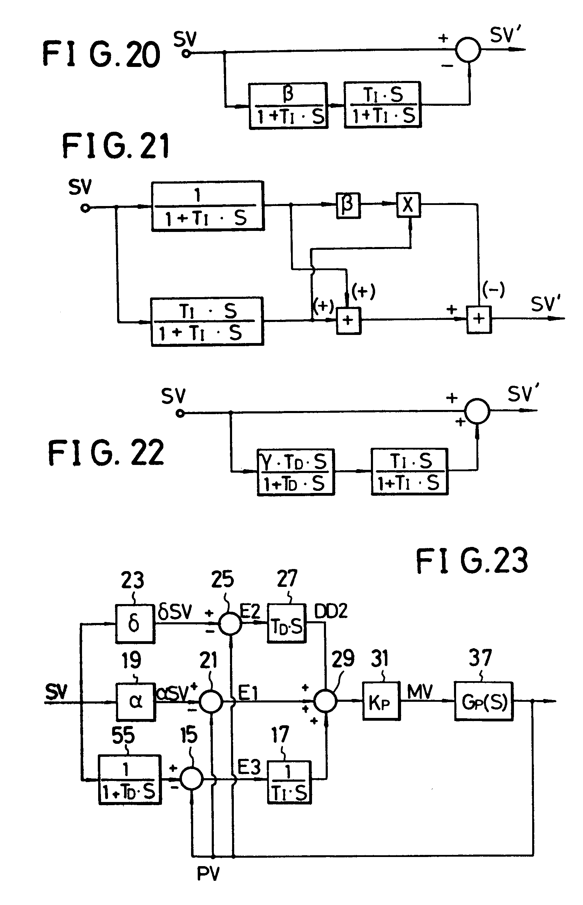

In the second embodiment, similar to the foregoing embodiments, description was made assuming that all of the proportional, integral, and differential operations at both of the control operation unit 39 and the compensation operation unit 47. In the present embodiment, however, if the control operation unit 39 includes at least an integral operation and the compensation operation unit 47 has a construction that can carry out a corresponding compensating operation, for example, a construction shown by Fig. 20 (according to which an integral compensation alone can be realized), the rest can be combined selectively depending upon the desired process response.

Moreover, when the block construction is to be simplified by achieving identical functions as in the construction shown in Fig. 12, it may be organized as shown by Fig. 15.

Still further, when the differential compensation operation alone is to be carried out in the compensation operation unit 47, it needs only to set α and β in Eq. (40) to zero so that it may be constructed as in Fig. 16. The differentiation in it includes both of the perfect and imperfect differentiations as before.

Referring to Fig. 23 a sixth emobidment of the invention is shown which is of a separated operation type.

As shown in the figure, the controller has special features that differ from the PID controller as shown in Fig. 4 in that it is provided with a first order lag filter 55 in the integral control element.

In this embodiment, first the set point value SV is input in parallel to the first coefficient unit 19, the second coefficient unit 23, and the first order lag filter 55. In the first coefficient unit 19, the set point value SV is multiplied by a coefficient α, and the deviation E₁ is computed at a first subtractor 25 between the output α SV and the process value PV detected at a controlled object 37. In the second coefficient unit 23, the set point value SV is multiplied by a coefficient δ, the output δ SV is input to a second subtractor 25, the deviation E₂ between the process value PV is computed, and the deviation E₂ undergoes a differential operation with derivative time T_{D} in a differential operation unit 27. The first order lag filter 55 is for outputting the set point value SV by giving it a time delay corresponding to its change, its output is input to a third subtractor 15 to have the deviation E₃ between the process value PV computed, and the deviation E₃ undergoes an integral operation with an integral time T_{I} in an integral operation unit 17.

Then, the deviation E₁, the differentiated value of the deviation obtained by the differential operation unit 27, and the integrated value of the deviation E₃ by the integral operation unit 17 are input to an adder 29, and after synthesizing them by addition the result is input to a proportional unit 31 where it is multiplied by a proportional gain Kₚ, and the result is impressed to the controlled object 11 as a manipulated signal MV. By the above arrangement, control is carried out to equalize the process value PV and the set point value SV.

In a construction like in the above, it is arranged to be able to optinize simultaneously both of "set point value following" and "distruvance suppression", by setting the PID parameters K_{P}, T_{I}, and T_{D}, coefficients α and δ, and the time const Tₒ of the first order lag filter 55.
(I) First, each of the PID parameters Kₚ, T_{I}, and T_{D} are set to the optimum parameters for disturbance.
   As may be seen from its construction, the controller 1 works in identical manner as the standrdd PID controller for the process value PV. Therefore, by the above setting, there will be obtained for the process value PV an operation in accordance with the optimum parameters for disturbance K_{P}, T_{I}, and T_{D} so that the response to the distrubances will be satisfactory.
(II) Next, the coefficients α and δ are set as follows based on the optimum proportional gain of or disturbance K_{P}, the optimum derivative time for disturbance T_{D} the optimum proportional gain for set point value K_{P}*, the optimum derivative time for set point value T_{D}*, among the optimum parameters for disturbance and for set point value of the standard PID controller.${\text{α = K}}_{\text{P}} {\text{* / K}}_{\text{P}} \text{,}$${\text{δ = α x T}}_{\text{D}} {\text{* / T}}_{\text{D}} \text{.}$
   In the controller 1, the actual proportional gain is α x K_{P} and the actual derivative time is δ x K_{P} x T_{D}, for the set point value SV due to the action of the coefficient α and δ. Therefore, by setting the coefficients α and δ as in the above, the actual proportional gain and the actual derivative time for the set point value SV become K_{P}* and K_{P}* x T_{D}*, respectively, since K_{P} and T_{D} are set already to K_{P} and T_{D}. Namely, for the set point value SV there are obtained proportaional and differential operations which are the same as setting the standard PID controller to the optimum parameters for set point value K_{P}*, T_{I}*, and T_{D}*.
(III) Next, by adjusting the time constant Tₒ, the actual integral time for the set point value SV is controlled to be equal to the integral time T_{I}*/K_{P}* that is obtainable when the standard PID controller is set to the optimum parameters for set point value K_{P}*, T_{I}*, and T_{D}*.

The adjustment of the time constant Tₒ may be done, for example, as taught in the foregoing description for the first embodiment.

In step (I), the integral time T_{I} for the integral operation unit 17 is being set to the optimum integral time Tₒᵣ distrubance. Therefore, the transfer function for integral operation for the set point value SV becomes${\text{1/(T}}_{\text{I}} {\text{.s.(1 + To.s)) = 1/( T}}_{\text{I}} {\text{.s) - (To/T}}_{\text{I}} \text{)/(1 + To.s)}$

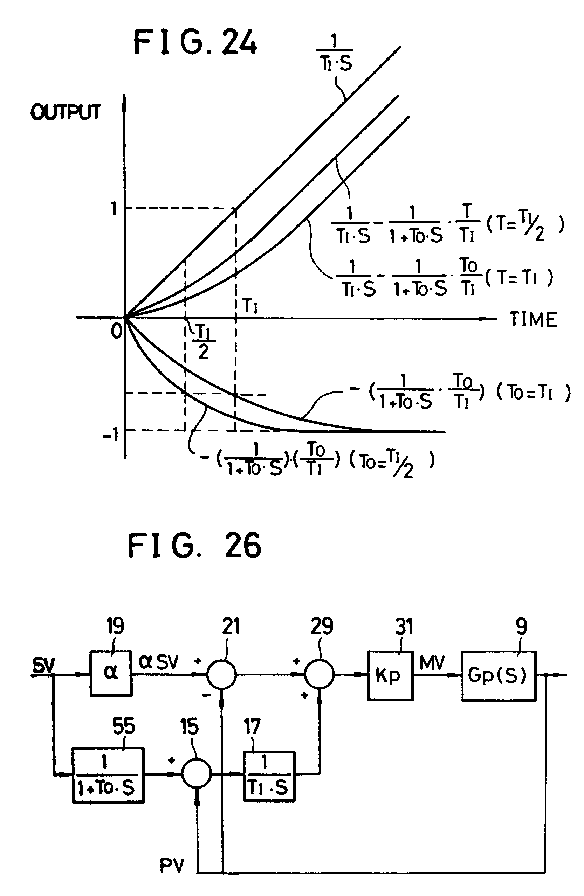

The response characteristics of the output ID₃ for a unit step input of the transfer function Gᵢ(s) are shown in Fig. 24. In this figure is shown the response of the system when To = T_{I}/2 or T_{I}, as well as the response of the first order lag filter 79 alone.

Here, for changes in input, the controller is used in general in a region of small value of time, for example, in the region of time which is less than the time T₁ of the figure. Therefore, an increase in the time constant Tₒ corresponds to a decrease in the slope of rise of the curve which is roughly equivalent to an increase in the integral time T_{I}/2 for the set point value SV. Therefore, one need only to increase the time constant Tₒ gradually from "0" to set it to a value for which the actual integral time for the set point value SV is equivalent to the case of setting the proportional gain K_{P} to the optimum proportional gain K_{P}* for set point value and the integral time T_{I} to the optimum integral time T_{I}* for set point value.

By setting the coefficients α and δ and the time constant Tₒ as in the steps (II) and (III), these can be obtained a control operation which follows the optimum parameters for set point value K_{P}*, T_{I}*, and T_{D}*, so that there is obtained a response that is satisfactory in following the set point value.

In what follows there will be described the operating procedure of the operator and the setting method of the parameters for steps (I), (II), and (III), by the use of the astatic process model.
(I) First,the operator changes the set point value stepwise by predetermined amount in the state prior to varying the coefficients α and δ for optimizing for the set point value, in order to set the PID parameters K_{P}, T_{I}, and T_{D} to the optimum parameters for disturbance. Then, this change generates in the process variations in the process value PV that are similar to variations due to disturbances, and the optimum parameters for disturbance are adjusted to optimize these variations. An example of such operation is shown in Fig. 5 with K_{P}= 0.188, T_{I} = 14.6 (min.), and T_{D} = 1.98 (min.).
(II) Once parameters for disturbance are set in step (I), the operator sets next the coeffficients α and δ in order to optimize the variations due to set point value.
   Namely, it will be seen from Fig. 5 that the optimum proportional gain for disturbance K_{P}, the optimum proportional gain for set point value K_{P}*, the optimum derivative time for disturbance T_{D}, and the optimum derivative time for set point value T_{D}* are given respectively by the following.
   K_{P} = 0.118 , K_{P}* = 0.126 ,
   T_{D} = 1.98 (min.) , T_{D}* = 2.04 (min.) ,
   By substituting the above values into Eqs. (2) and (3) the coefficients are set as${\text{α = K}}_{\text{P}} {\text{* / K}}_{\text{P}} \text{= 0.126 / 0.188 = 0.67,} {\text{δ = x T}}_{\text{D}} {\text{* / T}}_{\text{D}} \text{= 0.67 x 2.04 / 1.98 = 0.69.}$
(III) Next, the time constant Tₒ is set as follows.
   Namely, since the integral time T_{I} is set to the optimum integral time for disturbance T_{I} = 14.6 (min.), the time constant Tₒ needs only be set for the set point value SV as if it is set to the optimum integral time for set point value of T_{I}* = ∞. For instance, the choice of Tₒ = T_{I} = 14.6 (min.) is sufficient for practical purposes.

Through the setting in each of the steps (I), (II), and (III) there will be obtained a response of the controller 1 which is for a step disturbance similar to the case where the standard PID controller is set to the optimum parameters for disturbance K_{P}, T_{I}, and T_{D} as shown by the curve (A) of Fig. 6, and is for a unit step change in the set point value SV similar to the case where the standard PID controller is set to the optimum parameters for set point value K_{P}*, T_{I}*, and T_{D}* as shown by the curve (C) of Fig. 7. In other words, the process can be optimized for both of "disturbance suppression" and "set point value following."

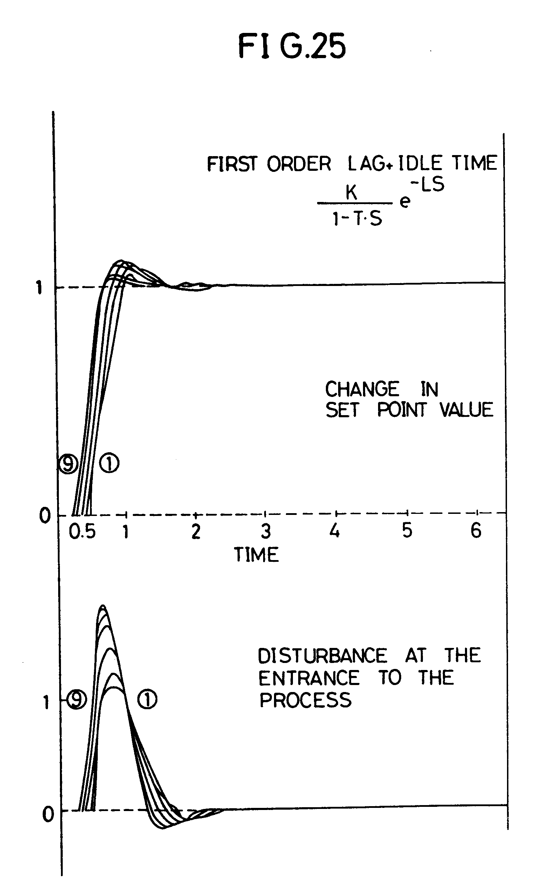

As a result, the response for a unit step in the case when the process 11 is constructed, for example, by an element "first order lag + dead time" is as shown in Fig. 25. Namely, the controllability against variations in disturbance is satisfactory without generating offset even when the time constant Tₒ is increase, while the controllability for variations in set point value has a high degree of following with small overshoot.

In addition, in this controller there is no need for carrying out for the entirety of the controller a complicated processing which determines control parameters by simultaneously considering the responsiveness of the controller to the disturbances and the variations in the set point value, in order to optimize the response to the disturbances and to the variations in the set point value. That is, the adjustment is extremely easy requiring a simple setting processing as shown by the steps (I) through (III) separately and independently for each control loop, and is eventually sufficient by an adjustment on the console by the operator.

It should be noted that the optimization of an astatic process explained in the above is the most difficult, but the optimization will further be facilitated if it is a "first order lag + idle time" process ( e^{-L} S/ (1+T₁.S) ) or a "second order lag + dead time" process ( e^{-L} S/ (1+T₁.S) / ( 1-T₂.S) ), since the optimum integral time for set point value T_{I}* will never become infinity.

Furthermore, it should be recognized that the various control systems in the past can be selected by setting the coefficients α and δ to "1" or "0". For example, if the time const is chosen Tₒ = 0, there will be obtained the following.
(I) When α = δ = 1
   This corresponds to do away with the first and the second coefficient units 3 and 5, which is equivalent to the standard PID controller.
(II) When α = 1 and δ = 0
   This corresponds to applying the differentiation action to the process value PV alone, which is equivalent to the PID controller with PV differentiation.
(III) When α = 0 and δ = 0
   This corresponds to applying the proportional and differential actions to the process value PV alone, which is equivalent to the I-PD controller.

As in the above, the process controller in accordance with the present embodiment eliminates defects in the prior technilogy, and at the same time, possesses a high degree of controllability and a wide general us ability with the possibility of freely selecting various kinds of prior control systems.

Consequently, by the application of the controller 1 scattered within the plant, it becomes possible to optimize each control of the plant for both of disturbances and changes in the set point value. Therefore, it is possible to responds more effectively to the severe requirements in recent years that were mentioned earlier, with an extremely significant contribution to the industry.

It is to be noted in the above embodiment that description was made in conjunction with the perfect differentiation (T_{D}.s). However, for practical purposes, use will be made of an imperfect differentiation (T_{D} / (1 + γ.T_{D}.s), γ = 0.2 - 0.3.

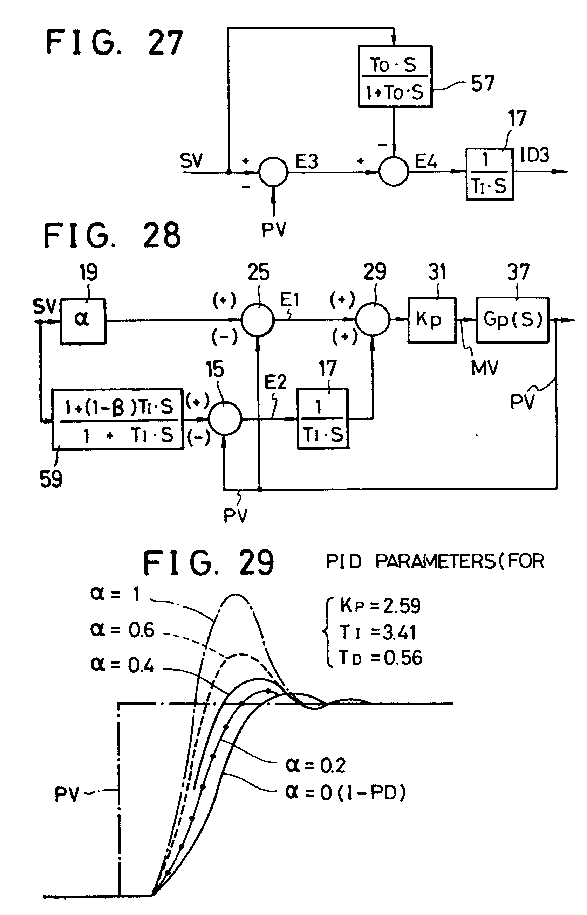

In Fig. 26 is shown a block diagram for the controller concerning a seventh embodiment of the present invention.

As shown in the figure, the controller 31 corresponds to the former embodiment from which are omitted the second coefficient unit 23 concerned with differentiation action and the second subtractor 25 and the differential operation unit 27, and may be applied to the case in which the PI control is sufficient for some processes.

In this embodiment, too, it is possible to optimize simultaneously both of "set point value following" and "disturbance suppression" within the range of the PI control similar to the case of the foregoing embodiments. Moreover, the following can be considered as modifications to the embodiments.
(I) The first order lag filter 55 may be modified as follows.${\text{1 / (1 + T}}_{\text{o}} {\text{.s) = 1 - T}}_{\text{o}} {\text{.s / (1 + T}}_{\text{o}} \text{.s) .}$
   Therefore, it will also be equivalent to arranging the integral action part, as shown in Fig. 27, to computer the deviation E₄ between the set point value SV and the process value PV, to computer the deviaiton E₃ between the deviation E₄ and the value of the set point value SV that went through a filter 57 that corresponds to the second term in the above expression, and to add the deviation E₃ to an integrator 17.
(II) In order to be able to carry out adjustment for the actual proportional gain indepently of the differential and integral actions, there may be added anew a coefficient unit at a position between the first subtractor 21 and the adder 29 or shifting the proportional unit 31 to this position.
(III) New coefficient units may be inserted respectively on the inputting routes of the process value PV to the first, second, and third subtractor 21, 25, and 15, suspectively. By so arranging, the optimal adjustment will further become facilitated.

Figure 28 is a functional block diagram for illustrating the construction of an seventh embodiment of the device in accordance with the present invention.

In the present embodiment, in place of the unit in Fig. 26 the operational expression for the lead/lag operation unit 59 is given by the following equation.$\frac{{\text{1 + (1 - β ). T}}_{\text{I}} \text{. s}}{{\text{1 + T}}_{\text{I}} \text{. s}} \text{,}$
As may be clear from the figure, there is given an operational adjustment${\text{K}}_{\text{P}} \text{( 1 +} \frac{\text{1}}{{\text{T}}_{\text{I}} \text{. s}} \text{)}$
for a change in the process value PV or${\text{K}}_{\text{P}} \text{[ +} \frac{{\text{1 + (1- β )T}}_{\text{I}} \text{. s}}{{\text{1 + T}}_{\text{I}} \text{. s}} \text{.} \frac{\text{1}}{{\text{T}}_{\text{I}} \text{. s}}$
for a change in the set point value. Here, the proportional gain K_{P} and the integral time T_{I} are set to the optimum parameters for suppressing disturbance.

In Eq. (45), for a change in the set point value SV, it is arranged to vary equivalently the integral time alone, by varying the coefficient α and the coefficient β in the lead/lag operation unit 59 for the set point value, with the integration term for disturbance fixed at a constant value.

If the integration term in Eq. (45) is rearanged, there is obtained the following result.

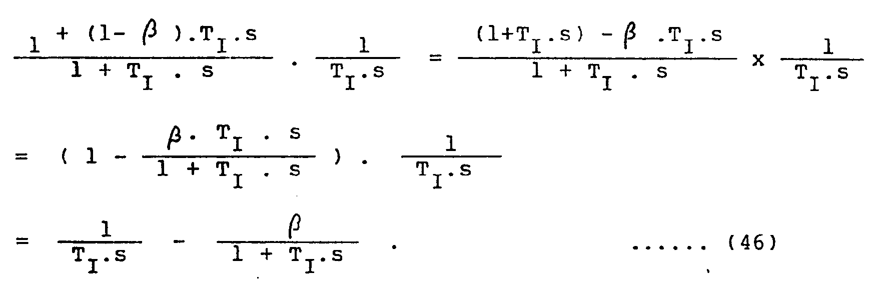

In the above equation (46), the first term on the right-hand side is an integration term with integral time T_{I} and the second term is an integrated adjustment term due to the lead/lag operation unit 5. Therefore, it is possible to vary the integral time Tₑ (equivalent integral time) for a change in the set point value by varying the coefficient β in the integrated adjustment term of Eq. (46).

When β = 0 in Eq. (46), it corresponds to the case where there is no adjustment for the integral time, and there results equivalent integral time Tₑ = integral time T_{I}.

Moreover, when β > 0, there results equivalent integral time Tₑ > integral time T_{I}.

Furthermore, when β < 0, it is easy to understand that one has equivalent integral time Tₑ < integral time T_{I}. Therefore, once the optimum integral time for suppressing disturbance T_{I} is determined, the equivalent integral time Tₑ can be varied easily by varying the coefficient β in the same manner as the first embodiment.

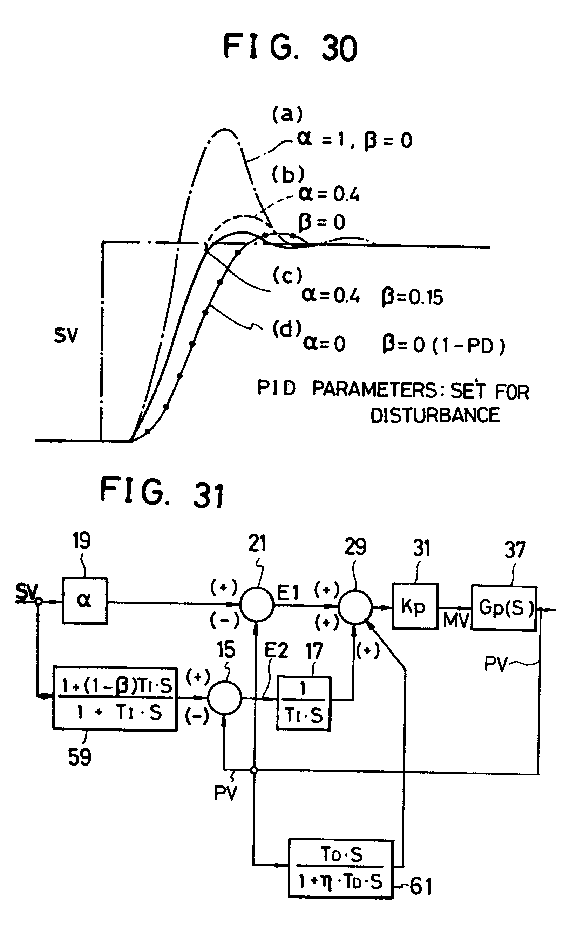

Then, the coefficients α and β are corrected to bring the response to the optimum condition of characteristics for following the set point value. For instance, when a simulation is carried out by using a transfer function${\text{G}}_{\text{p}} \text{(s) =} \frac{\text{1}}{\text{1+5s}} {\text{e}}^{\text{-2L}}$ for a control object 15, the response varies as shown in Figs. 29 and 30 according to the values of the coefficients α and β.

Changes in the coefficient which adjusts the proportional gain Kₚ among the control constants, permits one to select the characteristics of the rise of the response curve and the state of overshooting of the curve, as shown in Fig. 29, by changing in the range 0 ≦ α ≦ 1. Further, the coefficient β is for changing the integral time T_{I}, and by varying its value it is possible to improve the overshoot of the response curve as shown in Fig. 30, without affecting the rising of the response curve. Actual simulation revealed that optimum characteristic's are obtainable for α = 0.4 and β = 0.15.

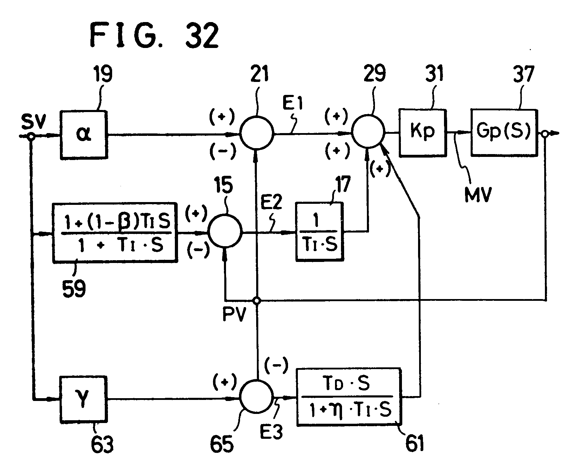

In Fig. 31 there is shown a embodiment of the device in accordance with the present invention, and in Fig. 32 is shown a ninth embodiment of the device in accordance with the present invention, and in Fig. 32 is shown still another embodiment of the device in accordance with the present invention. Here, components that are idential to those for the embodiment shown in Fig. 28 are assigned identical symbols to omit further explanation.

The embodiment shown in Fig. 31 is the so-called PID controller with differentiation on PV. At a differential operation unit 61, differential operation is applied to the process value PV, and its output signal is additively synthesized in an adder 29 together with the deviations E₁ and E₂. The other components are similar to the embodiment shown in Fig. 28.

Further, the embodiment shown in Fig. 32 is the PID controller of the imperfect differential operation type. The set point value SV is multiplied by a coefficient γ at a coefficient unit, and a deviation E₃ (= γ SV - PV) is obtained in a subtractor 65 by subtracting the process value PV from the output signal γ SV of the coefficient unit 63. Differential operation is applied to the deviation E₃ in a differential operation unit 61, and its output signal is additively synthesized in the adder 29 together with the deviations E₁ and E₂.

Since an integral adjustment due to the lead/lag operation unit 5 is carried out also in the embodiments shown in Figs. 31 and 32, it is possible to change the integral time easily by varying the coefficient β.

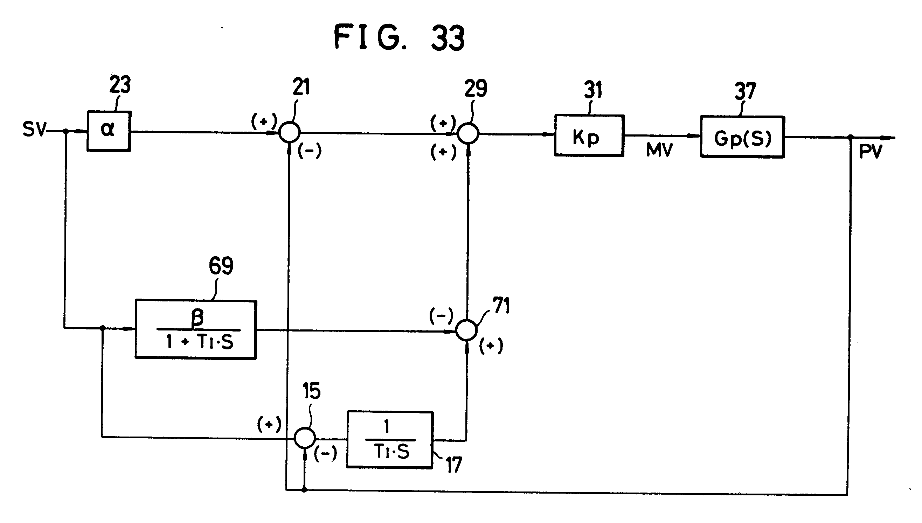

In Fig. 33 is shown a tenth embodiment of the process controller in accordance with the present invention. Here, the components that are identical to those for the embodiment shown in Fig. 33 are given identical symbols to omit further explanation.

In this process controller, the set point value is input to both of the coefficient 1 and a lag operation unit 69, as well as it is input to the integral operation unit 17 after the process value PV is subtracted from it in the subtractor 15. The output signal that is computed for the lag in the lag operation unit 69 and the output signal which is integrally operated in the integral operation unit 17 are subtractively processed in a subtractor 71, and the result is output to the adder 29.

To be more concrete, the lag operation unit 69 is set to a first order lag represented by β/(1 + T_{I}.s) so that the output signal from the subtractor 71 to the adder 29 has an expression shown below.$\text{(} \frac{\text{1}}{{\text{T}}_{\text{I}} \text{.s}} \text{-} \frac{\text{β}}{{\text{1 + T}}_{\text{I}} \text{.s}} \text{) SV -} \frac{\text{1}}{{\text{T}}_{\text{I}} \text{.s}} \text{PV .}$

Therefore, the subtractor 7 and 71, integral operation unit 17, and the lag operation unit 69 for a lead/lag operation means so that the manipulated signal MV can be represented as follows.${\text{MV = K}}_{\text{P}} \text{{ ( α +} \frac{\text{1}}{{\text{T}}_{\text{I}} \text{.s}} \text{-} \frac{\text{β}}{{\text{1+T}}_{\text{I}} \text{.s}} \text{) SV - (1 +} \frac{\text{1}}{{\text{T}}_{\text{I}} \text{.s}} \text{) PV }.}$
It will be seen from the above that in the process controller of the present embodiment a control similar to that for the case shown by Fig. 28 will be carried out. Namely, for a change in the set point value SV, it is possible to vary equivalently only the integral time for the set point value change, by varying the coefficients α and β, with the integration term for disturbance kept fixed. In addition, in contrast to the case of Fig. 28 in which a lead/lag operation unit was required to vary the integral time, the present embodiment has an advantage that it does not need such a complicated operation unit, but can be constructed with a simple first order lag element.

### [process value Compensation Type]

It is also possible to constitute improved process control system with two degrees of freedom by provision of adjusting means for element(s) which operates the process value to be feedbacked.

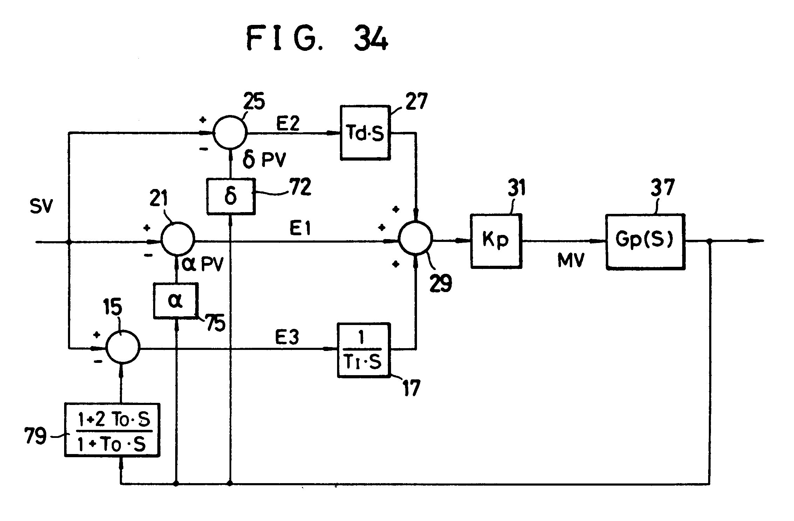

Such a process controller is shown in Fig. 34 as a eleventh embodiment of the invention. The controller is different from the sixth emobidment as illustrated in Fig. 23 in that, in stead of the coefficient units 19 and 23 to operate the set point value SV, there are provided a first coefficient unit 75, a second coefficient unit 77 and a lead element 79 with transfer function (1 + 2.To.s)/(1 + To.s), in the inputting routes of the process value PV.

Namely, first, the process value PV is input in parallel with the first coefficient unit 75, the second coefficient unit 77, and the lead element 79. The process value PV is multiplied by the coefficient α in the first coefficient unit 75, and its output α PV is input to a first subtractor 21 where the deviation E₁ from the set point value SV is computed. In the second coefficient unit 75, the process value PV is multiplied by δ, its output δ PV is input to a second subtractor 25 where the deviation E₂ from the set point value SV is computed, and the deviation E₂ undergoes a differential operation with the derivative time T_{D} in a differential operation unit 27. Further, the output LPV from the lead element 79 obtained from the process value PV is input to a third subtractor 15 where the deviation E₃ from the set point value SV is computed, and the deviation E₃ undergoes an integral operation with the integral time T_{I} in an integral operation unit 17.

Then, the deviation E₁, the differentiated value of the deviation E₂ by the differential opertion unit 27, and the integrated value of the deviation E₃ by the integral operation unit 17 are input to an adder 29 where they are synthesized additively. After the result is input to a proportional operation unit 31 where it is multiplied by the proportional gain Kp, it is impressed on the control object 37 as a manipulated signal MV. In this way, the process value PV is controlled to become equal to the set point value SV. set as in the above, the actual proportional gain and the actual derivative time for the process value PV are K_{P} and K_{P} x T_{D}, respectively, as K_{P} and T_{D} are set already to K_{P}* and K_{P}. Namely, for the process value, there will be obtained a proportional and differential operation which is similar to that when the standard PID controller is set to the optimum parameters for disturbance K_{P}, T_{I}, and T_{D}.

(III) Next, the actual integral time for the process value PV is made, by adjusting the time constant To, to be equal to the actual integral time T_{I}*/K_{P} which is obtainable by setting the parameters for the standard PID controller to the optimum parameters for disturbance Kₚ*, T_{I}*, and T_{D}*.

The time constant To may be adjusted as taught in the manner explained in conjunction with the sixth embodiment. Namely the integral term operative to disturbances can be rearranged as follows.$\text{(} \frac{\text{1 + 2To.s}}{\text{1 + To.s}} \text{).(} \frac{\text{1}}{{\text{T}}_{\text{I}} \text{.s}} \text{) =} \frac{\text{1}}{{\text{T}}_{\text{I}} \text{.s}} \text{+} \frac{\text{To}}{{\text{T}}_{\text{I}}} \text{(} \frac{\text{1}}{\text{1 + To.s}} \text{)}$
As understood from the above equation in this embodiment when To increases the integral time decreases, different from the sixth embodiment in which the integral time increases when To increases. In this connection it also can be constituted so as to make enable the adjusting manner similar to that of the seventh emobidment by substituting the following equation in place of that of the above equation.

With such a construction for the controller, it becomes possible to optimize the process for both of "set point value following" and "disturbance suppression" by setting the PID parameters Kₚ, T_{I}, and T_{D}, the coefficients α and δ, and the time constant Tₒ of the lead element 79 as in the following.
(I) First, the PID parameters K_{P}, T_{I}, and T_{D} are set to the optimum parameters for set point value K_{P}*, T_{I}*, and T_{D}* of the standard PID controller.
   The controller behaves identically to the standard PID controller, as may be seen from its construction. Therefore, by the above setting, there are obtained for the set point value SV an operation that follows the optimum parameters for set point value K_{P}*, T_{I}*, and T_{D}* so that the response of the controller for the set point value SV is satisfactory.
(II) Next, the coefficients α and δ are set as follows based on the optimum proportional gain for disturbance K_{P}, optimum derivative time for disturbance T_{D}, optimum proportional gain for set point value K_{P}*, and optimum derivative time for set point value T_{D}*, among the optimum parameters for disturbance and for set point value of the standard PID controller.${\text{α = K}}_{\text{P}} {\text{/ K}}_{\text{P}} \text{*,}$${\text{δ = α x TD / T}}_{\text{D}} \text{*}$

In this controller, by the action of the coefficients α and δ, the actual proportional gain and the actual derivative time for the process value PV are α x K_{P} and δ x K_{P} x T_{D}, respectively. Therefore, when the coefficients α and δ are$\frac{{\text{1 + (1 + δ )T}}_{\text{I}} \text{.s}}{{\text{1 + T}}_{\text{I}} \text{.s}}$
In this case the integral term becomes$\text{(} \frac{{\text{1 + (1+ δ )T}}_{\text{I}} \text{.s}}{{\text{1 + T}}_{\text{I}} \text{.s}} \text{)(} \frac{\text{1}}{{\text{T}}_{\text{I}} \text{.s}} \text{) =} \frac{\text{1}}{{\text{T}}_{\text{I}} \text{.s}} \text{+} \frac{\text{δ}}{{\text{1 + T}}_{\text{I}} \text{.s}}$
According to this system an adjustment of the integral time is facilitated as shown in Fig. 9.

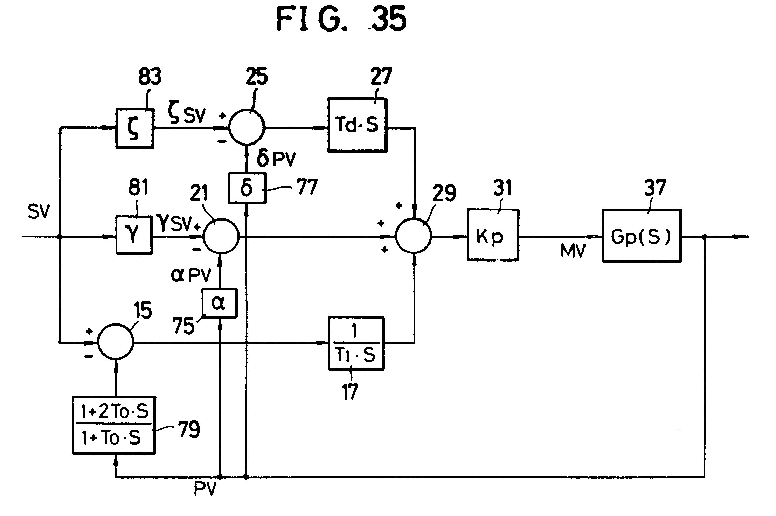

Figure 35 shows a block diagram for a controller concerning a twelfth embodiment of the present invention.

As shown in the figure, the controller of the present embodiment has, in the inputting routes of the set point value SV to the first subtractor 21 and the second subtractor 25, a third coefficient unit 81 and a fourth coefficient unit 83, respectively. The present embodiment has a different characteristic in that the signal γ SV obtained by multiplying the set point value SV by the coefficient γ of the third coefficient unit 81 is supplied for proportional operation, and the signal ξ SV obtained by multiplying the set point value SV by the coefficient ξ of the fourth coefficient unit 83 is supplied for differential operation.

By the addition of the third and fourth coefficient units 81 and 83, the optimization becomes further simplified.

Further, it is possible to select various kinds of prior control systems by assigning "1" or "0" to the coefficients α, δ, γ and ξ. For example, by choosing the time constant Tₒ=0 the following is obtained.
(I) When α = δ = γ = ξ = 0
   This correspond to eliminating the first through the fourth coefficient units so that it becomes equivalent to the standard PID controller.
(II) When α = δ = γ = 1 and ξ = 0
   This corresponds to operating the differential operation only on the process value PV so that it becomes equivalent to the PID controller with differentiation for PV.
(III) When α = δ = 1 and γ = ξ =0
   This corresponds to applying the proportional and differential operations to the process value PV alone so that it becomes equivalent to the I-PD controller.

As described in the above, the controller if the present embodiment eliminates the defects that existed in the prior art. and at the same time, is able to choose freely the various kinds of control systems of the prior art so that it possesses a high controllability and a wide usability.

Accordingly, by distributing the controller within the plant, it becomes possible to optimize each control of the plant for both of disturbance and set point value. Therefore, it becomes possible to respond the recent severe demands that have been mentioned ealier, with a profound contribution to the industrial world.

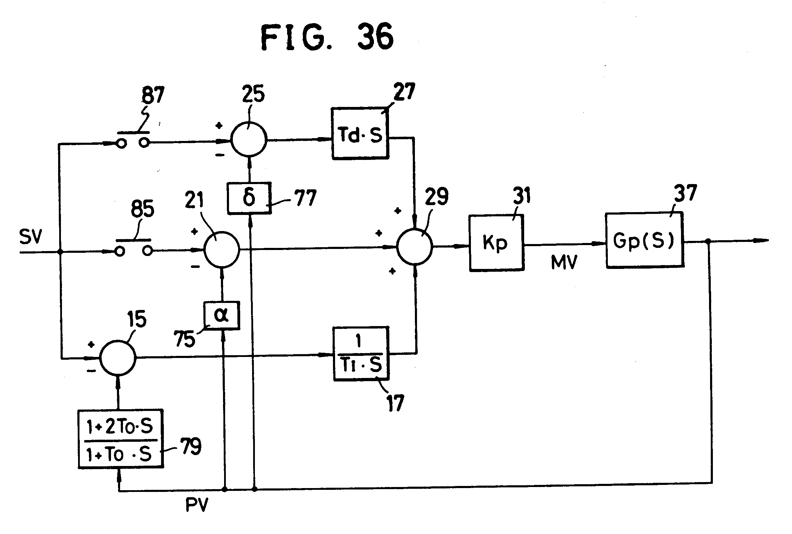

Further, Fig. 36 shows a block diagram for a thirteenth embodiment of the invention. The controller of the present embodiment is obtainable from the twenty-fifth embodiment by replacing the third and fourth coefficient units 81 and 83 respectively by a first and second switches 87 and 85. This corresponds to an arrangement in which the coefficients γ and ξ of the twenty-fifth embodiment are replaced by "0" or "1". Therefore, similar to the first embodiment, it is possible to optimize the controller for both of disturbance and changes in set point value, as well as it is possible to select the prior control systems in the same was as in the twenty-fifth embodiment.

It should be mentioned that although descriptions of the first through second embodiments was given by the use of the perfect differentiation (T_{D}.s), use is made of an imperfect differentiation (T_{D}/(1 + η .T_{D}.s) with η = 0.2 - 0.3) in practice.

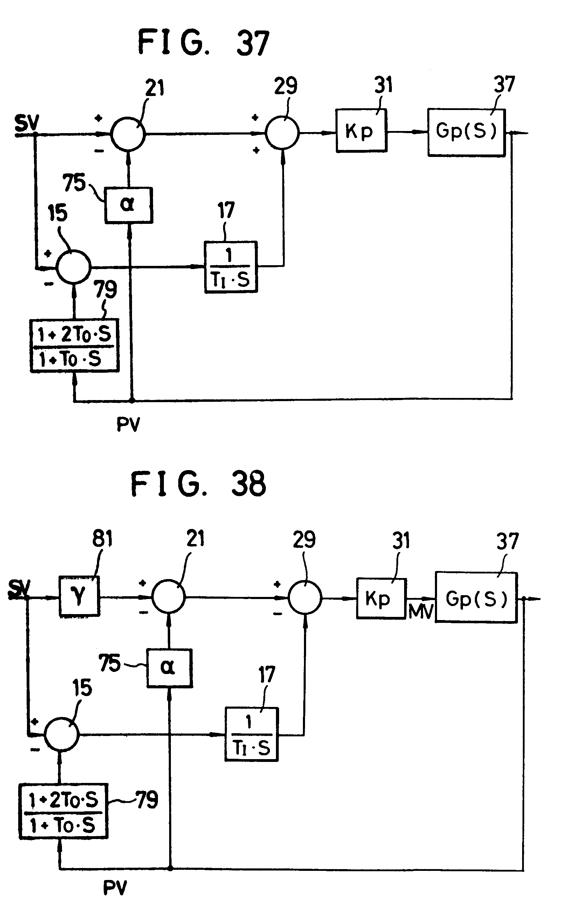

Figure 37 shows a block diagram for a controller concerning a fourteenth embodiment of the present invention.

As shown in the figure, the controller is obtainable from the first embodiment by eliminating the second coefficient unit 77 and the second subtractor 25 that are related to the differential operation.

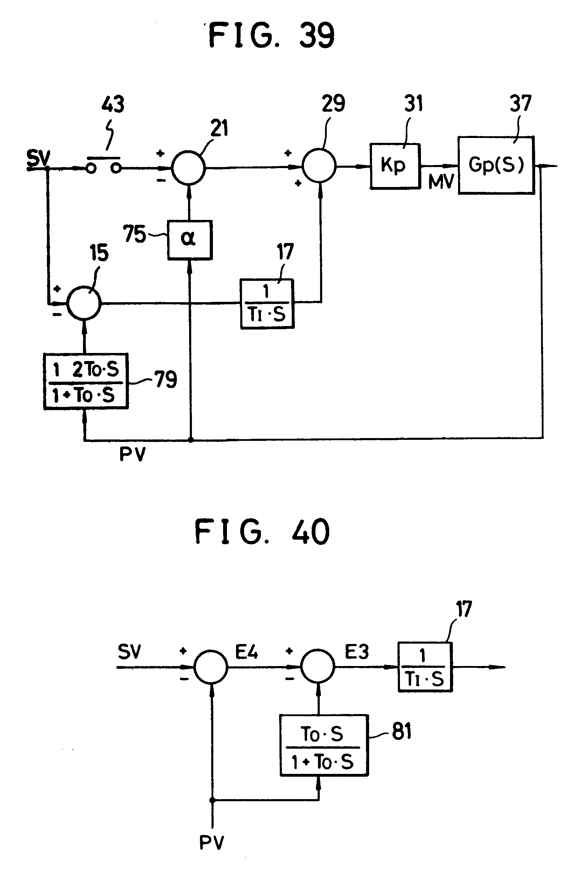

Moreover, Figs. 38 and 39 show block diagrams for controllers that concern fifteenth and sixteenth embodiments of the present invention. The controllers correspond to the twenty-fourth and second embodiments from which elements that are related to the differential operation are eliminated.

The embodiments fifteenth through sixteenth are used when PI control alone is sufficient depending upon the process of interest. They possess within the range of the PI control those characteristics that are possessed suspectively by the eleventh through thirteenth embodiments.

Furthermore, as a modification to the eleventh through sixteenth embodiments one may consider the following.
(I) The transfer function G_{L}(s) for the lead element 79 may be rearranged as follows.${\text{G}}_{\text{L}} \text{(s) = 1 +} \frac{\text{T₁.s}}{\text{1 + T₁.s}}$
   Therefore, an equivalent result may be obtained as shown by Fig. 40 by finding the deviation E₄ between the set point value SV and the process value PV, finding the deviation E₃ between the deviation E₄ and the signal obtained from the process value PV by letting it go through a filter 81 that has a transfer function shown by the second term in the above equation, and adding the deviation E₃ to the integral operation unit 17.
(II) In order to arrange the adjustment for the actual proportional gain to be carried out independently of the differential and integral operations, a new coefficient unit may be added at a position in between the first subtractor 79 and the adder 29 or the proportional unit 31 may be shifted to that position.

In the eleventh through sixteenth embodiments, adjustments are carried out for the characteristics for following set point value after giving an optimal control for suppression of disturbance. Contrary to this, seventeenth through twenty-fourth embodiments as described hereinbelow are constituted to make it possible to adjust initially the system for suppression of disturbance, and thereafter to give the system an optimal control characteristics for following set point value.

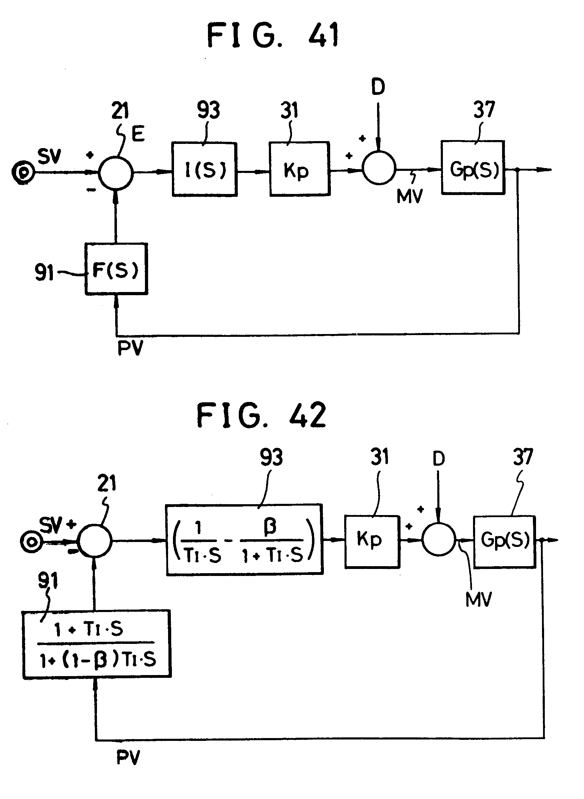

Figures 41 and 42 are block diagrams for showing the construction of an seventeenth embodiment of the device of the present invention. For the convenience in description, only the integral operation part which represents the essential part of the present invention is extracted in each figure, and the other parts, namely, the proportional operation part and the differential operation part, will be assumed to be identical to the foregoing embodiments.

In Fig. 41, the control valve PV which is fed back is input to a subtractor 21 via a compensatory operation unit 91.

In the subtractor 21, deviation E between the set point value SV and the control value PV that has undergone the compensatory operation is found, and the result is supplied to an integral operation unit 93.

In the integral operation unit 93, integral operation is applied to the deviation E, the output signal undergoes a proportional operation in a proportional operation unit 31, and the result is supplied to a control object 37 as the manipulated signal MV. In this way, control is carried out to bring the control value PV and the set point value SV to a coincidence.

Here, the functions F(s) and I(s) for the compensatory operation unit 1 and the integral operation unit 93 of the present invention are set in the following way.

First, the response of Fig. 41 is given by the following.$\text{PV =} \frac{\text{I(s).G(s)}}{\text{1+(Fs).I(s).G(s)}} \text{x SV +} \frac{\text{G(s)}}{\text{1+(Fs).I(s).G(s)}} \text{X D.}$

In the above equation, F(s) and I(s) are set as$\text{F(s).I(s) =} \frac{\text{1}}{{\text{T}}_{\text{I}} \text{.s}} \text{,}$$\text{F(s).I(s) =} \frac{\text{1}}{{\text{T}}_{\text{I}} \text{.s}} \text{-} \frac{\text{β}}{{\text{1 + T}}_{\text{I}} \text{.s}}$

In Eq. (48), F(s).I(s) is set to optimize the suppression of the disturbance, and I(s) in Eq. (47) is set in order to make the characteristics for following the set point value to be variable.

Further, as may be clear from Fig. 41, one has to have F(s) = 1 for a steady state where there is no change in the set poínt value SV.

Therefore, according to the final value theorem, the transfer function F(s) has to satisfy

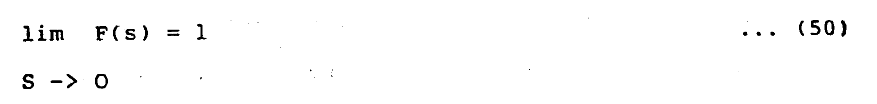

Determining the transfer function F(s) from Eqs. (48), (49), and (50) one has$\text{F(s) =} \frac{\frac{\text{1}}{{\text{T}}_{\text{I}} \text{.s}}}{\frac{\text{1}}{{\text{T}}_{\text{I}} \text{.s}} \text{-} \frac{\text{β}}{{\text{1 + T}}_{\text{I}} \text{.s}}} \text{=} \frac{{\text{1 + T}}_{\text{I}} \text{.s}}{{\text{1 + (1 - β )T}}_{\text{I}} \text{.s}}$
It is easy to see that the above transfer function satisfies the final value theorem.

The transfer function F(s) and I(s) set as in the above, a concrete construction for them is shown in Fig. 42.

Namely, the function F(s) for the compensatory operation unit 1 shows a lead/lag operation, and the function I(s) for the integral operation unit 93 shows a synthesis of an integration and a first order lag. It means that the integral time for a change in the set point value can be varid equivalently with the integral time for a change in the disturbance kept at a fixed value.

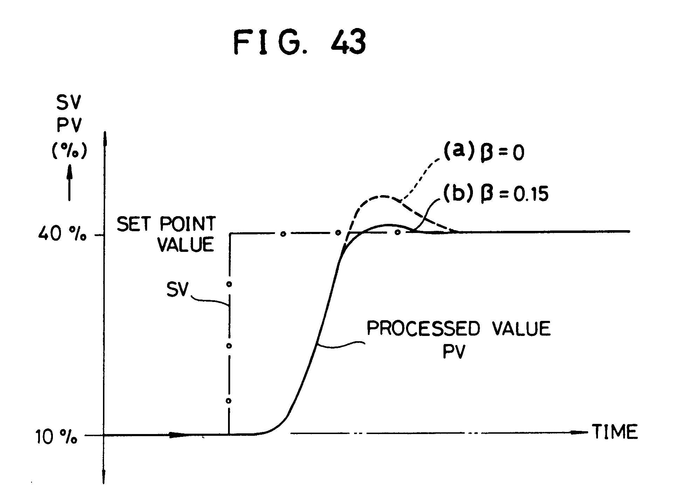

Explaining the control characteristics of the present embodiment by referring to Fig. 43, the figure shows the response to a change in the set point value SV in the state where the characteristics for suppressing disturbance is optimum for a transfer function$\text{G(s) =} \frac{\text{1}}{\text{1 + 5s}} {\text{e}}^{\text{-2s}}$
of the control object 37.

It shows that by setting the control constants K_{P}, T_{,} and T_{D} to the optimum condition for suppressing disturbance (K_{P} = 2.59, T_{I} = 3.41 seconds, and Td = 0.56 second), and fixing the characteristics for suppressing disturbance to the optimum condition, it is possible to improve markedly the characteristics for following set point value by varying equivalently the integral time for change in set point value through setting of the coefficient β. Namely, although the response shows a large overshoot as shown by designation (a) for β = 0 (the case of prior example where there is given no compensation for the integral time T_{I}), it will be seen that the characteristics for following set point value is substantially improved as shwon by the designation (b), without changing at all the characteristics for suppressing disturbance, by varying the equivalent integral time for set point value.

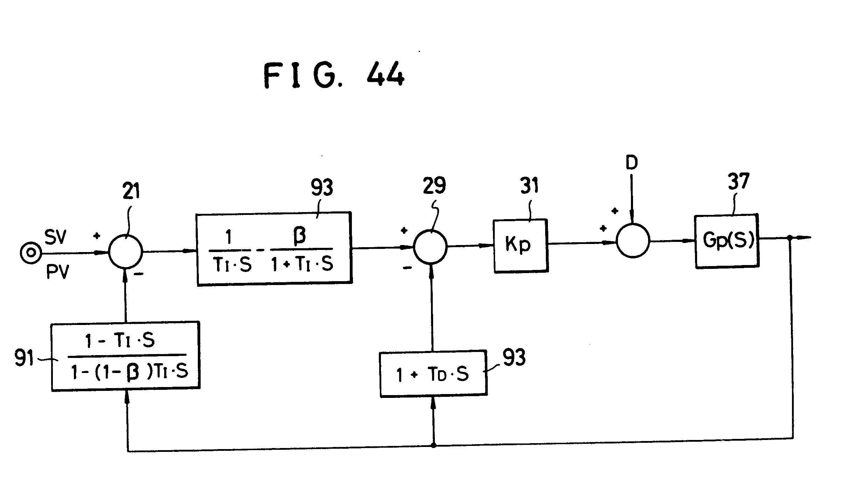

Figure 44 is a block diagram for illustrating the construction of a eighteenth embodiment in accordance with the present invention. In what follows, the components that are identical to those in the first embodiment will be given identical symbols to omit further explanation.

The figure shows the second PID controller of I-PD control type. The deviation between the set point value SV and the control value PV that has undergone a lead/lag operation in the compensatory operation unit 91, goes through an integral operation in the integral operation unit 29.

On the other hand, the control value PV undergoes proportional and differential operations in a proportional + differential operation unit 93. After the output of the proportional and differential operation is subtracted from the integration output in a subtractor 95, the result is multiplied in a proportional operation unit 31 by the proportional gain Kp, and the result is output to the control object 37 as a manipulated output MV.

As may be seen from the figure, the present embodiment optimally controls the suppression of disturbance by carrying out PID control for variations in the disturbance D. Moreover, for changes in the set point value, it is possible to give an optimal control for the characteristics for following set point value by adjusting the coefficient, with the characteristics for suppression of disturbance at fixed values.

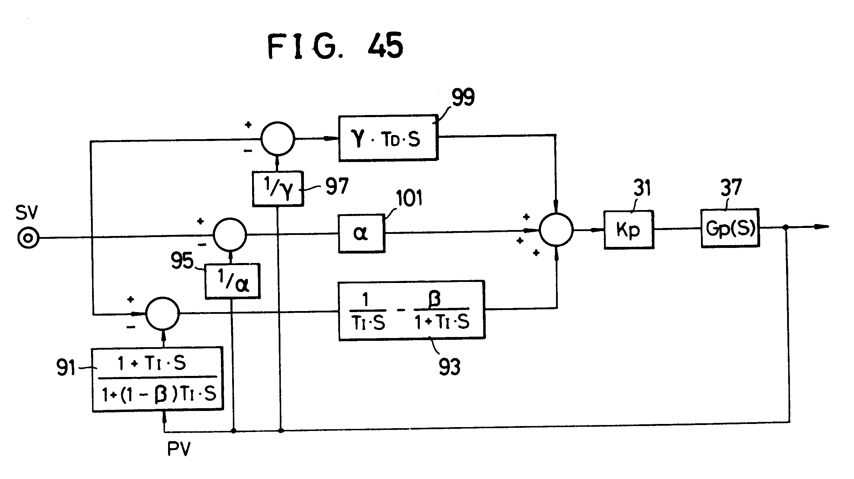

Figure 45 shows a block diagram for illustrating the construction of a nineteenth embodiment of the device in accordance with the present invention.

The present embodiment is arranged to have the coefficients to be multiplied to the control value PV to be fed back to the differential operation unit and to the integral operation unit to be given by 1/α and 1/γ, respectively, and the integral operation pat is the same as in the first embodiment. With such a construction it is possible to achieve the effects that are similar to those for the first embodiments.

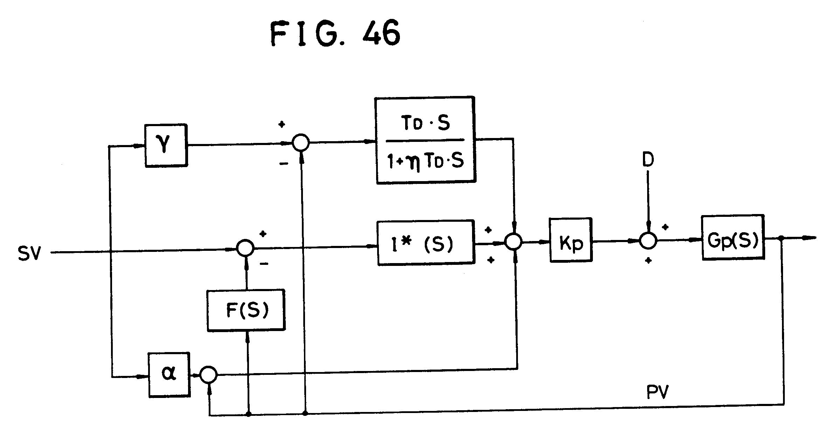

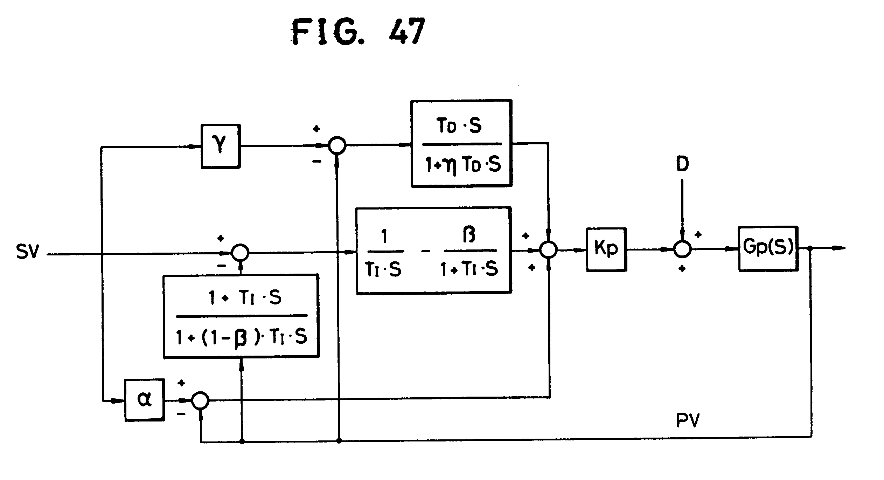

Figures 46 and 47 show block diagrams that illustrate the construction of a twentieth embodiment of the device in accordance with the present invention.

The present embodiment is, similar to the seventeenth embodiment shown in Figs. 41 and 42, the so-called two degree of freedom PID controller of the type with filter for process value.

Therefore, as explained in connection with the seventeenth embodiment, the control constants K_{P}, T_{I}, and T_{D} are set to the optimum values for suppressing disurbance, and optimization is made for proportional gain Kp for setting set point value by the coefficient α, and for derivative time Td by the coefficient γ.

Further, the function I(s) for the integral operation unit 93 is determined by Eq. (49), and the function F(s) for the compensatory operation unit 91 is determined by Eq. (51).

On the other hand, the coefficients α and γ are determined as in the following.

If one calls the optimum control constants for suppressing disturbance K_{P}, T_{I}, and T_{D} the optimum control constants for following set point value K_{P}*, T_{I}*, and T_{D}* and the optimum control algorithm for following set point value C*(s), one obtains 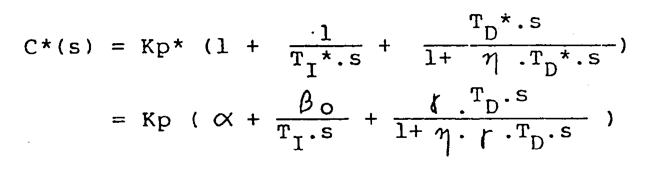
from which there follows$\text{α =} \frac{{\text{K}}_{\text{P}} \text{*}}{{\text{K}}_{\text{P}}} \text{,}$${\text{β}}_{\text{o}} \text{= α .} \frac{{\text{T}}_{\text{I}}}{{\text{T}}_{\text{I}} \text{*}} \text{≃ 2 x β ,}$$\text{γ= α .} \frac{{\text{T}}_{\text{D}} \text{*}}{{\text{T}}_{\text{D}}}$
Here, the coefficients α, β, and γ will attain the optimum values in the ranges of O < α < 1, O < β <1, and O < γ < 1.

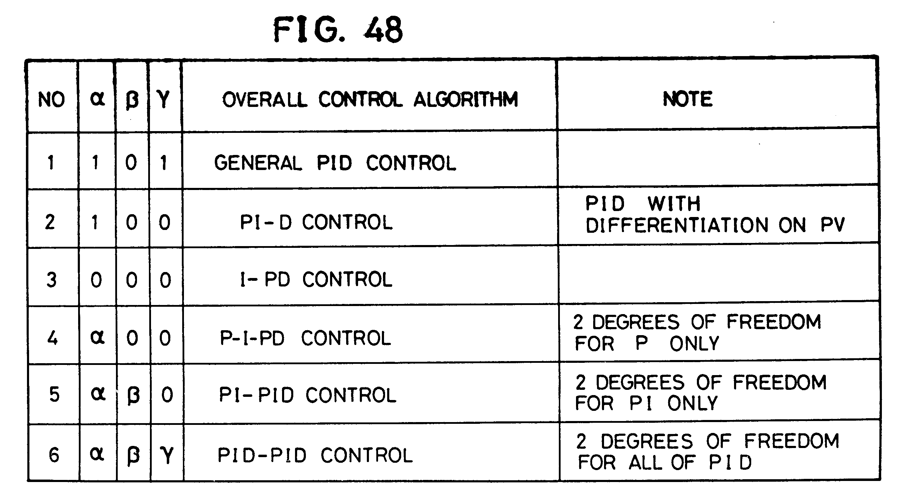

Figure 48 shows variations in the PID structure that can be realized by the change in prameters α, β, and γ. As shown in the figure, if all of the coefficients α, β, and γ are varied (setting No.6), then there will be obtained a perfect two degrees of freedom PID controller.

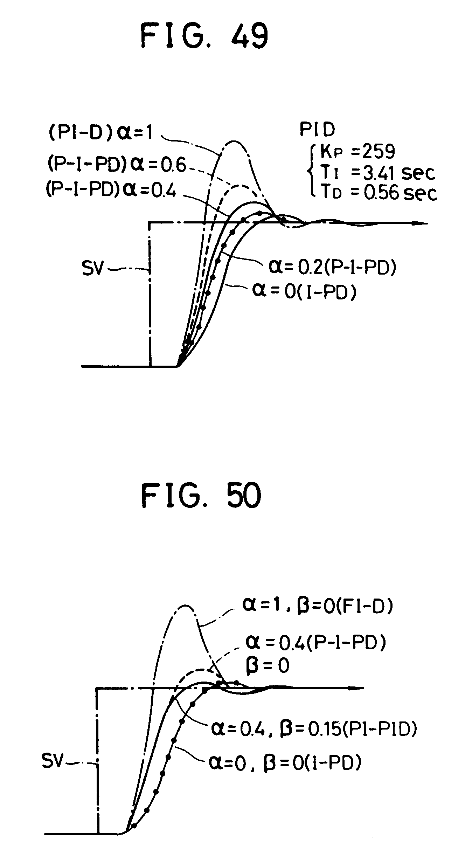

In the response characteristics for following set point value (Fig. 49), with setting of the control constants K_{P}, T_{I}, and T_{D} to the optimum values for suppressing disturbance for the case of the control object with G(s) = e^{-2s}/(1+5s), it is possible for I-PD to improve the characteristics for the rise of the response curve by keeping the magnitude of overshoot unchanged on the order of α = 0,2.

In Fig. 50 is compared for the same control object the response characteristics for following set point value for the case of α = 0.4 in an imperfect two degrees of freedom controller (P-I-PD control of setting No.4), and the change in set point value for the case of α = 0.4 and β = 0.15 in a perfect two degrees of freedom controller (PI-PID control). As may be seen, it is possible to suppress the overshoot without barely changing the rising characteristics, by changing the equivalent integral time through the coefficient β.

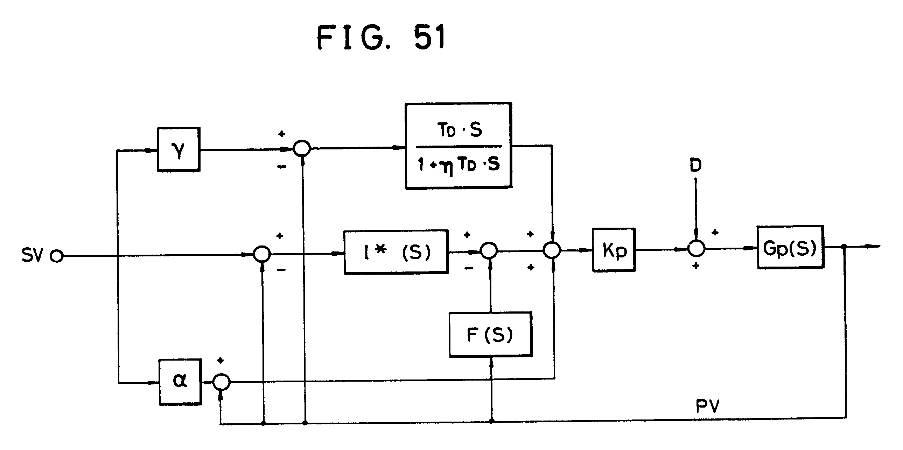

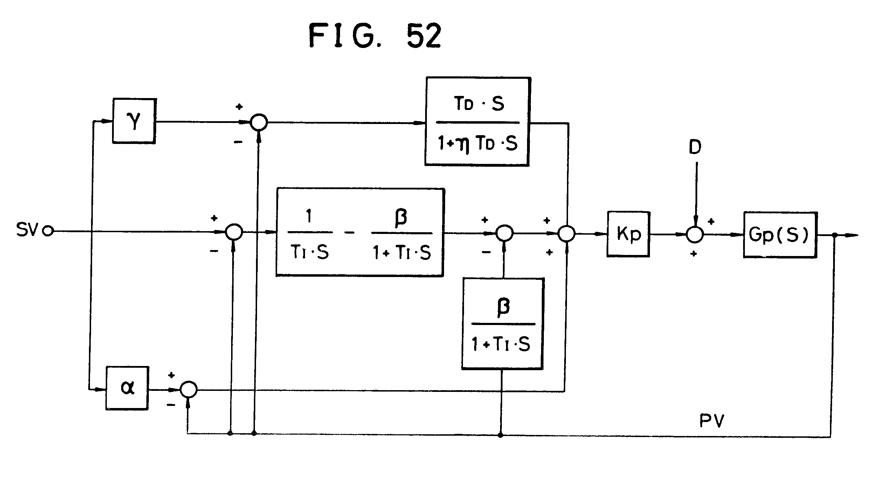

In Fig. 51 and Fig. 52 are shown block diagrams for illustrating the construction of a twenty-first embodiment of the device in accordance with the present invention.

The present embodiment is the so-called two degrees of freedom PID controller of feedback to set point value type. The difference from the twentieth embodiment consists in the point that the control value PV fed back via the compensatory operation unit 1 is subtracted from the set point value SV which has undergone the integral operation in the integral operation unit 93.

The function F(s) for the compensatory operation unit 1 is set first$\text{F(s) + I*(s) =} \frac{\text{1}}{{\text{T}}_{\text{I}} \text{.s}} \text{,}$$\text{I*(s) =} \frac{\text{1}}{{\text{T}}_{\text{I}} \text{.s}} \text{-} \frac{\text{β}}{{\text{1 + T}}_{\text{I}} \text{.s}} \text{.}$
Equation (52) is for setting the controller to the optimum condition of characteristics for suppressing disturbance while Eq. (53) is for setting it to the optimum condition of characteristics for following set point value.

As a condition, it is required that the final value theorem 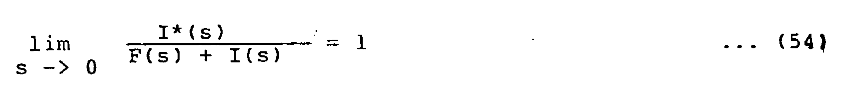
is to be satisfied.

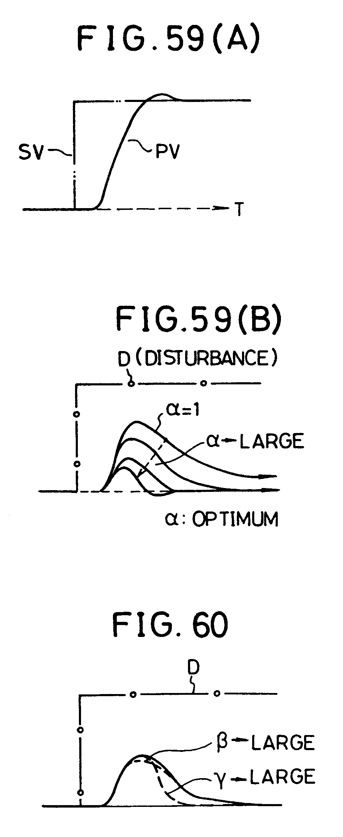

From Eqs. (52) and (53) there is obtained$\text{F(s) =} \frac{\text{β}}{{\text{1+T}}_{\text{I}} \text{.s}}$
It is easy to see that Eq.(55) satisfied the condition given by Eq.(54). In Fig. 59(A) and (B) is shown a concrete construction of the present embodiment.

Moreover, the variations in the PID structure that can be realized by the changes in the coefficients α, β, and γ are as set in Fig. 48.

By constructing as above, it is possible to realize response characteristics that are similar to those of Figs. 49 and 50.

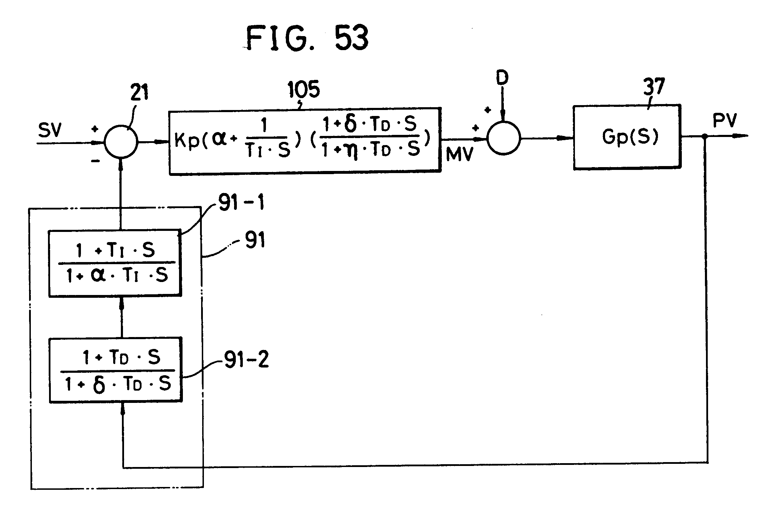

A twenty-second embodiment as shown in Figs. 53 through 57 is of inteference type to which is applied the consideration of the seventeenth through twenty-first embodiments.

In what follows description of the present invention will be given for an embodiment by referring to the figures.

Fig. 53 shows block diagram that illustrates the function of a twenty-second embodiment of the present invention. In the figures, components that are identical to those in Fig. 10 will be given identical symbols to omit further explanation.

In the figures, 91 is a compensatory operation unit which applies a compensatory operation to the control value PV from a control object 37, and supplies the compensatory control value PV′ to a deviation operation unit 21. The deviation compensation unit 1 determines the deviation between the compensatory control value PV′ and the set point value SV, and outputs the result to a control operation unit 105. The control operation unit 105 is provided with a transfer function C*(s) (interference-type) which compensates and corrects the control constants Kp, T_{I}, and T_{D} that are to be set by the adjusting parameters α and δ under the optimum condition of characteristics for suppressing disturbance by means of CHR method or the like. For the proportional and differential operations, the transfer function C*(s) corrects and sets the control constants K_{P} and T_{D} that are in the optimum condition of characteristics for suppressing disturbance to the control constants K_{P}* and T_{D}* for the optimum condition of characteristics for following set point value. The proportional, integral, and differential operations are carried out for the deviation based on the control constants K_{P}*, T_{I}, and T_{D}* to obtain the adjusted output MV which is output to the control object 3.

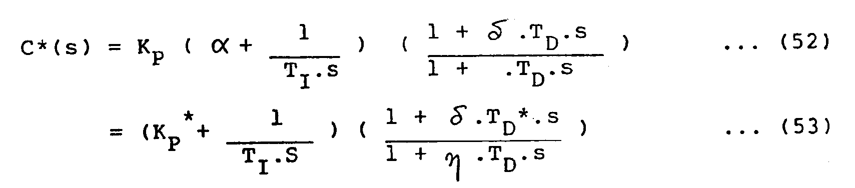

Here, the adjusting parameter corrects the proportional gain and δ varies the derivative time. The values for these parameters can be computed as taught heretofore, using the values in the adjustment formulae given by CHR method or the like. For instance, for no overshoot and minimum setting time in the case of adjusting mode of PID, they care to be found to be α = 0.63 and δ = 1.25.$\text{α =} \frac{{\text{K}}_{\text{P}} \text{*}}{{\text{K}}_{\text{P}}} \text{; δ =} \frac{{\text{T}}_{\text{D}} \text{*}}{{\text{T}}_{\text{D}}}$

However, for variations in the control value PV, the control constants K_{P}* and T_{D}* that are adjusted to the optimum condition of characteristics for following set point value give small gain and large setting time. For this reason, the compensatory operation unit 91 carries out for the control value PV a compensatory operation based on the transfer function H(s) shown by Eq. (54) to obtain a compensatory control value PV′, in order to correct the control constants Kp* and T_{D}* that are set to the optimum condition of characteristics for suppressing disturbance to the control constants Kp and T_{D}, that is, to remove the influence due to the correction component in the adjusting parameters.$\text{H(s) = (} \frac{{\text{1 + T}}_{\text{I}} \text{.s}}{{\text{1 + α .T}}_{\text{I}} \text{.s}} \text{)(} \frac{{\text{1 + T}}_{\text{D}} \text{.s}}{{\text{1 + δ .T}}_{\text{D}} \text{.s}} \text{)}$

In this manner, the control operation unit 105 carries out constantly the operation of adjusting to the optimum condition for following the changes in the set point value. As to the variations in the control value PV due to disturbance, the compensatory operation unit 91 carries out first a compensatory operation which virtually adjusts the control constants Kp*, T_{I}*, and T_{D}* for the control operation unit to those of the optimum condition for suppressing disturbance. Then, the compensatory operation unit 91 outputs the resut to the control operation unit 105. In this way, there is realized a two degrees of freedom controller which can be adjusted in mutually independent manner to conditions that are optimum for both of following the set point value and suppressing disturbance.

Next, the principle of the present embodiment will be described.

The control response of the process shown in Fig. 53 can be represednted by the following equation.$\text{PV =} \frac{\text{C*(s)Gp(s)}}{\text{1+C*(s).H(s).Gp(s)}} \text{X SV +} \frac{\text{Gp(s)}}{\text{1+C*(s).H(s).Gp(s)}} \text{X D.}$

According to Eq. (55) above, when there is impressed by an disturbance D, it is only necessary to correct C*(s)H(s) in order to manipulate the response to the disturbance. Therefore, the compensatory operation unit 91 is provided in the controller to set C*(s)H(s) to be the transfer function C(s) under the optimum condition of characteristics for suppressing disturbance. In this case, it may be thought that by setting C*(s)H(s) to C(s), the response to the set point value SV, too, may be manipulated. However, as shown by Eq. (56), it becomes equivalent to the construction in which only the response to the set point value is possible to be varied by means of the adjusting parameters α and δ, in the state where the response to disturbance is set to the optimum suppression characteristics for all times.$\text{PV =} \frac{{\text{K}}_{\text{P}} \text{( α +} \frac{\text{1}}{{\text{T}}_{\text{I}} \text{.s}} \text{) (} \frac{{\text{1 + δ .T}}_{\text{D}} \text{.s}}{{\text{1 + .T}}_{\text{D}} \text{.s}} \text{).Gp(s)}}{{\text{1 + K}}_{\text{P}} \text{(1+} \frac{\text{1}}{{\text{T}}_{\text{I}} \text{.s}} \text{) (} \frac{{\text{1 + T}}_{\text{D}} \text{.s}}{{\text{1 + .T}}_{\text{D}} \text{.s}} \text{) .Gp(s)}} \text{XSV} \text{+} \frac{\text{Gp(s)}}{{\text{1 + K}}_{\text{P}} \text{(1+} \frac{\text{1}}{{\text{T}}_{\text{I}} \text{.s}} \text{) (} \frac{{\text{1 + T}}_{\text{D}} \text{.s}}{{\text{1 + η .T}}_{\text{D}} \text{.s}} \text{) .Gp(s)}} \text{X D.}$

In addition, in order for the process to be set in a steady state it becomes necessary to satisfy the final value theorem. That is, the steady deviation E_{SV} = a,for the case where the set point value SV is changed by a value of a in step-like manner, with the disurbance D kept at a constant value, must vanish. For this reason, the transfer function H(s) for the compensatory operation unit 91 has to satisfy the following equation, as may also be seen from Fig. 41, and Eq. (54) fulfils such a conditon.

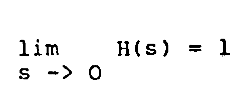

As in the above, the compensatory operation unit 91 is provided to set for variations in the control value PV, the control constants that are adjusted to the characteristics for following set point value, virtually to the characteristics for suppressing disturbance, and does not affect the control response in the steady state.

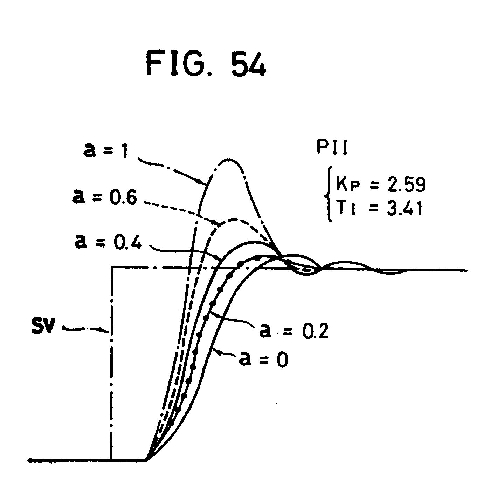

In Fig. 54 is shown the result of a simulation for the response of control value PV for the case of a transfer function of G_{P}(s) = e^{-2L}/(1+5s) for the control object 37 by the adjusting parameters α and δ.

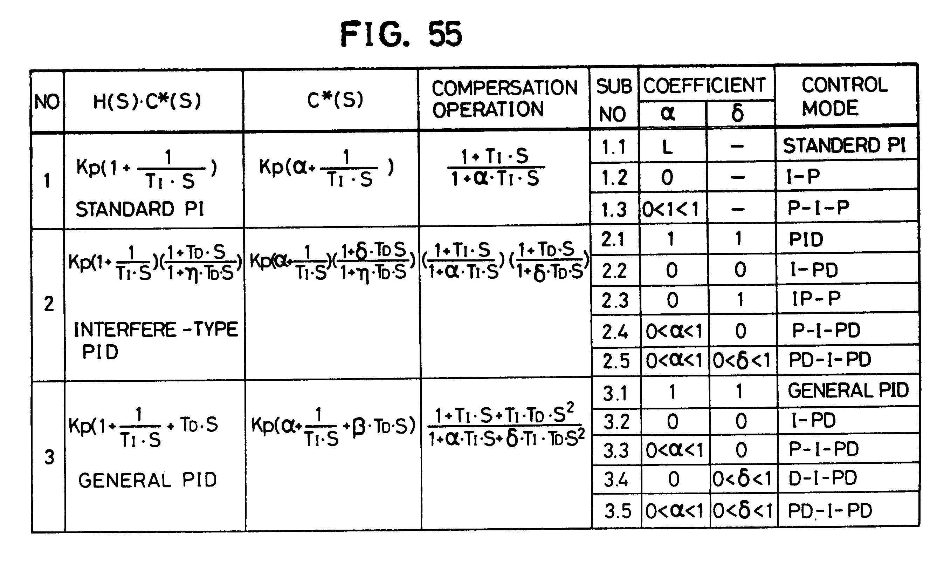

Moreover, since the present embodiment has a structure by which the response can be adjusted by means of the adjusting parameters, it is possible to realize various control forms by changing the values of the parameters α and δ, as is indicated by No. 2 in Fig. 55. In this case, the overall adjusting mode shows various control forms of interference type. Namely, for α = δ = 1, it becomes the ordinary one degree of freedom PID control, for σ = δ = 0, it carries out I control alone for changes in the set point value while it carries out PID control for variations in the control value, and finally for 0 < α < 1 and 0 < δ < 1, it has a construction in which for changes in the set point value, it carries out PD control which can adjust the control constants K_{P}* and T_{D}*, as well as I control with common control constant T_{I}, while for the control value, it carries out PD control that can be adjusted freely, as well as a common I control. The adjusting parameter α is for adjusting the proportional gain among the control constants, and it is possible to correct the rising characteristics and the overshoot condition of the response. Further, the parameter is for adjusting the derivative time, by the use of which it is possible to correct the rising characteristics of the response without affecting the overshoot condition too much.

If an disturbance is applied to the system in the state for which the control constants K_{P}, T_{I}, and T_{D} and the adjusting parameters α and δ are set, the variation in the control value PV due to the disturbance is introduced to the compensatory operation unit 91. There, it is changed to a compensatory control value PV′ which corrects the control constants K_{P}* and T_{D}* virtually to the optimum condition of characteristics for suppressing disturbance, the result is output to the deviation operation unit 21 where the deviation from the set point value SV is determined, and the deviation is output control operation unit 105.

When there is a change in the set point value SV, the control operation unit 105 computes an adjusted output u for the optimum condition of characteristics for following the deviation in the changed amount.

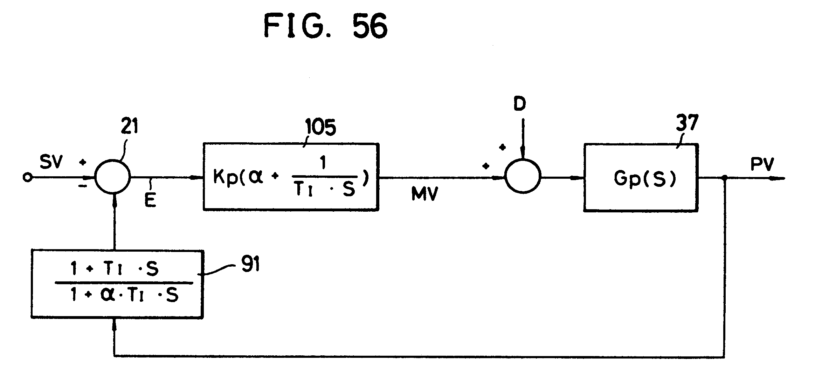

In conjunction with the twenty-second embodiment described in the foregoing, all of the proportional, integral, and differential operations are carried out in the control operation unit 105, and both of the proportional and differential operations are carried out in the compensatory operation unit 91. However, according to the present invention, the control operation unit 105 needs only to have a construction of carrying out at least one of the operations, and the compensatory operation unit 91, depending upon the response of following the set point value, may have a construction in which each of proportional, integral, and differential operations are introduced singly or in a selective combination. For example, if the control operation unit 105 consists of proportional and integral operations and the compensatory operation unit 91 consists of the operation for compensating the proportional gain, then the construction is as shown by Fig. 56, and the control form realizable for this case is as shown by No. 1 of Fig. 55.

### [Process Value Feedback Compensation Type]

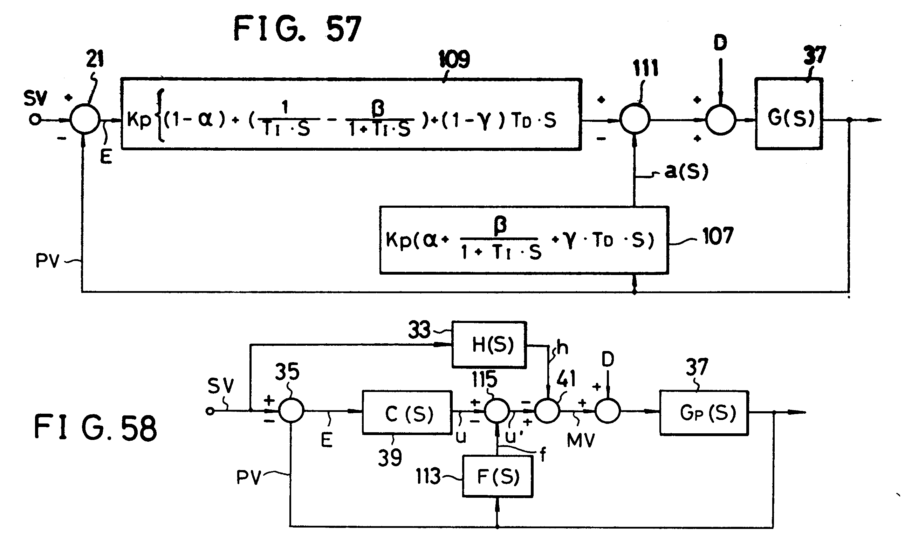

Referring to Fig. 57, a twenty-third embodiment of the present invention will be described. This embodiment is of a PID-PID control type with a simplified configuration.

In this embodiment, the control operation unit 109 carries out all of the proportional, differential, and integral operations based on the control constats K_{P}* , T_{I}*, and T_{D}* in the optimum condition of characteristics for following set point value, and in addition, for the control value PV, it applies the same operations to the adjusted output from the operation unit 107 which compensates the control constants to those for the optimum condition of characteristics for suppressing disturbance, that is, to K_{P}, T_{I}, and T_{D}. Namely, in the first and twenty-fifth embodiments, the controller was of the type with filter for control value in which, for the control value PV, the control constants K_{P}*, T_{I}*, and T_{D}* are first compensated in the compensatory operation unit 107 to those of the condition for suppressing disturbance, and then the result is output to the control operation unit 109. In contrast, the present embodiment is of the control value feedback type in which, the part due to variations in the control value PV of the adjusted output that is computed at the control operation unit 109 for the condition of following the set point value, is corrected to the condition for suppressing the disturbance by means of the compensated output a(s) that is computed in compensating manner, based on the control value PV.

In the figure, components that are identical to those in Fig. 1 are given identical symbols. In the control operation unit 109, as shown in Eq. (57)*, the control constants K_{P}, T_{I}, and T_{D} that are set to the optimum condition of characteristics for suppressing disturbance are adjusted by the adjusting parameters α, β, and γ to those for the optimum condition of characteristics for following set point value K_{P}*, T_{I}*, and T_{D}*, and the output that is computed in adjusting manner based on this adjusting is supplied to the operation unit 111.

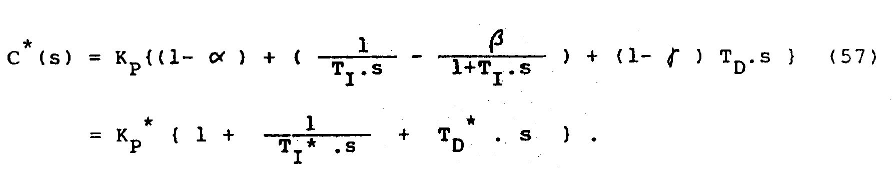

In the operation unit 111, there is added to the adjusted output the compensatory output a(s) that is obtained in the compensatory operation unit 107 by carrying out all of the proportional, integral, and differential compensatory operations for the control value PV based on Eq. (58). The result of the addition is output to the control object 3 as the manipulated value u.${\text{H(s) = K}}_{\text{P}} \text{{ α +} \frac{\text{β}}{{\text{1+T}}_{\text{I}} \text{.s}} {\text{+ γ . T}}_{\text{D}} \text{. s } .}$

By this construction, there is supplied to the control object 37 a manipulated value u which is optimum for each of the change in the set point value and the variation in the control value PV.

Next, the control response of the present embodiment is as follows.$\text{PV =} \frac{{\text{C*(s) . G}}_{\text{P}} \text{(s)}}{{\text{1+ {C*(s)+H(s)} . G}}_{\text{P}} \text{(s)}} \text{x SV +} \frac{{\text{C*(s) . G}}_{\text{P}} \text{(s)}}{{\text{1+ {C*(s)+H(s)} . G}}_{\text{P}} \text{(s)}} \text{x D.}$
By substituting Eqs. (57) and (58) for C*(s) and H(s) into Eq. (59), the denominators for both of the set point value SV and the disturbance D are the general expression for proportional, integral, and differential controls with the control constants K_{P}, T_{I}, and T_{D} for the optimum condition of characteristics for suppressing disturbance, and only the numerator for the term of set point value can be varied by the adjusting parameters α, β, and γ. Because of this, it becomes possible to optimize freely only the characteristics for the set point value SV as is desired, under the condition in which the characteristics for the disturbance are kept fixed at the optimum values.$\text{PV =} \frac{{\text{K}}_{\text{P}} \text{{ (1+ α ) + (} \frac{\text{1}}{{\text{T}}_{\text{I}} \text{.s}} \text{-} \frac{\text{β}}{{\text{1+T}}_{\text{I}} \text{.s}} {\text{) + (1- γ ).T}}_{\text{D}} {\text{.s } . G}}_{\text{P}} \text{(s)}}{{\text{1 + { K}}_{\text{P}} \text{(1 +} \frac{\text{1}}{{\text{T}}_{\text{I}} \text{.s}} {\text{+ T}}_{\text{D}} {\text{.s) } . G}}_{\text{P}} \text{(s)}} \text{x SV} \text{+} \frac{{\text{G}}_{\text{P}} \text{(s)}}{{\text{1 + { K}}_{\text{P}} \text{(1 +} \frac{\text{1}}{{\text{T}}_{\text{I}} \text{.s}} {\text{+ T}}_{\text{D}} {\text{.s) } . G}}_{\text{P}} \text{(s)}} \text{x D.}$

Moreover, since the response compensates the integration term by a first order lag element, it satisfies, as mentioned earlier, the condition for setting the process in the steady state, namely, the final value theorem.

Furthermore, the values of the adjusting parameters α, β ,and γ can be determined from the values of the control constants K_{P}, T_{I}, and T_{D} for the characteristics for suppressing disturbance and the values of the control constants K_{P}*, T_{I}*, and T_{D}* for the characteristics for following set point value that may be given by CHR method or the like.

Namely, can be determined from K_{P}(1- α) = K_{P}* as$\text{α = 1 -} \frac{{\text{K}}_{\text{P}} \text{*}}{{\text{K}}_{\text{P}}} \text{,}$ and can be determined from K_{P}(1- γ).T_{D} = K_{P}* . T_{D}*
as =$\text{1 - (1- α ) x} \frac{{\text{T}}_{\text{D}} \text{*}}{{\text{T}}_{\text{D}}} \text{:}$

Further, as to **B** , by setting$\text{(} \frac{\text{1}}{{\text{T}}_{\text{I}} \text{.s}} \text{-} \frac{\text{β}}{{\text{1+T}}_{\text{I}} \text{.s}} \text{) =} \frac{{\text{β}}_{\text{o}}}{{\text{T}}_{\text{I}} \text{.s}} \text{,}$ one obtains from$\frac{{\text{K}}_{\text{Px o}}}{{\text{T}}_{\text{I}} \text{.s}} \text{=} \frac{{\text{K}}_{\text{P}} \text{*}}{{\text{T}}_{\text{I}} \text{*.s}}$ that${\text{β}}_{\text{o}} \text{= (1- α ) x} \frac{{\text{T}}_{\text{I}}}{{\text{T}}_{\text{I}} \text{*}} \text{,}$ 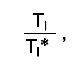 and and according to the result of a simulation an optimum value is found for βₒ ≃ 2 x β, that is, in the neighborhood of$\text{=} \frac{\text{1}}{\text{2}} {\text{x β}}_{\text{o}} \text{.}$

When the values of the adjusting parameters are determined in the above manner, it is possible to adjust the system to an optimum condition of characteristics for suppressing disturbance by setting the values of the control constants K_{P}, T_{I}, and T_{D} so as to have the response of the control value PV, for the case of a step change in the set point value, desired following characteristics.

In this way, when the control value PV is varied due to a disturbance D, in the condition where the control constants are virtually set in an optimum condition of characteristics for both of disturbance suppression and set point value following, the control operation unit 109 determines, for the deviation due to the above variation, an adjusted output based on the control constants for the condition for following the set point value. A compensatory output a(s) computed in the operation unit 111 based only on the control value PV, independently from the set point value SV, is added to the adjusted output, and the result is output equivalently as a condition for suppressing disturbance.

Referring to Fig. 58 a twenty-fifth embodiment of the invention is illustrated. In the figures, provided is a process value feedback compensation unit which constitutes a second compensatory operation unit.

The set point value feedback compensation unit 113 receives the control value PV and applies to it a compensatory operation which is based on the transfer function F(s) given by Eq. (63). For the deviation E due to variations in the control value PV, it supplies to an operation unit 115 a compensating value f which causes the control constants K_{P}*, T_{I}*, and T_{D}* that are adjusted to the optimum condition of characteristics for following set point value to corrects equivalently to those for the optimum condition of characteristics for suppressing disturbance. The operation unit 115 subtracts the compensating value f from the adjusting output u which comes from the control operation unit 39 to obtain the compensatory adjusted output u' which is then output to an operation unit 41.${\text{F(s) = K}}_{\text{P}} \text{{ ( α - 1 ) +} \frac{\text{β}}{{\text{1+T}}_{\text{I}} \text{.s}} \text{+} \frac{{\text{( γ-1).}}^{\text{T}} \text{D.s}}{{\text{1+ η .T}}_{\text{D}} \text{.s}} \text{) .}$

Since, however, the compensating value f corrects for not only the characteristics for suppressing disturbance but also the characteristics for following set point value, the compensatory adjusted output u′ improves the characteristics for suppressing diturbance but deteriorates the characteristics for following set point value. The set point value feedforward compensation unit 33 is for recovering the deterioration in the characteristics for following set point value. It applies a compensatory operation to the set point value SV based on a transfer function H(s) which corresponds to the transfer function F(s) of the process value feedback compensation unit 113, and outputs the compensating value h obtained to the operation unit 41. The arithmetic unit 14 adds the compensating value h to the compensatory adjusted output u' to output the result to the control object 37.

Next, there will be given a description about the principle by which it is possible to accomplish optimization for both of the characteristics for following set point value and for suppressing disturbance, by selecting the contents of the two compensatory means in the present embodiment. First, it should be remembered that since the control constants of the control operation unit 39 are adjusted to the optimum condition of characteristics for following set point value, when there is no compensation in both compensating units 33 and 113 the control value PV for changes in the set point value SV is following optimally, as shown by Eq. (62).$\text{PV′ =} \frac{{\text{C (s) . G}}_{\text{p}} \text{(s)}}{{\text{1 + C (s) . G}}_{\text{P}} \text{(s)}} \text{x SV +} \frac{{\text{G}}_{\text{P}} \text{(s)}}{{\text{1 + C (s) . G}}_{\text{P}} \text{(s)}} \text{x D .}$

Since, however, the response by Eq. (62) has weak suppression characteristics for an disturbance D, there is supplied the set point value feedback compensation unit 113 to correct the control constants equivalently to the characteristics for suppressing disturbance, as seen from Eq. (63), for improving the disturbance characteristics.$\text{PV˝ =} \frac{{\text{C*(s) . G}}_{\text{p}} \text{(s)}}{{\text{1+{(C*(s)+F(s)}.G}}_{\text{P}} \text{(s)}} \text{x SV +} \frac{{\text{G}}_{\text{P}} \text{(s)}}{{\text{1+{C*(s)+F(s)}.G}}_{\text{P}} \text{(s)}} \text{x D.}$

However, the transfer function F(s) of compensating for the suppression of disturbance not only affects the response to the disturbance D but also affects the set point value SV.

For this reason, there is provided the set point value feedforward compensation unit 115, to manipulate only the characteristics for following the set point value SV, by fixing the response to the disturbance D. As a result of such a compensation, the control response of the process will become as shown by Eq. (64).$\text{PV =} \frac{{\text{{C*(s)+H(s)}.G}}_{\text{P}} \text{(s)}}{{\text{1+{C*(s)+F(s)}.G}}_{\text{P}} \text{(s)}} \text{x SV +} \frac{{\text{G}}_{\text{P}} \text{(s)}}{{\text{1+{C*(s)+F(s)}.G}}_{\text{P}} \text{(s)}} \text{x D.}$

According to Eq. (64), it will be seen that the suppression characteristics for disturbance D is adjusted by {C*(S)+F(s)} while the following characteristics for set point value SV is adjusted by {C*(s)+H(s)}/[1+{C*(s)+F(s)}].

Next, the transfer function F(s) for the process value feedback compensation unit 11 will be determined based on the response given by Eq. (64). Namely, if the transfer function C(s) for making the characteristics fro suppressing disturbance D to be an optimum characteristics condition is defined by Eqs. (65) and (66), the transfer function F(s) can be computed as given by Eqs. (67) and (68).

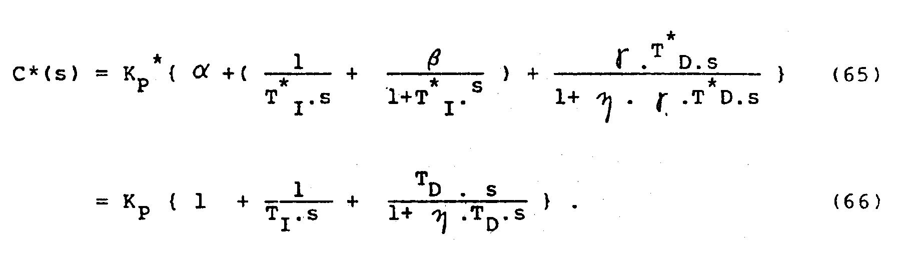

In the above equation, K*_{P}, T*_{I}, and T*_{D} are the control constants for the optimum condition of characteristics for following set point value, K_{P}, T_{I}, and T_{D} are the control constants for the optimum condition for suppressing disturbance, and α, β, and γ are adjusting parameters.$\text{C*(s) + F(s) = C(s),}$

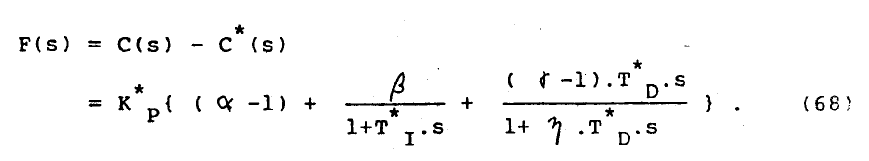

In order for this transfer function to be proper, the control response of the process has to satisfy the final value theorem. Namely, in the case of changing the set point value SV by a fixed amount in step-like manner, under the condition of constant disturbance D, the deviation must vanish in the steady state. In order to satisfy the above condition, Eq. (69) has to be fulfilled and in turn Eq. (70) has to be fulfilled.

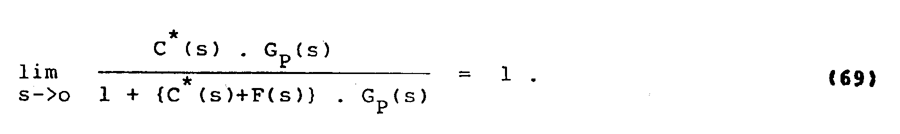

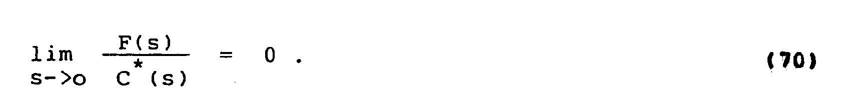

When the expressions for the transfer functions F(s) and C*(s) are substituted into Eq. (11), the term in F(s) corresponding to the integration term 1/T*_{I}.s in C*(s) is the first order lag term 1/(1+T_{I}.s) so that it is clear that F(s) satisfies Eq. (70) as the denominator tends to infinity when s->o.

Next, there will be derived the transfer function H(s) for the set point value feedforward compensation unit 33. This function is for recovering the following characteristics for the set point value SV which is changed by the action of the process value feedback compensation unit 113 as shown by Eq. (63) to recover to a condition as shown by Eq. (62). When the response to the set point value given by Eq. (64) is corrected as given by Eq. (62), there is obtained.$\frac{\text{C*(s)}}{\text{C*(s)}} \text{=} \frac{\text{C*(s) + H(s)}}{\text{C*(s) + F(s)}} \text{. H(s) = F(s) .}$

However, according to Eq. (71), the response to the set point value overshoots as may be seen from Eq. (64). Because of this, Eq. (71) is modified to Eq. (72) using a coefficient k (0 ≦ k ≦ 1) to manipulate only the characteristics for following set point value by varying the value of k.$\text{H(s) = k x F(s) .}$

In this manner, the control conctants K_{P}, T_{I}, and T_{D} are corrected equivalently in mutually independent fashion depending upon the compensatory action, in order to obtain optimum characteristics for both of disturbance suppression and set point value following.

Next, an example will be described for computing the values of the adjusting parameters α, β, and γ for setting the values of the transfer function F(s) for the process value feedback compensation unit and the transfer function H(s) for the set point value feedforward compensation unit.

Namely, comparing the operations in Eqs. (6) and (7), it is seen for the proportional operation that${\text{K*}}_{\text{P}} {\text{x α = K}}_{\text{P}} \text{. ∴ α =} \frac{{\text{K}}_{\text{P}}}{{\text{K*}}_{\text{P}}} \text{.}$

Further, by setting {1/T*_{I}.s + β /(1+T*_{I}.s)} in Eq. (6) to β/T₁.s, for the integral operation part one obtains$\frac{{\text{K}}_{\text{P}}^{\text{*}} \text{x}}{{\text{T*}}_{\text{I}} \text{.s}} \text{=} \frac{{\text{K}}_{\text{P}}}{{\text{T}}_{\text{I}} \text{.s}} \text{. ∴ β = α x} \frac{{\text{T*}}_{\text{I}}}{{\text{T}}_{\text{I}}} \text{= 2 x β .}$

Moreover, for the diferential operation part${\text{K*}}_{\text{P}} \text{x} \frac{{\text{γ .T*}}_{\text{D}} \text{.s}}{{\text{1+ η .T*}}_{\text{D}} \text{.s}} {\text{= K}}_{\text{P}} \text{x} \frac{{\text{T}}_{\text{D.}} \text{s}}{{\text{1+ η .T*}}_{\text{D}} \text{.s}} \text{. ∴ γ = α x} \frac{{\text{T}}_{\text{D}}}{{\text{T*}}_{\text{D}}} \text{.}$
Since K_{P}, T_{I}, T_{D}, K_{P}*, T_{I}*, and T_{D}* can be obtained by CHR method or the like, the values for α, β, and γ can be found.

As in the above, when the control constants K_{P}*, T_{I}*, and T_{D}* are adjusted to the optimum condition of characteristics for following set point value, the present embodiment corrects for variations due to disturbances the control constants equivalently to those for the optimum condition of characteristics for suppressing disturbance by means of the compensating action which is based on the transfer function F(s) for the set point value feedback compensation unit 113. However, the compensation action deteriorates the characteristics for following set point value. In order to recover and compensate for the deterioration, there is applied, for the component corresponding to the change in the set point value SV, a compensatory operation based on the transfer function H(s) for the set point value feedforward compensation unit 33. In this manner, it becomes possible to realize an optimum condition of characteristics for both of disturbance suppression and set point value following. In addition, the response can be optimized freely and independently by adjusting the coefficient k in Eq. (72) for following set point value to adjust teh overshoot, and by varying the parameters α, β, and γ for suppressing disturbance.

As an example of response of the present embodiment, there is shown in Fig. 59(A) and (B) when the transfer function F(s) for the process value feedback compensation unit 113 consists solely of the proportional compensation, K_{P}* x (α -1). In the example, the characteristics for suppressing disturbance is improved by increasing the value of α from
α = 1 (no compensation) to larger values, by fixing the characteristics for following set point value (k = constant).

Further, as shown in Fig. 60, the value of β varies equivalently the integral time of the characteristics for suppressing disturbance. By the use of this parameter it is possible to decrease the maximum value of the variation. The parameter γ is for varying the derivative time by which it becomes possible to suppress the disturbance quickly.

Although in the description some embodiments have been made of the perfect differentiaions while others of the imperfect differentiations. It is easily understood that the differentiations of the two type can be mutually interchangeable in any embodiment. Also it should be noted that the present invention is freely applicable to both the position-type operation system and the velocity-type operation system that is widely being used in direct digital control.

## Claims

1. A process controller system comprising first and second controllers both for controlling a response of a process output value (PV) against a disturbance (D) applied to a process (Gp(S)) and for following a process output value (PV) to a setpoint value change (SV),
said first controller having a first adjustable parameter set (Kp, Ti; Kp, Ti, Td) including at least parameters for proportional and integral operations (Kp, Ti), which supplies a control signal (MV) to the process (Gp(S)) on the basis of the process output value (PV) for optimally controlling the response of the process output value (PV) by adjusting the first parameter set where the disturbance (D) is applied, and
said second controller having a second adjustable parameter set (α, β; α, β, γ ; α, H1, H2, α, H1, H2, γ) including at least one integrating parameter for integral operation (β, H2) which is adjustable independently of the first parameter set, for controlling the response of the process output value (PV) by adjusting the second parameter set where the setpoint value change (SV) is applied, characterized in that said first controller includes an integration unit (17) having a transfer function 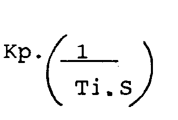 and said second controller includes a lead/lag operation unit (59,17) having a transfer function 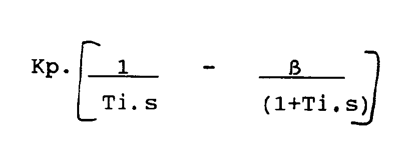 and said second controller optimally controls the response of the process output value (PV) by adjusting the integrating parameter β which is positive; where Kp and Ti are the proportional gain and the integrating time constant of the transfer functions and s is the complex variable.

2. A process controller system according to claim 1 characterized in that
said second controller is adopted to adjust at least one parameter of an integrating time.

3. A process controller system according to claim 1 characterized in that
said second controller is adapted to adjust at least one parameter of a proportional gain.

4. A process controller system according to claim 2 or 3 characterized in that
said lead/lag operation unit has said adjusting parameter.

5. A process controller system according to claim 4 characterized in that
said lead/lag operation unit carries out the operation according to the equation,$\frac{{\text{1 + β.T}}_{\text{I}} {\text{.S + γ.T}}_{\text{I}} {\text{.T}}_{\text{D}} \text{.S²}}{{\text{1 + T}}_{\text{I}} {\text{.S + T}}_{\text{I}} {\text{.T}}_{\text{D}} \text{.S²}}$ where T_{D} may identify zero so as to correspond to a system with no differentiation operation.

6. A process controller system according to claim 1 characterized in that
said first controller carries out proportion and integration operations.

7. A process controller system according to claim 1 characterized in that
said first controller further carries out a differentiation operation.

8. A process controller system according to claim 1 characterized in that
said second controller comprises at least one compensatory operation unit having at least one parameter which brings substantially no influence to the characeristics suppressing external disturbances acting on the system which is constituted with the process controller system having an adjustment system and the object.

9. A process controller system according to claim 8 characterized in that
said second controller is a feedforward element which operates on the set point value and subtracts the result thereof from the manipulated value outputted from the first controller.

10. A process controller system according to claim 9 characterized in that
said first controller is a control operation unit which operates on the difference between the set point value and the processed value and outputs the result thereof as the manipulated value.

11. A process controller system according to claim 10 characterized in that
said second controller carries out the operation according to the equation,${\text{K}}_{\text{P}} \text{{ (1- α ) +} \frac{\text{β}}{{\text{1 + T}}_{\text{I}} \text{.S}} \text{+} \frac{{\text{(1 - γ) . T}}_{\text{D}} \text{. S}}{{\text{1 + η . γ . T}}_{\text{D}} \text{. S}} \text{} ,}$ and
said first controller carries out the operation, according to the equation,${\text{K}}_{\text{P}} \text{(1 +} \frac{\text{1}}{{\text{T}}_{\text{I}} \text{. S}} \text{+} \frac{{\text{T}}_{\text{D}} \text{. S}}{{\text{1 + η . T}}_{\text{D}} \text{. S}} \text{) ,}$ where K_{P} is a proportional gain, T_{I} is an integral time and T_{D} is a differential time each are optimally chosen for suppressing the external disturbances acting on the system, and T_{I} may identify infinite corresponding to a system with no integration operation while T_{D} may identify zero corresponding to a system with no differentiation operation.

12. A process controller system according to claim 8 characterized in that
said second controller is at least one filter element which operates on the set point value and the result thereof is subtracted by the processed value and operated by a control operation unit to obtain the adjusting ouput of the manipulated value.

13. A process controller system according to claim 12 characterized in that
said first controller carries out the operation optimally for suppressing external disturbances acting on the system which is constituted with the process controller system having an adjustment system and the object.

14. A process controller system according to claim 13 characterized in that
said second controller carries out the operation followed by the operation of the control operation unit in order to constitute a total transfer function in cooperation with the control operation unit responsive optimally for following the change in the set point value.

15. A process controller system according to claim 14 characterized in that
said first controller carries out the operation according to the equation,${\text{C(s) = K}}_{\text{P}} \text{( 1 +} \frac{\text{1}}{{\text{T}}_{\text{I}} \text{. S}} {\text{+ T}}_{\text{D}} \text{. S ) ,}$ and
said second controller carries out the operation according to the equation,$\text{H(s) =} \frac{{\text{1 + α T}}_{\text{I}} {\text{.S + β T}}_{\text{I}} {\text{T}}_{\text{D}} \text{.S²}}{{\text{1 + T}}_{\text{I}} {\text{.S + T}}_{\text{I}} {\text{T}}_{\text{D}} \text{.S²}}$ where K_{P}, T_{I} and T_{D} are a proportion gain, an integration time and a differentiation time respectively chosen optimally for suppressing external disturbances acting on the system which is constituted with the process controller system having an adjustment system and the object, and T_{I} may identify infinite corresponding to a system with no integration operation while T_{D} may identify zero corresponding to a system with no differentiation operation.

16. A process controller system according to claim 12 characterized in that
said first controller comprises a first part which operates the output from the second controller, and a second part which subtracts from the output from the first part the differentiated value of the processed value in terms of a differentiation time T_{D} appropriate for suppressing external disturbances acting on the system which is constituted with the process controller system having an adjustment system and the object.

17. A process controller system according to claim 16 characterized in that
said first part carries out the operation according to the equation,$\frac{{\text{1 + T}}_{\text{I}} \text{.S}}{{\text{T}}_{\text{I}} \text{. S}}$ and said
second part is a proportion operation unit with a proportion gain K_{P}, where T_{I} and K_{P} are chosen optimally for suppressing external disturbances acting on the system which is constituted with the process controller system having an adjustment system and the object.

18. A process controller system according to claim 17 characterized in that
said second controller carries out the operation according to at least one of the equations,$\text{(} \frac{{\text{1 + α T}}_{\text{I}} \text{. S}}{{\text{1 + T}}_{\text{I}} \text{. S}} \text{)}$ and$\text{(} \frac{{\text{1 + β . T}}_{\text{D}} \text{. S}}{{\text{1 + α . β . T}}_{\text{D}} \text{. S}} \text{)}$ where T_{D} is chosen optimally for suppressing external disturbance.

19. A process controller system according to claim 12 characterized in that
said second controller comprises a first and a second proportion operation unit with proportion coefficients α and γ and said lead/lag operation unit which respectively operate on the set point value and substract the processed value from the results thereof, the result of the second unit proportion operation unit being differentiated in terms of a differentiation time Td and the result of the lead/lag operation unit being integrated in terms of an integration time T_{I}, and the differentiated and integrated results and the result of the first proportion operation unit are summed and multiplied by a coefficient K_{P} to obtain the adjusting signal of the manipulated value, where K_{P}, T_{D} and T_{I} are chosen so as to be appropriate for suppressing external disturbances acting on the system which is constituted with the process controller system having an adjustment system and the object, where Td and β may be zero.

20. A process controller system according to claim 19 characterized in that
said lead/lag operation unit is a first order lag operation unit.

21. A process controller system according to claim 20 characterized in that
said lead/lag operation unit carries out the operation according to the equation,$\frac{{\text{1 + ( 1 - γ ) T}}_{\text{I}} \text{. S}}{{\text{1 + T}}_{\text{I}} \text{. S}}$

22. A process controller system according to claim 3 characterized in that
said second controller comprises a first proportion unit which multiplies the set point value by a parameter and subtracts the processed value from the result thereof, and a first order lag operation unit having a delay time T_{I} which operates the set point value and subtracts the result thereof from the integrated value of the processed value in terms of an integration time T_{I}, the two subtracted results are summed and multiplied by a parameter K_{P}, where K_{P} and T_{I} are appropriate for suppressing external disturbances acting on the system which is constituted with the process controller system having an adjustment system and the object.

23. A process controller system according to claim 1 characterized in that
said second controller comprises at least one compensatory unit having at least one adjustment parameter which gives substantially no affection to the characteristics for following the change in the set point value.

24. A process controller system according to claim 23 characterized in that
said second controller is at least one compensatory operation unit which operates the processed value and subtracts the result thereof from the set point value.

25. A process controller system according to claim 24 characterized in that
said compensatory operation unit comprises a lead/lag operation unit.

26. A process controller system according to claim 25 characterized in that
said compensatory operation unit carries out the operation according to the equation,$\frac{{\text{1 + 2 T}}_{\text{o}} \text{. S}}{{\text{1 + T}}_{\text{o}} \text{. S}}$ and the result thereof is integrated in terms of a integration time T$\frac{\text{*}}{\text{I}}$ adjusted for following the change in the set point value.

27. A process controller system according to claim 26 characterized in that
said compensatory operation unit further comprises a first proportion unit which multiplies the processed value with an adjustable constant α and subtracts the multiplied result from the set point value.

28. A process controller system according to claim 27 characterized in that
said compensatory operation unit further comprises a second proportion unit which multiplies the processed value with an adjustable constant γ and subtracts the result thereof from the set point value, and the substracted result is differentiated in terms of a differentiation time T* appropriate for following the change in the set point value.

29. A process controller system according to claim 28 characterized in that
the multiplied, integrated and differentiated results of the compensatory operation units are summed up and multiplied by a constant K$\frac{\text{*}}{\text{P}}$ adjusted for following the change in the set point value to output the adjusting signal having manipulated values.

30. A process controller system according to claim 29 characterized in that
the multiplied result of the first proportion unit is subtracted from the set point value multiplied by an adjustable constant γ instead of just directly from the set point value.

31. A process controller system according to claim 29 further characterized by
a switching-over unit for cutting off the feeding the set point value to the first proportion unit.

32. A process controller system according to claim 29 characterized in that
the multiplied result of the second proportion unit is subtracted from the set point value multiplied by an adjustable constant δ instead of just directly from the set point value.

33. A process controller system according to claim 32 further characterized in that
a switching-over unit for cutting off the feeding the set point value to the second proportion unit.

34. A process controller system according to claim 1 characterized in that
said compensation means is equipped with at least one feedback operation unit which operates on the processed value with at least one adjustable parameter β and subtracts the result thereof from the set point value and at least one control operation unit which operates the subtracted result with the adjustable parameter β.

35. A process controller system according to claim 34 characterized in that
the operational combination that carries out the operation of the control operation unit subsequent to the operation of the compensatory operation unit constitutes an operation that gives no effect to the characteristics for suppressing external disturbances acting on the system which is constituted with the process controller system having an adjustment system and the object.

36. A process controller system according to claim 35 characterized in that
the compensatory operation unit carries out the operation according to the equation,$\frac{{\text{1 + T}}_{\text{I}} \text{. S}}{{\text{1 + ( 1 - β ) T}}_{\text{I}} \text{. S}}$ and
the control operation unit carries out the operation according to the equation,$\text{(} \frac{\text{1}}{{\text{T}}_{\text{I}} \text{.S}} \text{-} \frac{\text{β}}{{\text{1+T}}_{\text{I}} \text{.S}} \text{) ,}$ where T_{I} is an integral time adjusted as appropriate for suppressing external disturbances acting on the system which is constituted with the process controller system having an adjustment system and the object.

37. A process controller system according to claim 36 characterized in that
the result output from the control operation unit is multiplied by a constant K_{P}.

38. A process controller system according to claim 36 further characterized by
a feedback operation unit which operates the set point value and subtracts the result thereof from the result of the compensatory operation unit.

39. A process controller system according to claim 38 characterized in that
said feedback operation unit carries out the operation according to the equation, 1 + T_{D}, where T_{D} is a differential time adjusted for suppressing external disturbances acting on the system which is constituted with the process controller system having an adjustment system and the object.

40. A process controller system according to claim 38 characterized in that
said compensatory operation unit further comprises a first proportion unit which multiplies the processed value with an adjustable constant α⁻¹ and subtracts the result thereof from the set point value, and the subtracted result is multiplied by the constant α.

41. A process controller system according to claim 40 characterized in that
said compensatory operation unit further comprises a second proportion unit which multiplies the processed value with an adjustable constant γ⁻¹ and subtracts the result thereof from the set point value, and the subtracted result is differentiated in terms of a differentiation time γ. T_{D} in which T_{D} is chosen for following the change in the set point value.

42. A process controller system according to claim 41 characterized in that
the three results of the compensatory operation units are summed up and multiplied by a constant K$\frac{\text{*}}{\text{P}}$ adjusted for following the change in the set point value to output the adjusting signal having manipulated values.

43. A process controller system according to claim 42 characterized in that
the multiplied result of the first proportion unit is subtracted from the set point value multiplied by an adjustable constant instead of just directly from the set point value.

44. A process controller system according to claim 42 characterized in that
the multiplied reslut of the second proportion unit is subtracted from the set point value multiplied by an adjustable constant instead of just directly from the set point value.

45. A process controller system according to claim 35 characterized in that
the compensatory operation unit carries out the operation according to the equation,$\text{(} \frac{{\text{1 + T}}_{\text{I}} \text{. S}}{{\text{1 + α .T}}_{\text{I}} \text{. S}} \text{) . (} \frac{{\text{1 + T}}_{\text{D}} \text{. S}}{{\text{1 + β .T}}_{\text{D}} \text{. S}} \text{)}$ and
the control operation unit carries out the operation according to the equation,${\text{K}}_{\text{P}} \text{( α +} \frac{\text{1}}{{\text{T}}_{\text{I}} \text{. S}} \text{) (} \frac{{\text{1 + β . T}}_{\text{D}} \text{. S}}{{\text{1 + η . T}}_{\text{D}} \text{. S}} \text{) .}$ where T_{I} is an integration time appropriate for suppressing external disturbances acting on the system which is constituted with the process controller system having an adjustment system and the object and T_{D} is a differentiation time appropriate for suppressing external disturbances acting on the system which is constituted with the process controller system having an adjustment system and the object, and T_{I} may be infinite corresponding to a system with no integration operation while T_{D} may be zero corresponding to a system with no differentiation operation.

46. A process controller system according to claim 35 characterized in that
the compensatory operation unit carries out the operation according to the equation,$\frac{{\text{1 + T}}_{\text{I}} \text{. S}}{{\text{1 + α T}}_{\text{I}} \text{. S}}$ and the control operation unit carries out the operation according to the equation,${\text{K}}_{\text{P}} \text{( α +} \frac{\text{1}}{{\text{T}}_{\text{I}} \text{. S}} \text{)}$ where T_{I} is an integration time appropriate for suppressing external disturbances acting on the system which is constituted with the process controller system having an adjustment system and the object.

47. A process controller system according to claim 46 characterized in that
the control operation unit carries out the operation according to the equation,${\text{K}}_{\text{P}} \text{{ ( 1 - α ) + (} \frac{\text{1}}{{\text{T}}_{\text{I}} \text{.S}} \text{-} \frac{\text{β}}{{\text{T}}_{\text{I}} \text{.S}} {\text{) + ( 1 - γ ) T}}_{\text{D}} \text{. S }}$ and
the feedback operation unit carries out the operation according to the equation,${\text{K}}_{\text{P}} \text{( α +} \frac{\text{β}}{{\text{1 + T}}_{\text{I}} \text{. S}} {\text{+ γ . T}}_{\text{D}} \text{. S )}$ where K_{P}, T_{I} and T_{D} are a proportion rate, an integration time and a differentiation time each chosen optimally for suppressing external disturbances acting on the system which is constituted with the process controller system having an adjustment system and the object, and T_{I} may be infinite corresponding to a system with no integration operation while T_{D} may be zero corresponding to a system with no differentiation operation.

48. A process controller system according to claim 1 characterized in that
said second controller comprises a feedback compensatory operation unit which operates on the processed value and subtracts the result thereof from the manipulated value outputted from the first controller.

49. A process controller system according to claim 48 characterized in that
said first controller comprises a control operation unit which carries out the operation according to the equation C*(s) optimally chosen for following the change in the set point value.

50. A process controller system according to claim 49 characterized in that
the equation F(s) according to which said feedback compensatory operation unit carries out the operation is chosen so that C*(s) + F(s) becomes the equation appropriate for suppressing external disturbances acting on the system which is constituted with the process controller system having an adjustment system and the object.

51. A process controller system according to claim 50 characterized by further comprising
a set point value compensatory operation unit which operates on the set point value and subtracts the result thereof from the manipulated value outputted from the control operation unit, in which
the equation H(s) according to which said compensatory operation unit carries out the operation satisfies$\text{H(s) = K x F(s) ( 0 ≦ K ≦ 1).}$

52. A process controller system according to claim 51 characterized in that${\text{C*(s) = K}}_{\text{P}} \text{* { 1 +} \frac{\text{1}}{{\text{T}}_{\text{I}} \text{*.S}} \text{+} \frac{{\text{T}}_{\text{D}} \text{*}}{{\text{1 + η . T}}_{\text{D}} \text{*. S}}$${\text{F (s) = K}}_{\text{P}} \text{* { ( α - 1) +} \frac{\text{β}}{{\text{1 + T}}_{\text{I}} \text{*.S}} \text{+} \frac{{\text{( γ - 1) . T}}_{\text{D}} \text{* . S}}{{\text{1 + η . T}}_{\text{D}} \text{* . S}} \text{}}$

53. A method for adjusting parameters of a process controller system comprising first and second controllers both for controlling a response of a process output value (PV) against a disturbance (D) applied to a process (Gp(S)) and for following a process output value (PV) to a setpoint value change (SV), comprising
a) a first step of adjusting a first adjustable parameter set (Kp, Ti; Kp, Ti, Td) of said first controller including at least parameters for proportional and integral operations (Kp, Ti), which supplies a control signal (MV) to the process (Gp(S)) on the basis of the process output value (PV) for optimally controlling the response of the process output value (PV) by adjusting the first parameter set when the disturbance (D) is applied, and
b) a second step of adjusting a second adjustable parameter set (α, β; α, β, γ; α, H1, H2; α, H1, H2, γ) of said second controller including at least one integrating parameter for integral operation (β, H2) which is adjustable independently of the first parameter set, for controlling the response of the process output value (PV) by adjusting the second parameter set when the setpoint value change (SV) is applied, characterized in that said first controller includes an integration unit (17) having a transfer function 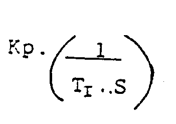
and said second controller includes a lead/lag operation unit (59, 17) having a transfer function 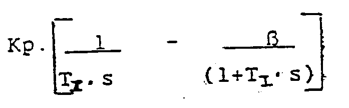 and said second controller optimally controls the response of the process output value (PV) by adjusting the integrating parameter β which is positive; where Kp and T_{I} are the proportional gain and the integrating time constant of the transfer functions and s is the complex variable.

## Patentansprüche

1. Prozeß-Regelsystem mit einer ersten und einer zweiten Regelungsvorrichtung sowohl zum Regeln einer Antwort auf einen Prozeß-Ausgangswert (PV) gegenüber einer Störung (D), die einem Prozeß (Gp(S)) zugefügt wird, als auch zum Folgen eines Prozeßausgangswertes (PV) einer Änderung eines Sollwertes (SV),
wobei die erste Regelungsvorrichtung einen ersten einstellbaren Paramtersatz (Kp, Ti; Kp, Ti, Td) einschließlich wenigstens der Parameter für proportionale und integrierende Operationen (Kp, Ti) aufweist, die dem Prozeß (Gp(S)) ein Regelsignal (MV) auf der Basis des Prozeßausgangswertes (PV) zuführen, zum optimalen Regeln der Antwort des Prozeßausgangswertes (PV) durch Einstellen des ersten Parametersatzes, wenn die Störung (D) zugeführt wird, und
wobei die zweite Regelungsvorrichtung einen zweiten einstellbaren Parametersatz (α, β; α, β, γ; α, H1, H2; α, H1, H2, γ) einschließlich wenigstens eines Integrierparameters für eine integrierende Operation (β, H2) aufweist, der unabhängig von dem ersten Parametersatz einstellbar ist, zum Regeln der Antwort des Prozeßausgangswertes (PV) durch Einstellen des zweiten Parametersatzes, wenn die Änderung des Sollwertes (SV) zugeführt wird,
**dadurch gekennzeichnet**, daß
die erste Regelungsvorrichtung eine Integrationseinheit (17) mit einer Übertragungsfunktion von 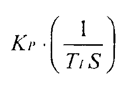 enthält,
und die zweite Regelungsvorrichtung eine Führungs-/Verzögerungs-Operationseinheit (59, 17) mit einer Übertragungsfunktion von 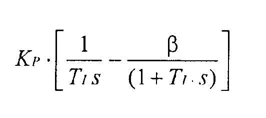 enthält,
und die zweite Regelungsvorrichtung die Antwort des Prozeßausgangswertes (PV) durch Einstellen des Integrierparameters β optimal regelt, der positiv ist; wobei Kp und T_{I} die Proportionalverstärkung und die Integrationszeitkonstante der Übertragungsfunktionen sind, und s die komplexe Variable ist.

2. Prozeß-Regelsystem nach Anspruch 1, dadurch gekennzeichnet, daß
die zweite Regelungsvorrichtung angepaßt ist, wenigstens einen Parameter einer Integrationszeit einzustellen.

3. Prozeß-Regelsystem nach Anspruch 1, dadurch gekennzeichnet, daß
die zweite Regelungsvorrichtung geeignet ist, wenigstens einen Parameter einer Proportionalverstärkung einzustellen.

4. Prozeß-Regelsystem nach Anspruch 2 oder 3, dadurch gekennzeichnet, daß
die Führungs-/Verzögerungs-Operationseinheit die Einstellparameter aufweist.

5. Prozeß-Regelsystem nach Anspruch 4, daudrch gekennzeichnet, daß
die Führungs-/Verzögerungs-Operationseinheit die Operation gemäß der Gleichung$\frac{\text{1 + β ·} {\text{T}}_{\text{I}} \text{S} \text{+ γ ·} {\text{T}}_{\text{I}} \text{·} {\text{T}}_{\text{D}} \text{.} \text{S} \text{²}}{\text{1 +} {\text{T}}_{\text{I}} \text{·} \text{S} \text{+} {\text{T}}_{\text{I}} \text{·} {\text{T}}_{\text{D}} \text{.} \text{S} \text{²}}$ ausführt, wobei T_{D} Null sein kann, um einem System ohne Differentiationsoperation zu entsprechen.

6. Prozeß-Regelsystem nach Anspruch 1, dadurch gekennzeichnet, daß
die erste Regelungsvorrichtung proportionale und integrierende Operationen ausführt.

7. Prozeß-Regelsystem nach Anspruch 1, dadurch gekennzeichnet, daß
die erste Regelungsvorrichtung weiterhin eine Differentiationsoperation ausführt.

8. Prozeß-Regelsystem nach Anspruch 1, dadurch gekennzeichnet, daß
die zweite Regelungsvorrichtung wenigstens eine Kompensations-Operationseinheit mit wenigstens einem Parameter aufweist, der im wesentlichen die Kennlinien zum Unterdrücken externer Störungen nicht beeinflußt, die auf das System wirken, das derart aufgebaut ist, daß das Prozeß-Regelsystem ein Einstellsystem und das Objekt aufweist.

9. Prozeß-Regelsystem nach Anspruch 8, dadurch gekennzeichnet, daß
die zweite Regelungsvorrichtung ein Weiterführ-Element ist, das an dem Sollwert arbeitet und das Ergebnis davon von dem manipulierten Wert subtrahiert, der von der ersten Regelungsvorrichtung ausgegeben wird.

10. Prozeß-Regelsystem nach Anspruch 9, dadurch gekennzeichnet, daß
die erste Regelungsvorrichtung eine Regel-Operationseinheit ist, die an der Differenz zwischen dem Sollwert und dem Prozeßwert arbeitet und das Ergebnis davon als den manipulierten Wert ausgibt.

11. Prozeß-Regelsystem nach Anspruch 10, dadurch gekennzeichnet, daß
die zweite Regelungsvorrichtung die Operation gemäß der Gleichung 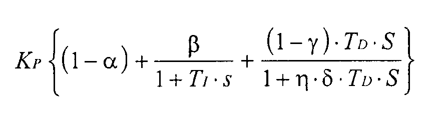 ausführt, und
die erste Regelungsvorrichtung die Operation gemäß der Gleichung 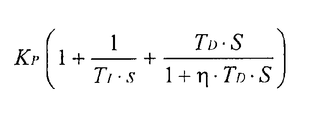 ausführt,
wobei K_{P} eine Proportionalverstärkung ist, T_{I} eine Integrationszeit ist und T_{D} eine Vorhaltezeit ist, die alle optimal gewählt sind zum Unterdrücken der externen Störungen, die auf das System wirken, und T_{I} unendlich sein kann, was einem System entspricht, das keine Integrationsoperation aufweist, während T_{D} Null sein kann, entsprechend einem System ohne Differentiationsoperation.

12. Prozeß-Regelsystem nach Anspruch 8, dadurch gekennzeichnet, daß
die zweite Regelungsvorrichtung wenigstens ein Filterelement ist, das an dem Sollwert arbeitet, und das Ergebnis davon durch den Prozeßwert subtrahiert und durch eine Regel-Operationseinheit bearbeitet wird, um das Einstell-Ausgangssignal des manipulierten Wertes zu erhalten.

13. Prozeß-Regelsystem nach Anspruch 12, dadurch gekennzeichnet, daß
die erste Regelungsvorrichtung die Operation optimal zum Unterdrücken externer Störungen ausführt, die auf das System wirken, das mit dem Prozeß-Regelsystem gebildet ist, das ein Einstellsystem und das Objekt aufweist.

14. Prozeß-Regelsystem nach Anspruch 13, dadurch gekennzeichnet, daß
die zweite Regelungsvorrichtung die Operation ausführt, gefolgt durch die Operation der Regel-Operationseinheit, um eine gesamte Übertragungsfunktion in Zusammenarbeit mit der Regel-Operationseinheit zu bilden, die optimal auf ein Folgen der Änderung des Sollwertes antwortet.

15. Prozeß-Regelsystem nach Anspruch 14, dadurch gekennzeichnet, daß
die erste Regelungsvorrichtung die Operation gemäß der Gleichung 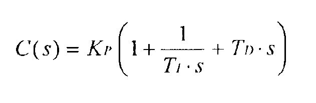 ausführt,und
die zweite Regelungsvorrichtung die Operation gemäß der Gleichung$\text{H} \text{(} \text{s} \text{) =} \frac{\text{1 + α} {\text{T}}_{\text{I·S}} \text{+ β} {\text{T}}_{\text{I}} {\text{T}}_{\text{D·S}} \text{²}}{\text{1 +} {\text{T}}_{\text{I·S}} \text{+} {\text{T}}_{\text{I}} {\text{T}}_{\text{D·S}} \text{²}}$ ausführt,
wobei K_{P}, T_{I} und T_{D} jeweils eine Proportionalverstärkung, eine Integrationszeit und eine Vorhaltezeit sind, die optimal gewählt sind zum Unterdrücken externer Störungen, die auf das System wirken, das mit dem Prozeß-Regelsystem gebildet ist, das ein Einstellsysstem und das Objekt aufweist, und T_{I} unendlich sein kann, entsprechend einem System ohne Integratationsoperation, während T_{D} Null sein kann, entsprechend einem System ohne Differentiationsoperation.

16. Prozeß-Regelsystem nach Anspruch 12, dadurch gekennzeichnet, daß
die erste Regelungsvorrichtung einen ersten Teil aufweist, der das Ausgangssignal von der zweiten Regelungsvorrichtung bearbeitet, und einen zweiten Teil, der von dem Ausgangssignal von dem ersten Teil den differenzierten Wert des Prozeßwertes bezüglich einer Differentiationszeit T_{D} subtrahiert, die zum Unterdrücken externer Störungen geeignet ist, die auf das System wirken, das mit dem Prozeß-Regelsystem gebildet ist, das ein Einstellsystem und das Objekt aufweist.

17. Prozeß-Regelsystem nach Anspruch 16, dadurch gekennzeichnet, daß
der erste Teil die Operation gemäß der Gleichung$\frac{\text{1 +} {\text{T}}_{\text{I·S}}}{{\text{T}}_{\text{I·S}}}$ ausführt, und der zweite Teil eine Proportional-Operationseinheit mit einer Proportionalverstärkung K_{P} ist, wobei T_{I} und K_{P} optimal gewählt sind zum Unterdrücken externer Störungen, die auf das System wirken, das mit dem Prozeß-Regelsystem gebildet ist, das ein Einstellsystem und das Objekt aufweist.

18. Prozeß-Regelsystem nach Anspruch 17, dadurch gekennzeichnet, daß
die zweite Regelungsvorrichtung die Operation gemäß wenigstens einer der Gleichungen 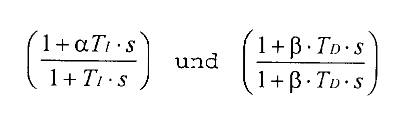 ausführt,
wobei T_{D} optimal gewählt wird zum Unterdrücken einer externen Störung.

19. Prozeß-Regelsystem nach Anspruch 12, dadurch gekennzeichnet, daß
die zweite Regelungsvorrichtung eine erste und eine zweite Proportional-Operationseinheit mit Proportinalkoeffizienten α und γ aufweist, und die Führungs-/Verzögerungs-Operationseinheit, die jeweils an dem Sollwert arbeiten und den Prozeßwert von den Ergebnissen davon subtrahieren, wobei das Ergebnis der zweiten Proportional-Operationseinheit bezüglich einer Vorhaltezeit TD differenziert wird, und das Ergebnis der Führungs-/Verzögerungs-Operationseinheit bezüglich einer Integrationszeit T_{I} integriert wird, und die differenzierten und integrierten Ergebnisse und das Ergebnis der ersten Proportional-Operationseinheit summiert und mit einem Koeffizienten K_{P} multipliziert werden, um das Einstellsignal des manipulierten Wertes zu erhalten, wobei K_{P}, T_{I} und T_{D} derart gewählt werden, daß sie geeignet zum Unterdrücken externer Störungen sind, die auf das System wirken, das mit dem Prozeß-Regelsystem aufgebaut ist, das ein Einstellsystem und das Objekt aufweist, wobei T_{D} und β Null sein können.

20. Prozeß-Regelsystem nach Anspruch 19, dadurch gekennzeichnet, daß
die Führungs-/Verzögerungs-Operationseinheit eine Verzögerungs-Operationeinheit erster Ordnung ist.

21. Prozeß-Regelsystem nach Anspruch 20, dadurch gekennzeichnet, daß
die Führungs-/Verzögerungs-Operationseinheit die Operation gemäß der Gleichung$\frac{\text{1 + (1-α)} {\text{T}}_{\text{I·S}}}{\text{1 +} {\text{T}}_{\text{I·S}}}$ ausführt.

22. Prozeß-Regelsystem nach Anspruch 13, dadurch gekennzeichnet, daß
die zweite Regelungsvorrichtung eine erste Proportional-Einheit aufweist, die den Sollwert mit einem Parameter multipliziert und den Prozeßwert von dem Ergebnis davon subtrahiert, und eine Verzögerungs-Operationseinheit erster Ordnung mit einer Verzögerungzeit T_{I}, die den Sollwert bearbeitet und das Ergebnis davon von dem integrierten Wert des bearbeiteten Wertes bezüglich einer Integrationszeit T_{I} subtrahiert, wobei die zwei subtrahierten Ergebnisse summiert werden und mit einem Parameter K_{P} multipliziert werden, wobei K_{P} und T_{I} geeignet sind zum Unterdrücken externer Störungen, die auf das System wirken, das mit dem Prozeß-Regelsystem gebildet ist, das ein Einstellsystem und das Objekt aufweist.

23. Prozeß-Regelsystem nach Anspruch 1, dadurch gekennzeichnet, daß
die zweite Regelungsvorrichtung wenigstens eine Kompensations-Einheit mit wenigstens einem Einstellparameter aufweist, der im wesentlichen keine Auswirkung auf die Kennlinien zum Folgen der Änderung des Sollwertes hat.

24. Prozeß-Regelsystem nach Anspruch 23, dadurch gekennzeichnet, daß
die zweite Regelungsvorrichtung wenigstens eine Kompensations-Operationseinheit ist, die den Prozeßwert bearbeitet und das Ergebnis davon von dem Sollwert subtrahiert.

25. Prozeß-Regelsystem nach Anspruch 24, dadurch gekennzeichnet, daß
die Kompensations-Operationseinheit eine Führungs-/Verzögerungs-Operationseinheit aufweist.

26. Prozeß-Regelsystem nach Anspruch 25, dadurch gekennzeichnet, daß
die Kompensations-Operationseinheit die Operation gemäß der Gleichung$\frac{\text{1 + 2} {\text{T}}_{\text{o}} \text{·S}}{\text{1 +} {\text{T}}_{\text{o}} \text{·S}}$ ausführt,
und das Ergebnis davon mit einer Integrationszeit T_{I}* integriert wird, die zum Folgen der Änderung des Sollwertes eingestellt ist.

27. Prozeß-Regelsystem nach Anspruch 26, dadurch gekennzeichnet, daß
die Kompensations-Operationseinheit weiterhin eine erste Proportional-Einheit aufweist, die den Prozeßwert mit einer einstellbaren Konstante α multipliziert und das multiplizierte Ergebnis von dem Sollwert subtrahiert.

28. Prozeß-Regelsystem nach Anspruch 27, dadurch gekennzeichnet, daß
die Kompensations-Operationseinheit weiterhin eine zweite Proportional-Einheit aufweist, die den Prozeßwert mit einer einstellbaren Konstante γ multipliziert und das Ergebnis davon von dem Sollwert subtrahiert, und das subtrahierte Ergebnis bezüglich einer Vorhaltezeit T* differenziert wird, die geeignet ist zum Folgen der Änderung des Sollwertes.

29. Prozeß-Regelsystem nach Anspruch 28, dadurch gekennzeichnet, daß
die multiplizierten, integrierten und differenzierten Ergebnisse der Kompensations-Operationseinheiten aufsummiert und mit einer Konstante K_{P}* multipliziert werden, die zum Folgen der Änderung des Sollwertes eingestellt ist, um das Einstellsignal mit manipulierten Werten auszugeben.

30. Prozeß-Regelsystem nach Anspruch 29, dadurch gekennzeichnet, daß
das multiplizierte Ergebnis der ersten Proportional-Einheit von dem Sollwert subtrahiert wird, der mit einer einstellbaren Konstante δ multipliziert ist, statt direkt von dem Sollwert.

31. Prozeß-Regelsystem nach Anspruch 29, weiterhin gekennzeichnet durch
eine Umschalt-Einheit zum Abschneiden des Führens des Sollwertes zu der ersten Proportional-Einheit.

32. Prozeß-Regelsystem nach Anspruch 29, dadurch gekennzeichnet, daß
das multiplizierte Ergebnis der zweiten Proportional-Einheit von dem Sollwert subtrahiert wird, der mit einer einstellbaren Konstanten δ multipliziert ist, statt direkt von dem Sollwert.

33. Prozeß-Regelsystem nach Anspruch 32, weiterhin dadurch gekennzeichnet, daß
eine Umschalt-Einheit zum Abschneiden des Führens des Sollwertes zu der zweiten Proportional-Einheit vorgesehen ist.

34. Prozeß-Regelsystem nach Anspruch 1, dadurch gekennzeichnet, daß
die Kompensationseinrichtung ausgestattet ist mit wenigstens einer Rückführ-Operationseinheit, die an dem Prozeßwert mit wenigstens einem einstellbaren Parameter β arbeitet, und das Ergebnis davon von dem Sollwert subtrahiert, und wenigstens einer Regel-Operationseinheit, die das subtrahierte Ergebnis mit dem einstellbaren Parameter β bearbeitet.

35. Prozeß-Regelsystem nach Anspruch 34, dadurch gekennzeichnet, daß
die Operations-Kombination, die die Operation der Regel-Operationseinheit der Operation der Kompensations-Operationseinheit folgend ausführt, eine Operation bildet, die keine Wirkung auf die Kennlinien zum Unterdrücken externer Störungen ergibt, die auf das System wirken, das mit dem Prozeß-Regelsystem gebildet ist, das ein Einstellsystem und das Objekt aufweist.

36. Prozeß-Regelsystem nach Anspruch 35, dadurch gekennzeichnet, daß
die Kompensations-Operationseinheit die Operation gemäß der Gleichung$\frac{\text{1 +} {\text{T}}_{\text{I}} \text{·S}}{\text{1 + (1 - β)·} {\text{T}}_{\text{I}} \text{·S}}$ ausführt, und
die Regel-Operationseinheit die Operation gemäß der Gleichung 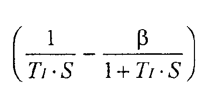 ausführt,
wobei T_{I} eine Integrationszeit ist, die als geeignet zum Unterdrücken externer Störungen eingestellt ist, die auf das System wirken, das mit dem Prozeß-Regelsystem gebildet ist, das ein Einstellsystem und das Objekt aufweist.

37. Prozeß-Regelsystem nach Anspruch 36, dadurch gekennzeichnet, daß
das Ergebnis, das von der Regel-Operationseinheit ausgegeben wird, mit einer Konstanten K_{P} multipliziert wird.

38. Prozeß-Regelsystem nach Anspruch 36, weiterhin dadurch gekennzeichnet durch
eine Rückführ-Operationseinheit, die den Sollwert bearbeitet und das Ergebnis davon von dem Ergebnis der Kompensations-Operationseinheit subtrahiert.

39. Prozeß-Regelesystem nach Anspruch 38, dadurch gekennzeichnet, daß
die Rückführ-Operationseinheit die Operation gemäß der Gleichung 1 + T_{D} ausführt, wobei T_{D} eine Vorhaltzeit ist, die zum Unterdrücken externer Störungen eingestellt ist, die auf das System wirken, das mit dem Prozeß-Regelsystem gebildet ist, das ein Einstellsysytem und das Objekt aufweist.

40. Prozeß-Regelsystem nach Anspruch 38, dadurch gekennzeichnet, daß
die Kompensations-Operationseinheit weiterhin eine erste Proportional-Einheit aufweist, die den Prozeßwert mit einer einstellbaren Konstante α⁻¹ multipliziert und das Ergebnis davon von dem Sollwert subtrahiert, wobei das subtrahierte Ergebnis mit der Konstanten α mutlipliziert wird.

41. Prozeß-Regelsystem nach Anspruch 40, dadurch gekennzeichnet, daß
die Kompensations-Operationseinheit weiterhin eine zweite Proportional-Einheit aufweist, die den Prozeßwert mit einer einstellbaren Konstante δ⁻¹ multipliziert und das Ergebnis davon von dem Sollwert subtrahiert, und das subtrahierte Ergebnis bezüglich einer Differentiationzeit δ x T_{D} differenziert wird, wobei T_{D} zum Folgen der Änderung des Sollwertes gewählt ist.

42. Prozeß-Regelsystem nach Anspruch 41, dadurch gekennzeichnet, daß
die drei Ergebnisse der Kompensations-Operationseinheiten aufsummiert und mit einer Konstanten K_{P}* multipliziert werden, die zum Folgen der Änderung des Sollwertes eingestellt ist, um das Einstellsignal mit manipulierten Werten auszugeben.

43. Prozeß-Regelsystem nach Anspruch 42, dadurch gekennzeichnet, daß
das multiplizierte Ergebnis der ersten Proprortional-Einheit von dem Sollwert subtrahiert wird, der mit einer einstellbaren Konstgante multipliziert wird, statt direkt von dem Sollwert.

44. Prozeß-Regelsystem nach Anspruch 42, dadurch gekennzeichnet, daß
das multiplizierte Ergebnis der zweiten Proportinal-Einheit von dem Sollwert subtrahiert wird, der mit einer einstellbaren Konstante multipliziert ist, anstatt direkt von dem Sollwert.

45. Prozeß-Regelsystem nach Anspruch 35, dadurch gekennzeichnet, daß
die Kompensations-Operationseinheit die Operation gemäß der Gleichung 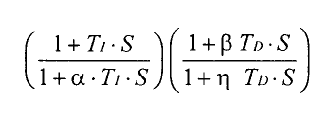 ausführt, und
die Regel-Operationseinheit die Operation gemäß der Gleichung 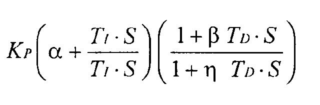 ausführt,
wobei T_{I} eine Integrationszeit ist, die geeignet ist zum Unterdrücken externer Störungen, die auf das System wirken, das mit Prozeß-Regelsystem gebildet ist, das ein Einstellsystem und das Objekt aufweist, und T_{D} eine Vorhaltzeit ist, die geeignet ist zum Unterdrücken externer Störungen, die auf das System wirken, das mit dem Prozeß-Regelsystem gebildet ist, das ein Einstellsystem und das Objekt aufweist, und T_{I} unendlich sein kann, entsprechend einem System ohne Integrationsoperation, während T_{D} Null sein kann, entsprechend einem System ohne Differentiationsoperation.

46. Prozeß-Regelsystem nach Anspruch 35, dadurch gekennzeichnet, daß
die Kompensationsoperatinseinheit die Operation gemäß der Gleichung$\frac{\text{1 +} {\text{T}}_{\text{I}} \text{·S}}{\text{1 + α} {\text{T}}_{\text{I}} \text{·S}}$ ausführt, und
die Regel-Operationseinheit die Operation gemäß der Gleichung 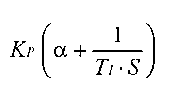 ausführt,
wobei T_{I} eine Integrationszeit ist, die geeignet ist zum Unterdrücken externer Störungen, die auf das System wirken, das mit dem Prozeß-Regelsystem gebildet ist, das ein Einstellsystem und das Objekt aufweist.

47. Prozeß-Regelsystem nach Anspruch 46, dadurch gekennzeichnet, daß
die Regel-Operationseinheit die Operation gemäß der Gleichung 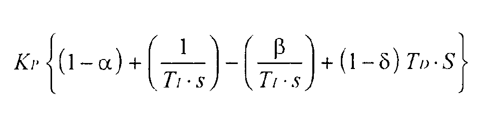 ausführt, und
die Rückführ-Operationseinheit die Operation gemäß der Gleichung 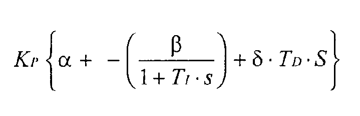 ausführt,
wobei K_{P}, T_{I} und T_{D} eine Proportionalrate, eine Integrationszeit und eine Vorhalte- bzw.
Differentiationszeit sind, die jeweils optimal gewählt sind zum Unterdrücken externer Störungen, die auf das System wirken, das mit dem Prozeß-Regelsystem gebildet ist, das ein Einstellsystem und das Objekt aufweist, und T_{I} unendlich sein sein kann, entsprechend einem System mit keiner Integrationsoperation, während T_{D} Null sein kann, enstprechend einem System ohne Differentiationsoperation.

48. Prozeß-Regelsystem nach Anspruch 1, dadurch gekennzeichnet, daß
die zweite Regelungsvorrichtung eine Rückführ-Kompensations-Operationsseinheit aufweist, die an dem Prozeßwert arbeitet und das Ergebnis davon von dem manipulierten Wert subtrahiert, der von der ersten Regelungsvorrichtung ausgegeben wird.

49. Prozeß-Regelsystem nach Anspruch 48, dadurch gekennzeichnet, daß
die erste Regelungsvorrichtung eine Regel-Operationseinheit aufweist, die die Operation gemäß der Gleichung C*(s) ausführt, die optimal gewählt ist zum Folgen der Änderung des Sollwertes.

50. Prozeß-Regelsystem nach Anspruch 49, dadurch gekennzeichnet, daß
die Gleichung F(s), gemäß der die Rückführ-Kompensations-Operationseinheit die Operation ausführt, derart gewählt wird, daß C*(s) + F(s) die Gleichung wird, die geeignet ist zum Unterdrücken externer Störungen, die auf das System wirken, das mit dem Prozeß-Regelsystem gebildet ist, das ein Einstellsystem und das Objekt aufweist.

51. Prozeß-Regelsystem nach Anspruch 50, dadurch gekennzeichnet, daß es weiterhin folgendes aufweist: eine Sollwert-Kompensations-Operationseinheit, die an dem Sollwert arbeitet und das Ergebnis davon von dem manipulierten Wert subtrahiert, der von der Regel-Operationseinheit ausgegeben wird, wobei die Gleichung H(s), gemäß der die Kompensations-Operationseinheit die Operation ausführt, folgender Bedingung genügt:$\text{H(s) = K x F(s) (0 ≦ K ≦ 1).}$

52. Prozeß-Regelsystem nach Anspruch 51, dadurch gekennzeichnet, daß folgendes gilt:

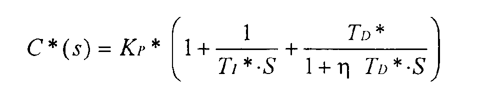

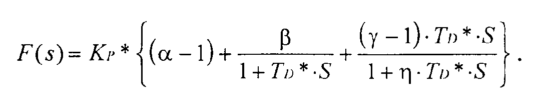

53. Verfahren zum Einstellen von Parametern eines Prozeß-Regelsystems mit einer ersten und einer zweiten Regelungsvorrichtung sowohl zum Regeln einer Antwort auf einen Prozeßausgangswert (PV) gegenüber einer Störung (D), die einem Prozeß (Gp(S)) zugefügt wird, als auch zum Folgen eines Prozeßausgangswertes (PV) einer Änderung eines Sollwertes (SV), wobei das Verfahren folgendes aufweist:
a) einen ersten Schritt zum Einstellen eines ersten einstellbaren Paramtersatzes (K_{P}, Ti; Kp, Ti, Td) der ersten Regelungsvorrichtung einschließlich wenigstens der Parameter für proportionale und integrierende Operationen (Kp, Ti), die dem Prozeß (Gp(S)) ein Regelsignal (MV) auf der Basis des Prozeßausgangswertes (PV) zuführen zum optimalen Regeln der Antwort des Prozeßausgangswertes (PV) durch Einstellen des ersten Parametersatzes, wenn die Störung (D) zugeführt wird, und
b) einen zweiten Schritt zum Einstellen eines zweiten einstellbaren Parametersatzes (α, β; α, β, γ; α, H1, H2, α, H1, H2, γ) der zweiten Regelungsvorrichtung einschließlich wenigstens eines Integrierparameters für eine integrierende Operation (β, H2), der unabhängig von dem ersten Parametersatz einstellbar ist, zum Regeln der Antwort des Prozeßausgangswertes (PV) durch Einstellen des zweiten Parametersatzes, wenn die Änderung des Sollwertes (SV) zugeführt wird,
**dadurch gekennzeichnet**, daβ
die erste Regelungsvorrichtung eine Integrationseinheit (17) mit einer Übertragungsfunktion von 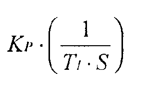 enthält,
und die zweite Regelungsvorrichtung eine Führungs-/Verzögerungs-Operationseinheit (59, 17) mit einer Übertragungsfunktion von 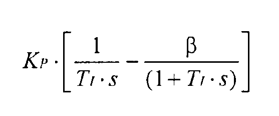 enthält,
und die zweite Regelungsvorrichtung die Antwort des Prozeßausgangswertes (PV) durch Einstellen des Integrierparameters β optimal regelt, der positiv ist; wobei Kp und T_{I} die Proportionalverstärkung und die Integrationszeitkonstante der Übertragungsfunktionen sind, und s die komplexe Variable ist.

## Revendications

1. Système de contrôleur automatique de processus comprenant des premier et second contrôleurs pour commander à la fois une réponse d'une valeur de sortie du processus (PV) par rapport à une perturbation (D) appliquée à un processus (Gp(S)) et pour suivre une valeur de sortie du processus (PV) sur changement de la valeur du point de consigne (SV),
ledit premier contrôleur comportant un premier ensemble de paramètres ajustables (Kp, Ti ; Kp, Ti, Td) comportant au moins des paramètres pour des opérations proportionnelle et intégrale (Kp, Ti), qui délivre un signal de commande (MV) au processus (Gp(S)) sur la base de la valeur de sortie du processus (PV) pour commander de manière optimale la réponse de la valeur de sortie du processus (PV) en ajustant le premier ensemble de paramètres lorsque la perturbation (D) est appliquée, et
ledit second contrôleur comportant un second ensemble de paramètres ajustables (α, β ; α, β, γ; α, H1, H2, α, H1, H2, γ) comportant au moins un paramètre d'intégration pour l'opération d'intégration (β, H2) qui est ajustable de manière indépendante au premier ensemble de paramètres, pour commander la réponse de la valeur de sortie du processus (PV) en ajustant le second ensemble de paramètres lorsque le changement de la valeur du point de consigne (SV) est appliqué, caractérisé en ce que ledit premier contrôleur comporte une unité d'intégration (17) ayant une fonction de transfert 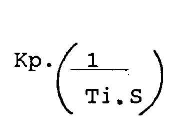 et ledit second contrôleur comporte une unité d'opération d'avance/retard (59, 17) ayant une fonction de transfert 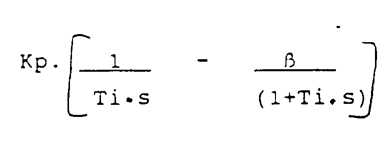 et ledit second contrôleur commande de manière optimale la réponse de la valeur de sortie du processus (PV) en ajustant le paramètre d'intégration β qui est positif ; où Kp et Ti sont le gain proportionnel et la constante de temps d'intégration des fonctions de transfert et s est la variable complexe.

2. Système de contrôleur de processus automatique selon la revendication 1, caractérisé en ce que
ledit second contrôleur est prévu pour ajuster au moins un paramètre d'un temps d'intégration.

3. Système de contrôleur de processus automatique selon la revendication 1, caractérisé en ce que
ledit second contrôleur est prévu pour ajuster au moins un paramètre d'un gain proportionnel.

4. Système de contrôleur de processus automatique selon la revendication 2 ou 3, caractérisé en ce que
ladite unité d'opération d'avance/retard comprend ledit paramètre d'ajustement.

5. Système de contrôleur de processus automatique selon la revendication 4, caractérisé en ce que
ladite unité d'opération d'avance/retard effectue l'opération conformément à l'équation,$\frac{{\text{1 + β.T}}_{\text{I}} {\text{.S + γ.T}}_{\text{I}} {\text{.T}}_{\text{D}} \text{.S²}}{{\text{1 + T}}_{\text{I}} {\text{.S + T}}_{\text{I}} {\text{.T}}_{\text{D}} \text{.S²}}$ où T_{D} peut représenter zéro de façon à correspondre à un système sans opération de différentiation.

6. Système de contrôleur de processus automatique selon la revendication 1, caractérisé en ce que
ledit premier contrôleur effectue les opérations proportionnelle et d'intégration.

7. Système de contrôleur de processus automatique selon la revendication 1, caractérisé en ce que
ledit premier contrôleur effectue de plus une opération de différentiation.

8. Système de contrôleur de processus automatique selon la revendication 1, caractérisé en ce que
ledit second contrôleur comprend au moins une unité d'opération de compensation ayant au moins un paramètre qui n'entraîne pratiquement aucune influence sur les caractéristiques supprimant les perturbations externes agissant sur le système qui est constitué avec le système de contrôleur de processus automatique ayant un système d'ajustement et de l'objet.

9. Système de contrôleur de processus automatique selon la revendication 8, caractérisé en ce que
ledit second contrôleur est un élément d'action directe qui agit sur la valeur du point de consigne et soustrait son résultat de la valeur traitée sortie à partir du premier contrôleur.

10. Système de contrôleur de processus automatique selon la revendication 9, caractérisé en ce que
ledit premier contrôleur est une unité d'opération de commande qui agit sur la différence entre la valeur du point de consigne et la valeur traitée et sort son résultat comme la valeur traitée.

11. Système de contrôleur de processus automatique selon la revendication 10, caractérisé en ce que
ledit second contrôleur effectue l'opération conformément à l'équation${\text{K}}_{\text{P}} \text{{ (1- α ) +} \frac{\text{β}}{{\text{1 + T}}_{\text{I}} \text{.S}} \text{+} \frac{{\text{(1 - γ ) . T}}_{\text{D}} \text{. S}}{{\text{1 + η . γ . T}}_{\text{D}} \text{. S}} \text{} ,}$ et
ledit premier contrôleur effectue l'opération conformément à l'équation,${\text{K}}_{\text{P}} \text{(1 +} \frac{\text{1}}{{\text{T}}_{\text{I}} \text{. S}} \text{+} \frac{{\text{T}}_{\text{D}} \text{. S}}{{\text{1 + η . T}}_{\text{D}} \text{. S}} \text{) ,}$ où K_{P} est un gain proportionnel, T_{I} est un temps d'intégration et T_{D} est un temps de différentiation chacun étant choisi de manière optimale pour supprimer les perturbations externes agissant sur le système et T_{I} peut représenter l'infini correspondant à un système sans opération d'intégration tandis que T_{D} peut représenter zéro correspondant à un système sans opération de différentiation.

12. Système de contrôleur de processus automatique selon la revendication 8, caractérisé en ce que
ledit second contrôleur est au moins un élément de filtre qui agit sur la valeur du point de consigne et son résultat est soustrait de la valeur traitée et mis en oeuvre par une unité d'opération de commande pour obtenir la sortie d'ajustement de la valeur traitée.

13. Système de contrôleur de processus automatique selon la revendication 12, caractérisé en ce que
ledit premier contrôleur effectue l'opération pour supprimer de manière optimale les perturbations externes agissant sur le système qui est constitué du système de contrôleur de processus automatique ayant un système d'ajustement et l'objet.

14. Système de contrôleur de processus automatique selon la revendication 13, caractérisé en ce que
ledit second contrôleur effectue l'opération suivie par l'opération de l'unité d'opération de commande dans l'ordre afin de constituer une fonction de transfert totale en coopération avec l'unité d'opération de commande répondant de manière optimale pour suivre le changement de la valeur du point de consigne.

15. Système de contrôleur de processus automatique selon la revendication 14, caractérisé en ce que
ledit premier contrôleur effectué l'opération conformément à l'équation,${\text{C(s) = K}}_{\text{P}} \text{( 1 +} \frac{\text{1}}{{\text{T}}_{\text{I}} \text{. S}} {\text{+ T}}_{\text{D}} \text{. S ),}$ et
ledit second contrôleur effectue l'opération conformément à l'équation,$\text{H(s) =} \frac{{\text{1 + α T}}_{\text{I}} {\text{.S + β T}}_{\text{I}} {\text{T}}_{\text{D}} \text{.S²}}{{\text{1 + T}}_{\text{I}} {\text{.S + T}}_{\text{I}} {\text{T}}_{\text{D}} \text{.S²}}$ où K_{P}, T_{I} et T_{D} sont respectivement le gain proportionnel, le temps d'intégration et le temps de différentiation choisis de manière optimale pour supprimer les perturbations externes agissant sur le système qui est constitué avec le système de contrôleur de processus automatique ayant un système d'ajustement et l'objet, et T_{I} peut représenter l'infini correspondant à un système sans opération d'intégration tandis que T_{D} peut représenter zéro correspondant à un système sans opération de différentiation.

16. Système de contrôleur de processus automatique selon la revendication 12, caractérisé en ce que
ledit premier contrôleur comprend une première partie qui met en oeuvre la sortie provenant du second contrôleur et une seconde partie qui soustrait de la sortie de la première partie la valeur différentiée de la valeur traitée en terme de temps de différentiation T_{D} approprié pour supprimer les perturbations externes agissant sur le système qui est constitué avec le système de contrôleur de processus automatique ayant un système d'ajustement et l'objet.

17. Système de contrôleur de processus automatique selon la revendication 16, caractérisé en ce que
ladite première partie effectue l'opération conformément à l'équation$\frac{{\text{1 + T}}_{\text{I}} \text{.S}}{{\text{T}}_{\text{I}} \text{. S}}$ et ladite seconde partie est une unité d'opération proportionnelle avec un gain proportionnel K_{P}, où T_{I} et K_{P} sont choisis de manière optimale pour supprimer les perturbations externes agissant sur le système qui est constitué avec le système de contrôleur de processus automatique ayant un système d'ajustement et l'objet.

18. Système de contrôleur de processus automatique selon la revendication 17, caractérisé en ce que
ledit second contrôleur effectue l'opération conformément à au moins une des équations,$\text{(} \frac{{\text{1 + α T}}_{\text{I}} \text{. S}}{{\text{1 + T}}_{\text{I}} \text{. S}} \text{)}$ et$\text{(} \frac{{\text{1 + β . T}}_{\text{D}} \text{. S}}{{\text{1 + α . β. T}}_{\text{D}} \text{. S}} \text{)}$ où T_{D} est choisi de manière optimale pour supprimer la perturbation externe.

19. Système de contrôleur de processus automatique selon la revendication 12, caractérisé en ce que
ledit second contrôleur comprend une première et une seconde unité d'opération proportionnelle avec des coefficients de proportion α et γ et ladite unité d'opération d'avance/retard qui respectivement agit sur la valeur du point de consigne et soustrait la valeur traitée de ses résultats, le résultat de la seconde unité d'opération de proportion étant différentiée en termes de temps de différentiation Td et le résultat de l'unité d'opération d'avance/retard étant intégrée en termes de temps d'intégration T_{I} et les résultats différentiés et intégrés et le résultat de la première unité d'opération de proportion sont sommés et multipliés par un coefficient K_{P} afin d'obtenir le signal d'ajustement de la valeur traitée, où K_{P}, T_{I} et T_{D} sont choisis de façon à être appropriés pour supprimer les perturbations externes agissant sur le système qui est constitué avec le système de contrôleur de processus automatique ayant un système d'ajustement et l'objet, où TD et β peuvent être égaux à zéro.

20. Système de contrôleur de processus automatique selon la revendication 19, caractérisé en ce que
ladite unité d'opération d'avance/retard est une unité d'opération de retard du premier ordre.

21. Système de contrôleur de processus automatique selon la revendication 20, caractérisé en ce que
ladite unité d'opération d'avance/retard effectue l'opération conformément à l'équation,$\frac{{\text{1 + ( 1 - γ ) T}}_{\text{I}} \text{. S}}{{\text{1 + T}}_{\text{I}} \text{. S}}$

22. Système de contrôleur de processus automatique selon la revendication 3, caractérisé en ce que
ledit second contrôleur comprend une première unité de proportion qui multiplie la valeur du point de consigne par un paramètre et soustrait la valeur traitée de son résultat et une unité d'opération de retard du premier ordre ayant un temps de retard T_{I} qui met en oeuvre la valeur du point de consigne et soustrait son résultat de la valeur intégrée de la valeur traitée en termes de temps d'intégration T_{I}, les deux résultats soustraits sont sommés et multipliés par un paramètre K_{P}, où K_{P} et T_{I} sont appropriés pour supprimer les perturbations externes agissant sur le système qui est constitué avec le système de contrôleur de processus automatique ayant un système d'ajustement et l'objet.

23. Système de contrôleur de processus automatique selon la revendication 1, caractérisé en ce que
ledit second contrôleur comprend au moins une unité de compensation ayant au moins un paramètre d'ajustement qui n'influence pratiquement pas les caractéristiques pour suivre le changement de la valeur du point de consigne.

24. Système de contrôleur de processus automatique selon la revendication 23, caractérisé en ce que
ledit second contrôleur est au moins une unité d'opération de compensation qui agit sur la valeur traitée et soustrait son résultat de la valeur du point de consigne.

25. Système de contrôleur de processus automatique selon la revendication 24, caractérisé en ce que
ladite unité d'opération de compensation comprend une unité d'opération d'avance/retard.

26. Système de contrôleur de processus automatique selon la revendication 25, caractérisé en ce que
ladite unité d'opération de compensation effectue l'opération conformément à l'équation,$\frac{{\text{1 + 2 T}}_{\text{o}} \text{. S}}{{\text{1 + T}}_{\text{o}} \text{. S}}$ et son résultat est intégré en termes d'un temps d'intégration T*_{I} ajusté pour suivre le changement de la valeur du point de consigne.

27. Système de contrôleur de processus automatique selon la revendication 26, caractérisé en ce que
ladite unité d'opération de compensation comprend de plus une première unité de proportion qui multiplie la valeur traitée avec une constante ajustable a et soustrait le résultat multiplié de la valeur du point de consigne.

28. Système de contrôleur de processus automatique selon la revendication 27, caractérisé en ce que
ladite unité d'opération de compensation comprend de plus une seconde unité de proportion qui multiplie la valeur traitée avec une constante γ et soustrait son résultat de la valeur du point de consigne et le résultat soustrait est différentié en termes de temps de différentiation T* approprié pour suivre le changement de la valeur du point de consigne.

29. Système de contrôleur de processus automatique selon la revendication 28, caractérisé en ce que
les résultats multipliés, intégrés et différentiés des unités d'opération de compensation sont sommés et multipliés par une constante K*_{P} ajustée pour suivre le changement de la valeur du point de consigne afin de sortir le signal d'ajustement ayant les valeurs traitées.

30. Système de contrôleur de processus automatique selon la revendication 29, caractérisé en ce que
le résultat multiplié de la première unité de proportion est soustrait de la valeur du point de consigne multipliée par une constante ajustable γ au lieu de l'être simplement directement de celle de la valeur du point de consigne.

31. Système de contrôleur de processus automatique selon la revendication 29, caractérisé de plus par
une unité d'interrupteur pour couper l'alimentation de la valeur du point de consigne à la première unité de proportion.

32. Système de contrôleur de processus automatique selon la revendication 29, caractérisé en ce que
le résultat multiplié de la seconde unité de proportion est soustrait de la valeur du point de consigne multipliée par une constante ajustable δ au lieu de l'être simplement directement de la valeur du point de consigne.

33. Système de contrôleur de processus automatique selon la revendication 32, caractérisé de plus en ce qu'est prévu
une unité d'interrupteur pour couper l'alimentation de la valeur du point de consigne à la seconde unité de proportion.

34. Système de contrôleur de processus automatique selon la revendication 1, caractérisé en ce que
ledit moyen de compensation est muni d'au moins une unité d'opération de contre-réaction qui agit sur la valeur traitée avec au moins un paramètre ajustable β et soustrait son résultat de la valeur du point de consigne et au moins une unité d'opération de commande qui met en oeuvre le résultat soustrait avec le paramètre ajustable β.

35. Système de contrôleur de processus automatique selon la revendication 34, caractérisé en ce que
la combinaison opérationnelle qui effectue l'opération de l'unité d'opération de commande suivant l'opération de l'unité d'opération de compensation constitue une opération qui n'a aucun effet sur les caractéristiques pour supprimer les perturbations externes agissant sur le système qui est constitué avec le système de contrôleur de processus automatique ayant un système d'ajustement et l'objet.

36. Système de contrôleur de processus automatique selon la revendication 35, caractérisé en ce que
l'unité d'opération de compensation effectue l'opération conformément à l'équation,$\frac{{\text{1 + T}}_{\text{I}} \text{. S}}{{\text{1 + ( 1 - β ) T}}_{\text{I}} \text{. S}}$ et
l'unité d'opération de commande effectue l'opération conformément à l'équation,$\text{(} \frac{\text{1}}{{\text{T}}_{\text{I}} \text{.S}} \text{-} \frac{\text{β}}{{\text{1+T}}_{\text{I}} \text{.S}} \text{) ,}$ où T_{I} est un temps d'intégration ajusté comme approprié pour supprimer les perturbations externes agissant sur le système qui est constitué avec le système de contrôleur de processus automatique ayant un système d'ajustement et l'objet.

37. Système de contrôleur de processus automatique selon la revendication 36, caractérisé en ce que
la sortie obtenue à partir de l'unité d'opération de commande est multipliée par une constante K_{P}.

38. Système de contrôleur de processus automatique selon la revendication 36, caractérisé de plus par
une unité d'opération de contre-réaction qui agit sur la valeur du point de consigne et soustrait son résultat du résultat de l'unité d'opération de compensation.

39. Système de contrôleur de processus automatique selon la revendication 38, caractérisé en ce que
ladite unité d'opération de contre-réaction effectue l'opération conformément à l'équation 1 + T_{D}, où T_{D} est un temps de différentiation ajusté pour supprimer les perturbations externes agissant sur le système qui est constitué avec le système de contrôleur de processus automatique ayant un système d'ajustement et l'objet.

40. Système de contrôleur de processus automatique selon la revendication 38, caractérisé en ce que
ladite unité d'opération de compensation comprend de plus une première unité de proportion qui multiplie la valeur traitée par une constante ajustable α⁻¹ et soustrait son résultat de la valeur du point de consigne et le résultat soustrait est multiplié par la constante α.

41. Système de contrôleur de processus automatique selon la revendication 40, caractérisé en ce que
ladite unité d'opération de compensation comprend de plus une seconde unité de proportion qui multiplie la valeur traitée par une constante ajustable γ⁻¹ et soustrait son résultat de la valeur du point de consigne et le résultat soustrait est différentié en termes de temps de différentiation γ. T_{D} dans lequel T_{D} est choisi pour suivre le changement de la valeur du point de consigne.

42. Système de contrôleur de processus automatique selon la revendication 41, caractérisé en ce que
les trois résultats de l'unité d'opération de compensation sont sommés et multipliés par une constante K*_{P} ajustée pour suivre le changement de la valeur du point de consigne afin de sortir le signal d'ajustement ayant les valeurs traitées.

43. Système de contrôleur de processus automatique selon la revendication 42, caractérisé en ce que
le résultat multiplié de la première unité de proportion est soustrait de la valeur du point de consigne multipliée par une constante ajustable au lieu de l'être simplement directement de la valeur du point de consigne.

44. Système de contrôleur de processus automatique selon la revendication 42, caractérisé en ce que
le résultat multiplié de la seconde unité de proportion est soustrait de la valeur du point de consigne multipliée par une constante ajustable au lieu de l'être simplement directement de la valeur du point de consigne.

45. Système de contrôleur de processus automatique selon la revendication 35, caractérisé en ce que
l'unité d'opération de compensation effectue l'opération conformément à l'équation,$\text{(} \frac{{\text{1 + T}}_{\text{I}} \text{. S}}{{\text{1 + α .T}}_{\text{I}} \text{. S}} \text{) . (} \frac{{\text{1 + T}}_{\text{D}} \text{. S}}{{\text{1 + β .T}}_{\text{D}} \text{. S}} \text{)}$ et
l'unité d'opération de commande effectue 1'opération conformément à l'équation,${\text{K}}_{\text{P}} \text{( α +} \frac{\text{1}}{{\text{T}}_{\text{I}} \text{. S}} \text{) (} \frac{{\text{1 + β . T}}_{\text{D}} \text{. S}}{{\text{1 + η . T}}_{\text{D}} \text{. S}} \text{)}$ où T_{I} est un temps d'intégration approprié pour supprimer les perturbations externes agissant sur le système qui est constitué avec le système de contrôleur de processus automatique ayant un système d'ajustement et l'objet et T_{D} est un temps de différentiation approprié pour supprimer les perturbations externes agissant sur le système qui est constitué avec le système de contrôleur de processus automatique ayant un système d'ajustement et l'objet et T_{I} peut être infini correspondant à un système sans opération d'intégration tandis que T_{D} peut être égal à zéro correspondant à un système sans opération de différentiation.

46. Système de contrôleur de processus automatique selon la revendication 35, caractérisé en ce que
l'unité d'opération de compensation effectue l'opération conformément à l'équation,$\frac{{\text{1 + T}}_{\text{I}} \text{. S}}{{\text{1 + α T}}_{\text{I}} \text{. S}}$ et l'unité d'opération de commande effectue l'opération conformément à l'opération,${\text{K}}_{\text{P}} \text{( α +} \frac{\text{1}}{{\text{T}}_{\text{I}} \text{. S}} \text{)}$ où T_{I} est un temps d'intégration approprié pour supprimer les perturbations externes agissant sur le système qui est constitué avec le système de contrôleur de processus automatique ayant un système d'ajustement et l'objet.

47. Système de contrôleur de processus automatique selon la revendication 46, caractérisé en ce que
l'unité d'opération de commande effectue l'opération conformément à l'équation,${\text{K}}_{\text{P}} \text{{ ( 1 - α ) + (} \frac{\text{1}}{{\text{T}}_{\text{I}} \text{.S}} \text{-} \frac{\text{β}}{{\text{T}}_{\text{I}} \text{.S}} {\text{) + ( 1 - γ ) T}}_{\text{D}} \text{. S }}$ et
l'unité d'opération de contre-réaction effectue l'opération conformément à l'équation,${\text{K}}_{\text{P}} \text{( α +} \frac{\text{β}}{{\text{1 + T}}_{\text{I}} \text{. S}} {\text{+ γ . T}}_{\text{D}} \text{. S )}$ où K_{P}, T_{T} et T_{D} sont un taux de proportion, un temps d'intégration et un temps de différentiation chacun choisi de manière optimale pour supprimer les perturbations externes agissant sur le système qui est constitué avec le système de contrôleur de processus automatique ayant un système d'ajustement et l'objet et T_{I} peut être infini correspondant à un système sans opération d'intégration tandis que T_{D} peut être égal à zéro correspondant à un système sans opération de différentiation.

48. Système de contrôleur de processus automatique selon la revendication 1, caractérisé en ce que
ledit second contrôleur comprend une unité d'opération de compensation à contre-réaction qui agit sur la valeur traitée et soustrait son résultat de la valeur traitée sortie à partir du premier contrôleur.

49. Système de contrôleur de processus automatique selon la revendication 48, caractérisé en ce que
ledit premier contrôleur comprend une unité d'opération de commande qui effectue l'opération conformément à l'équation C*(s) choisie de manière optimale pour suivre le changement de la valeur du point de consigne.

50. Système de contrôleur de processus automatique selon la revendication 49, caractérisé en ce que
l'équation F(s) conformément à laquelle ladite unité d'opération de compensation à contre-réaction effectue l'opération est choisie de sorte que C*(s) + F(s) devient l'équation appropriée pour supprimer les perturbations externes agissant sur le système qui est constitué avec le système de contrôleur de processus automatique ayant un système d'ajustement et l'objet.

51. Système de contrôleur de processus automatique selon la revendication 50, caractérisé en ce qu'il comprend de plus
une unité d'opération de compensation de valeur du point de consigne qui agit sur la valeur du point de consigne et soustrait son résultat de la valeur traitée sortie de l'unité d'opération de commande, dans laquelle
l'équation H(s) conformément à laquelle l'unité d'opération de compensation effectue l'opération satisfait$\text{H(s) = K x F(s) ( 0 ≦ K ≦ 1).}$

52. Système de contrôleur de processus automatique selon la revendication 51, caractérisé en ce que${\text{C*(s) = K}}_{\text{P}} \text{* { 1 +} \frac{\text{1}}{{\text{T}}_{\text{I}} \text{*.S}} \text{+} \frac{{\text{T}}_{\text{D}} \text{*}}{{\text{1 + η . T}}_{\text{D}} \text{*. S}}$${\text{F (s) = K}}_{\text{P}} \text{* { ( α + 1) +} \frac{\text{β}}{{\text{1 + T}}_{\text{I}} \text{*.S}} \text{+} \frac{{\text{( α - 1) . T}}_{\text{D}} \text{* . S}}{{\text{1 + η . T}}_{\text{D}} \text{* . S}} \text{}}$

53. Procédé pour ajuster les paramètres d'un système de contrôleur de processus automatique comprenant des premier et second contrôleurs à la fois pour commander une réponse d'une valeur de sortie du processus (PV) par rapport à une perturbation (D) appliquée à un processus (Gp(S)) et pour suivre une valeur de sortie du processus (PV) sur changement de la valeur du point de consigne (SV), comprenant
a) une première étape consistant à ajuster un premier ensemble de paramètres ajustables (K_{P}, T_{I} ; K_{P}, T_{I}, T_{D}) dudit premier contrôleur comportant au moins des paramètres pour les opérations proportionnelle et d'intégration (K_{P}, T_{I}), lequel délivre un signal de commande (MV) au processus (Gp(S)) sur la base de la valeur de sortie du processus (PV) pour commander de manière optimale la réponse de la valeur de sortie du processus (PV) en ajustant le premier ensemble de paramètres lorsque la perturbation (D) est appliquée, et
b) une seconde étape consistant à ajuster un second ensemble de paramètres ajustables (α, β ; α, β, γ ; α, H1, H2 ; α, H1, H2, γ) dudit second contrôleur comportant au moins un paramètre d'intégration pour l'opération d'intégration (β, H2) qui est ajustable indépendamment du premier ensemble de paramètres, pour commander la réponse de la valeur de sortie du processus (PV) en ajustant le second ensemble de paramètres lorsque le changement de la valeur du point de consigne (SV) est appliqué, caractérisé en ce que ledit premier contrôleur comporte une unité d'intégration (17) ayant une fonction de transfert 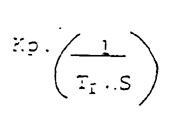
et ledit second contrôleur comporte une unité d'opération d'avance/retard (59, 17) ayant une fonction de transfert 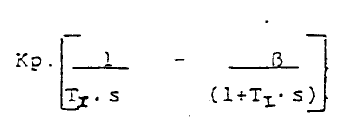 et ledit second contrôleur commande de manière optimale la réponse de la valeur de sortie du processus (PV) en ajustant le paramètre d'intégration β qui est positif ; où Kp et T_{I} sont le gain proportionnel et la constante de temps d'intégration des fonctions de transfert et s est la variable complexe.
